# EUROPEAN PATENT APPLICATION

(11) **EP 3 101 905 A1**
(43) Date of publication of application: **07.12.2016**
(21) Application number: 14827703.1
(22) Date of filing: 26.02.2014
(51) Int. Cl.: H04Q 9/00

(54) **INFORMATION TERMINAL CONTROL METHOD AND PROGRAM**

(30) Priority: 29.01.2014 US 201461932900 P
(71) Applicant: Panasonic Intellectual Property Corporation of America, Torrance, CA 90503 (US)
(72) Inventor: SASAKI, Takamitsu, Chuo-ku, Osaka 540-6207 (JP); TANIKAWA, Kentaro, Chuo-ku, Osaka 540-6207 (JP)
(74) Representative: Schwabe - Sandmair - Marx
(86) International application number: PCT/JP2014/001032
(87) International publication number: WO 2015/114690

(57) **Abstract**

A floor plan setting screen (900) is provided with an add room button (903) corresponding to each floor of a house. When the add room button (903) is selected, a room addition screen (1110) with a list of room candidates is displayed. When any of the rooms is selected from the room candidates, a room icon (401) for the selected room is added to the floor plan setting screen (900). As a result of repeating this process, the room icons (401) are disposed in the floor plan setting screen (900).

## Description

### Technical Field

The present invention relates to a method for controlling an information apparatus.

### Background Art

Technologies for remotely monitoring or controlling one or more target devices with a single remote controller have been proposed.

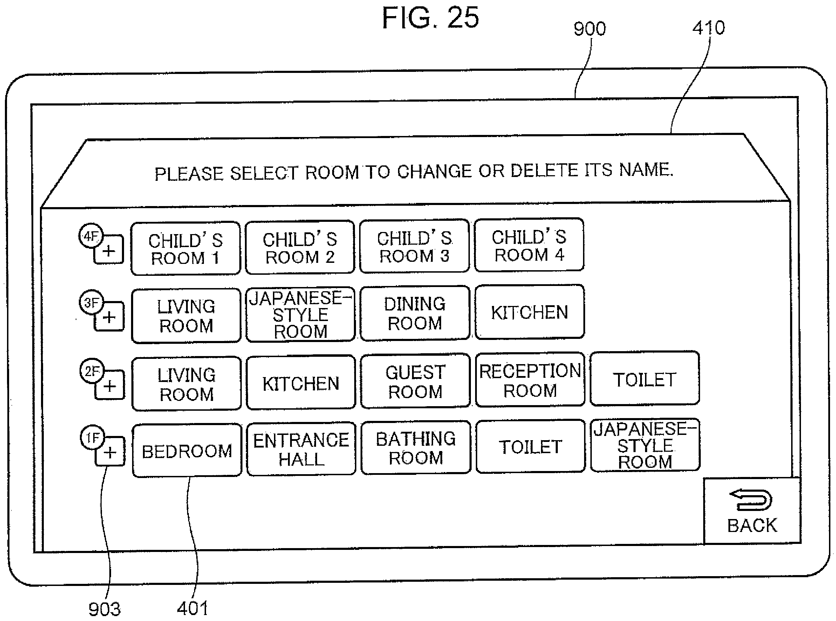

Patent Literature 1 discloses the technology for remotely operating one or more target devices from a television monitor. Specifically, the technology disclosed in Patent Literature 1 allows selection of any of the icons for one or more target devices displayed on the right-hand side of a monitor screen (i), displays a floor plan on the left-hand side of the monitor screen (ii), and by moving the pointer to an installation location of the target device on the floor plan to be operated (iii), displays, on the monitor screen, the target device selected as a result of moving the pointer (iv) (paragraphs [0138] to [0140] and Figs. 25(a) and 25(b)).

However, the technology disclosed in Patent Literature I requires further improvement.

### Citation List

### Patent Literature

Patent Literature 1: Japanese Unexamined Patent Publication No. 2007-104567

### Summary of Invention

In order to address the foregoing issue, one aspect of the present invention is a method for controlling an information apparatus having a display and connected to a network, over which one or more target devices are controlled, the method causing a computer of the information apparatus to: display a display screen including a floor plan of a building on the display, the floor plan including a floor label that represents each floor of the building and having an array of room icons representing rooms on the each floor, with each of the icons corresponding to each floor; display an operation screen of the target devices that are located in a room corresponding to a room icon selected through selection of the room icon; edit the room icons corresponding to each floor in the floor plan by increasing or reducing the number of the room icons in coordination with each floor represented by the floor label; and display the edited room icons on the floor plan.

### Brief Description of Drawings

[Fig. 1] Fig. 1 is the entire configuration diagram of a home control system to which the home controller according to the present embodiment is applied.
[Fig. 2] Fig. 2 is a diagram showing the primary devices controlled by the home controller.
[Fig. 3] Fig. 3 is a block diagram showing an example of the configurations of the home controller and of the devices.
[Fig. 4] Fig. 4 is a diagram showing an example of a floor plan screen displayed by the home controller.
[Fig. 5] Fig. 5 is a diagram showing an example of the device screen displayed by the home controller.
[Fig. 6] Fig. 6 is a diagram showing an example of a room screen displayed by the home controller.
[Fig. 7] Fig. 7 is a diagram showing an example of a screen transition between the floor plan screen and a device control screen.
[Fig. 8] Fig. 8 is a diagram showing an example of a screen transition between the floor plan screen and the room screen.
[Fig. 9] Fig. 9 is a diagram showing an example of a floor plan setting screen.
[Fig. 10] Fig. 10 is a diagram showing an example of a screen transition between the floor plan screen and the floor plan setting screen.
[Fig. 11] Fig. 11 is a diagram showing a first example of a transition of screens associated with floor plan settings.
[Fig. 12] Fig. 12 is a diagram showing a second example of the transition of screens associated with the floor plan settings.
[Fig. 13] Fig. 13 is a diagram showing a third example of the transition of screens associated with the floor plan settings.
[Fig. 14] Fig. 14 is a diagram showing an example of an initial settings starting screen.
[Fig. 15] Fig. 15 is a diagram showing an example of a story number setting screen.
[Fig. 16] Fig. 16 is a diagram showing an example of the floor plan setting screen in the initial state thereof
[Fig. 17] Fig. 17 is a diagram showing an example of a room addition screen.
[Fig. 18] Fig. 18 is a diagram showing an example of the room addition screen.
[Fig. 19] Fig. 19 is a diagram showing an example of the floor plan setting screen.
[Fig. 20] Fig. 20 is a diagram showing an example of the floor plan setting screen that is displayed after a repeat of the operation for adding rooms.
[Fig. 21] Fig. 21 is a diagram showing an example of a screen transition taking place in the initial settings.
[Fig. 22] Fig. 22 is a diagram showing an example of a screen transition subsequent to the one shown in Fig. 21.
[Fig. 23] Fig. 23 is a diagram showing an example of a first variation of the floor plan.
[Fig. 24] Fig. 24 is a diagram showing another example of the first variation of the floor plan.
[Fig. 25] Fig. 25 is a diagram showing an example of a second variation of the floor plan.
[Fig. 26] Fig. 26 is a diagram showing the floor plan setting screen on a first page.
[Fig. 27] Fig. 27 is a diagram showing the floor plan setting screen on a second page.
[Fig. 28] Fig. 28 is a diagram showing an example of a screen transition among the floor plan setting screens shown in Figs. 25 to 27.
[Fig. 29] Fig. 29 is a diagram showing an example of the floor plan setting screen that is displayed immediately before a new room icon is added.
[Fig. 30] Fig. 30 is a diagram showing an example of the room addition screen.
[Fig. 31] Fig. 31 is a diagram showing an example of a room name input screen.
[Fig. 32] Fig. 32 is a diagram showing an example of the floor plan setting screen that is displayed immediately after a room icon is added.
[Fig. 33] Fig. 33 is a diagram showing an example of a screen transition that takes place when a room is added to the floor plan by entering a room name.
[Fig. 34] Fig. 34 is a diagram showing an example of the floor plan setting screen that is displayed immediately before a room name is changed.
[Fig. 35] Fig. 35 is a diagram showing an example of a room edit screen.
[Fig. 36] Fig. 36 is a diagram showing an example of a room name change screen on which none of the room names is selected by a user.
[Fig. 37] Fig. 37 is a diagram showing an example of the room name change screen on which a room name is selected.
[Fig. 38] Fig. 38 is a diagram showing an example of the floor plan setting screen that is displayed after the room name is changed.
[Fig. 39] Fig. 39 is a diagram showing an example of a screen transition that takes place when changing a room name.
[Fig. 40] Fig. 40 is a diagram showing an example of the floor plan setting screen that is displayed immediately before a room name is changed,
[Fig. 41 Fig. 41 is a diagram showing an example of the room edit screen.
[Fig. 42] Fig. 42 is a diagram showing an example of the room name change screen on which none of the room names is selected by the user.
[Fig. 43] Fig. 43 is a diagram showing an example of the room name input screen.
[Fig. 44] Fig. 44 is a diagram showing an example of the floor plan setting screen that reflects the change of the room name.
[Fig. 45] Fig. 45 is a diagram showing an example of a screen transition that takes place when changing a room name using the room name input screen.
[Fig. 46] Fig. 46 is a diagram showing an example of a screen transition subsequent to the one shown in Fig. 45.
[Fig. 47] Fig. 47 is a diagram showing an example of the floor plan setting screen that is displayed prior to deletion of a room icon.
[Fig. 48] Fig. 48 is a diagram showing an example of the room edit screen.
[Fig. 49] Fig. 49 is a diagram showing an example of a room deletion confirmation screen.
[Fig. 50] Fig. 50 is a diagram showing an example of the floor plan setting screen.
[Fig. 51] Fig. 51 is a diagram showing an example of a screen transition that takes place when a room icon is deleted.
[Fig. 52] Fig. 52 is a diagram showing an example of a data confguration of floor plan setting information.
[Fig. 53] Fig. 53 is a diagram showing an example of a data configuration of system defined value information.
[Fig. 54] Fig. 54 is a diagram showing an example of a data configuration of room information.
[Fig. 55] Fig. 55 is a diagram showing an example of a data configuration of a device list.
[Fig. 56] Fig. 56 is a flowchart showing an example of the entire process executed by the home controller when setting a floor plan.
[Fig. 57] Fig. 57 is a flowchart showing an example of the floor plan setting process of S5607 shown in Fig 56.
[Fig. 58] Fig. 58 is a flowchart showing an example of the room addition process of S5706 shown in Fig. 57.
[Fig. 59] Fig. 59 is a flowchart showing an example of the process of S5811 shown in Fig. 58 for .displaying an added room to the floor plan setting screen.
[Fig. 60] Fig. 60 is a flowchart showing an example of the room edit process or S5707 shown in Fig. 57.
[Fig. 61] Fig. 61 is a flowchart showing an example of the room name change process of S6006 shown in Fig. 60.
[Fig. 62] Fig. 62 is a flowchart showing an example of the room deletion process of S6008 shown in Fig. 60.
[Fig. 63] Fig. 63 is a flowchart showing an example of the process of S6009 shown in Fig. 60 for hiding the deleted room from the floor plan setting screen.

### Description of Embodiments

### (Background of arriving at one aspect of the present disclosure)

First of all, the points of focus of one aspect of the present disclosure are described.

In order to control one or more devices located in a building by using a remote controller through a network, the technology for displaying a display screen with a floor plan of the building on the display of the remote controller has been studied as described in, for example, Patent Literature 1.

In the display screen showing the floor plan of the building, the one or more target devices in the building are divided in units of rooms that are on the floor plan of the building. Therefore, the arrangement of the target devices divided in units of rooms on the display screen fits into a daily life of a user who uses the target devices. Thus, the display screen displaying the floor plan of the building is expected to be easy for the user to use.

In Patent Literature 1, for example, when a desired icon is selected from among the icons for one or more target devices displayed in the right corner of a monitor screen, a floor plan is displayed on the left-hand side of the monitor screen, with the installation locations of the target devices being displayed on the floor plan.

However, buildings have different floor plans. For this reason, display screens showing the floor plans of the respective buildings cannot use the floor plan shared by a plurality of users, creating a need to make display screens for the individual buildings. Consequently, the display screens showing the floor plans of the buildings are customized into exclusive products for the individual users. The fact that the floor plan of each building cannot be shared by the plurality of users leads to a cost increase, which is why this technology is not popularized in spite of its anticipated usability.

Moreover, when, for example, a user moves into a new building that has a new floor plan, the user would need to acquire the new floor plan. That is, in some cases the same user cannot acquire the same floor plan. In such a case, if the user continues to use the remote controller after moving into the new dwelling, the user would need a display screen showing the floor plan customized to the new dwelling, requiring to charge this user an additional cost. This could be considered another reason why the display screen showing a floor plan is not popularized.

Although such a display screen showing a floor plan of a building cannot be shared by a plurality of users, in light of the foregoing observations, the present inventors have examined a method for controlling an information apparatus capable of generating a display screen showing a floor plan of a building that can be customized to each individual user extremely easily, and have conceived of the invention having the following aspects according to the present disclosure.

One aspect according to the present disclosure is a method for controlling an information apparatus having a display and being connected to a network, over which one or more target devices are controlled, the method causing a computer of the information apparatus to:
display, on the display, a first display screen including a first floor plan of a building, the first floor plan including each first floor label that represents each floor of the building and each first room icon that represents each room arrayed on the each floor, an operation screen of a target device that is located in a room corresponding to a selected first room icon being displayed on the first display screen through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing the each floor of the building, each second room icon representing the each room on the each floor, and each first instruction button for adding another second room icon to the each floor represented by the each second floor label;
when selection of one of the each first instruction button is sensed correspondingly to one of the each floor represented by the each second floor label on the second display screen, display, on the display, a third display screen in which room candidates are arrayed to be added to the one floor corresponding to the selected first instruction button; and
display, on the first floor plan, a selected room candidate as an additional first room icon in the case that any one of the room candidates is selected on the third display screen.

According to the foregoing aspect, the first floor plan includes a first floor label representing each floor of the building, and has an array of first room icons representing the rooms on each floor in coordination with the each floor. In other words, in this aspect, each of the rooms is represented by the corresponding first room icon regardless of the size and shape of the room. The first room icons are arranged on each floor. In the building of each individual user, because each room is displayed in the form of the first room icon on the first display screen regardless of the number of rooms on each floor in the building or of the sizes or shapes of the rooms, the sizes or shapes of the rooms on each floor in the building can be standardized, Moreover, in this aspect, the first room icons are arranged in coordination with each floor. This eliminates the need to consider the actual positions of the rooms on each floor. For instance, the presence of a bedroom adjacent to the south side of the living room, and the like, no longer need to be taken into consideration. Since only the number of rooms on each floor needs to be taken into consideration, the number of rooms on each floor can be changed by increasing or reducing the number of first room icons on each floor.

As a result, even if the floor plans of the buildings vary among the users, the floor plan of each building can be created extremely easily for each individual user by standardizing the sizes or shapes of the rooms on each floor of the building and simply increasing/reducing the number of first room icons on each floor.

In this aspect the second display screen for setting the first room icons of the first floor plan is prepared. In other words, when addition of the second room icons to any one of the floors on the second display screen is selected, the third display screen in which the room candidates to be added to the floor are arranged is displayed, and then when any one of the room candidates is selected, the selected room candidate is displayed on the first floor plan as an additional first room icon. Therefore, the floor plan that matches the building of each user can be created extremely easily by simply adding a first room icon to the first floor plan.

As a result, the present aspect can solve the problems associated with the floor plans that vary among buildings and enhance, at extremely low cost, the availability is increased of the display screen showing a floor plan of each building, by which advantages of locating one or more target devices, which are divided in units of rooms in the floor plan of each building, in each building so that the devices conform to a daily life of a user who uses them.

In the foregoing aspect, for example,
the selected room candidate may be displayed on the second floor plan as an additional second room icon.

The selected first room candidate is eventually displayed on the first floor plan as an additional first room icon. During this process, however, the selected first room candidate may be displayed on the second floor plan as an additional second room icon. In this case, before displaying the first floor plan, an operation for adding a second room icon different from the additional second room icon to the floor same as or different from the one on which the additional second room icon is located, can ongoingly be performed on the second floor plan.

In the foregoing aspect, for example,
the each first room icons on the first display screen may include each first name label representing each name of the each first room icon, and the each second room icon on the second display screen may include each second name label representing each name of the each second room icon, the each second name label corresponding to the each first name label, and
when selection of any one of the each second room icon is sensed on the second display screen, a fourth display screen having a second instruction button for changing the name of the selected second room icon may be displayed,

The rooms included in the first display screen are displayed as the first room icons, respectively. The rooms included in the second display screen are displayed as the second room icons, respectively. Therefore, the first and second room icons are not enough to easily identify which rooms are associated with these icons,

According to this aspect, the first room icons include the first name labels representing the names of the first room icons, and the second room icons include the second name labels representing the names of the second room icons. According to this configuration, even in the case where each of the rooms included in the first display screen is displayed as the first room icon and each of the rooms included in the second display screen is displayed as a second room icon, it is easy to determine which rooms are associated with the first or second room icons.

Furthermore, in this aspect, the second name labels correspond to the first name labels. Each user, therefore, can handle the second display screen for setting the first room icons included in the first floor plan, in the same manner as the first display screen used for operating the one or more target devices.

In the present aspect, when selection of any one of the second room icons is sensed on the second display screen, the fourth display screen that includes the second instruction button for changing the name of the selected second room icon is displayed. In other words, when any of the first room icons is selected on the first display screen, the operation screen of the target device located in the room corresponding to the selected first room icon is displayed. On the other hand, when any of the second room icons is selected on the second display screen, the fourth display screen that includes the second instruction button for changing the name of the selected second room icon is displayed, In this manner, although the operation for selecting any of the first room icons on the first display screen is similar to the operation for selecting any of the second room icons on the second display screen, the screen to be displayed subsequently (the operation screen of the target device or the fourth display screen) varies depending on the result of the operation.

Thus, in the present aspect, a single display screen -first display screen - does not take on a plurality of functions such as controlling the target devices and editing the first display screen. Instead, the present aspect prepares the second display screen for setting the first room icons of the first floor plan, aside from the first display screen, and executes the similar operation for selecting any of the first room icons or any of the second room icons on the first display screen or the second display screen, thereby controlling the target devices or editing the first display screen. In other words, even when the user selects the similar operation for selecting any ofthe first room icons or any of the second room icons, the user can execute the operations for controlling the target devices and editing the first display screen, by simply switching the first and second display screens. As a result, while standardizing the operation instructions and simplifying the first and second display screens, erroneous operations can be prevented by switching the first and second display screens, due to the fact that the meanings of the details of the operation instructions are different.

In the foregoing aspect, for example,
the fourth display screen may include a third instruction button for deleting the selected second room icon.

In the foregoing aspect, for example,
when selection of the second instruction button is sensed, a fifth display screen in which name candidates for the selected second room icon is arrayed may be displayed.

There is a method for changing the name of the second room icon by allowing a user to manually input characters one by one through the use of a keyboard. However, the names of the rooms are generally stylized, such as "living room," "bed room," "child's room," "bathroom," "kitchen" and the like.

The present aspect, therefore, is configured to display the fifth display screen that has an array of name candidates for the selected second room icon. This allows the name of the second room icon to be changed easily.

In the foregoing aspect, for example,
in the case where selection of any one of the name candidates among second room candidates included in the fifth display screen is sensed, the selected second room icon may be changed to an edited second room icon that includes a changed second name label represented by the selected name candidate, and an edited first room icon that includes an edited first name label corresponding to the changed second name label may be displayed on the first display screen.

According to the present aspect, when the second name label included in the second room icon is changed using the fifth display screen, not only the second name label included in the second room icon is changed simply, but also the first name label included in the first room icon is changed consecutively. Because the results of the changes are reflected on the first display screen as well based on the change made on the second name label included in the second room icon on the second display screen, the operation for changing the second name labels included in the other second room icons can continuously be performed after the second display screen, i.e., without confrming on the first display screen.

In the foregoing aspect, for example,
the size and shape of each label representing each of the name candidates included in the fifth display screen may be equal to the size and shape of each label representing each of the room candidates included in the third display screen, and
the array of the name candidates included in the fifth display screen may be the same as the array of the room candidates included in the third display screen.

According to the present aspect, the third display screen for adding the second room icons to the second display screen can be the same display screen as the fifth display screen for changing the names of the second room icons in the second display screen. Instead of configuring the third display screen and the fifth display screen into mutually different display screens, the common screen can be configured based on the third display screen and the fifth display screen, achieving a simple structure.

In the foregoing aspect, for example,
the third display screen may include a fourth instruction button for adding the selected room candidate as the additional first room icon of the first display screen,
the fifth display screen may include a fifth instruction button for changing, using a selected name candidate on the fifth display screen, the first name label corresponding to one of the each first room icon on the first display screen,
the size and shape of the fifth instruction button on the fifth display screen may be the same as the size and shape of the fourth instruction button on the third display screen, and
the location of the fifth instruction button on the fifth display screen may be the same as the location of the fourth instruction button on the third display screen.

According to the present aspect, the fourth instruction button included in the third display screen is to add the first room icons to the first display screen, while the fifth instruction button included in the fifth display screen is to change the names of the first room icons. The fourth instruction button and the fifth instruction button are different from each other in terms of the functions thereof. However, the size and shape of the fifth instruction button are equivalent to the size and shape of the fourth instruction button, and the position of the fifth instruction button on the fifth display screen is the same as the position of the fourth instruction button on the third display screen. Such configurations can increase the portions shared between the third display screen and the fifth display screen. Thus, although the fourth instruction button and the fifth instruction button that are different from each other in terms of the functions thereof are provided on the third display screen and the fifth display screen respectively, the bases of the third and fifth display screens can be shared, resulting in a simple structure.

In the foregoing aspect, for example,
the each first room icon on the first display screen may include each first name label representing each name of the each first room icon, and the each second room icon on the second display screen may include each second name label representing each name ofthe each second room icon, the each second name label corresponding to the each first name label, and
in the case where selection of any one of the each second room icon is sensed on the second display screen, a sixth display screen in which name candidates for the selected second room icon are arrayed may be displayed.

The rooms included in the first display screen are displayed as the first room icons, respectively. The rooms included in the second display screen are displayed as the second room icons, respectively. Therefore, the mere display of the first and second room icons may not be sufficient to easily identify which rooms are associated with these icons.

According to this aspect, the first room icons include the first name labels representing the names of the first room icons, and the second room icons include the second name labels representing the names of the second room icons. According to this configuration, even in the case where each of the rooms included in the first display screen is displayed as the first room icon and each of the rooms included in the second display screen is displayed as a second room icon, it is easy to determine which rooms are associated with the first or second room icons.

Furthermore, in this aspect, the second name labels correspond to the first name labels. Each user, therefore, can handle the second display screen for setting the first room icons included in the first floor plan, in the same manner as the first display screen used for operating the one or more target devices,

In the present aspect, when selection of any one of the second room icons is sensed on the second display screen, the sixth display screen that shows an array of name candidates for the selected second room icon is displayed. In other words, when any of the first room icons is selected on the first display screen, the operation screen of the target device located in the room corresponding to the selected first room icon is displayed. On the other hand, when any of the second room icons is selected on the second display screen, the sixth display screen that shows an array of name candidates for the selected second room icon is displayed. In this manner, although the operation for selecting any of the first room icons on the first display screen is similar to the operation for selecting any of the second room icons on the second display screen, the screen to be displayed subsequently (the operation screen of the target device or the sixth display screen) varies depending on the result of the operation.

Thus, in the present aspect, a single display screen - first display screen - does not take on a plurality of functions such as controlling the target devices and editing the first display screen. Instead, the present aspect prepares the second display screen for setting the first room icons of the first floor plan, aside from the first display screen, and executes the similar operation for selecting any of the first room icons or any of the second room icons on the first display screen or the second display screen, thereby controlling the target devices or editing the first display screen. In other words, even when the user selects the similar operation for selecting any of the first room icons or any of the second room icons, the user can execute the operations for controlling the target devices and editing the first display screen, by simply switching the first and second display screens. As a result, while standardizing the operation instructions and simplifying the first and second display screens, erroneous operations can be prevented by switching the first and second display screens, due to the fact that the meanings of the details of the operation instructions are different.

There is a method for changing the name of the second room icon by allowing the user to manually input characters one by one through the use of a keyboard, However, the names of the rooms are generally stylized, such as "living room," "bed room," "child's room," "bathroom," "kitchen" and the like. The present aspect, therefore, is configured to display the sixth display screen that has an array of name candidates for the selected second room icon. This allows the name of the second room icon to be changed easily.

In-the foregoing aspect, for example,
in the case where selection of any one of the name candidates included in the sixth display screen is sensed, the selected second room icon may be changed to an edited second room icon that includes a changed second name label represented by the selected name candidate, and an edited first room icon that includes an edited first name label corresponding to the changed second name label may be displayed on the first display screen,

According to the present aspect, when the second name label included in the second room icon is changed using the sixth display screen, not only the second name label included in the second room icon is changed simply, but also the first name label included in the first room icon is changed consecutively. Because the results of the changes are reflected on the first display screen as well based on the change made on the second name label included in the second room icon on the second display screen, the operation for changing the second name labels included in the other second room icons can continuously be performed after the second display screen, i.e., without confirming on the first display screen.

In the foregoing aspect, for example,
the size and shape of each label representing each of the name candidates included in the sixth display screen may be equal to the size and shape of each label representing each of the room candidates included in the third display screen, and
the array of the name candidates included in the sixth display screen may be the same as the array of the room candidates included in the third display screen.

According to the present aspect, the third display screen for adding the second room icons to the second display screen can be the same display screen as the sixth display screen for changing the names of the second room icons in the second display screen, Instead of configuring the third display screen and the sixth display screen into mutually different display screens, the common screen can be configured based on the third display screen and the sixth display screen, achieving a simple structure.

In the foregoing aspect, for example,
the third display screen may include a fourth instruction button for adding the selected room candidate as the additional first room icon of the first display screen,
the sixth display screen may include a sixth instruction button for changing, using an selected name candidate on the sixth display screen, the first name label corresponding to one of the each first room icon on the first display screen,
the size and shape of the sixth instruction button on the sixth display screen may be the same as the size and shape of the fourth instruction button on the third display screen, and
the location of the sixth instruction button on the sixth display screen may be the same as the location of the fourth instruction button on the third display screen.

According to the present aspect, the fourth instruction button included in the third display screen is to add the first room icons to the first display screen, while the sixth instruction button included in the sixth display screen is to change the names of the first room icons. The fourth instruction button and the sixth instruction button are different from each other in terms of the functions thereof However, the size and shape of the sixth instruction button are equivalent to the size and shape of the fourth instruction button, and the position of the sixth instruction button on the sixth display screen is the same as the position of the fourth instruction button on the third display screen. Such configurations can increase the portions shared between the third display screen and the sixth display screen. Thus, although the fourth instruction button and the sixth instruction button that are different from each other in terms of the functions thereof are provided on the third display screen and the sixth display screen respectively, the bases of the third and sixth display screens can be shared, resulting in a simple structure.

In the foregoing aspect, for example,
in the case where instruction is made to select and delete any one or more of the each second room icons in the second floor plan included in the second display screen, the selected one or more second room icons may be deleted from the second floor plan.

In the foregoing aspect, for example,
each locations of the each second floor label and each second room icon included in the second floor plan may be the same as each locations of the each first floor label and each first room icon included in the first floor plan.

In the present aspect, the first room icons included in the first floor plan are selected using the first floor plan included in the first display screen. As a result of this selection, the operation screen for the target devices located in the rooms corresponding to the selected first room icons is displayed. On the other hand, the second display screen for setting the first room icons included in the first floor plan is prepared separately from the first display screen.

In addition, in the present aspect, the locations of the second floor labels and second room icons included in the second floor plan are the same as the locations of the first floor labels and first room icons included in the first floor plan. Consequently, even when editing the first floor plan by using the second floor plan that is different from the first floor plan, the edited content of the second floor plan is reflected as they are on the first floor plan. As a result, the fact that the edited content of the second floor plan is reflected on the first floor plan can be confirmed extremely easily without comparing and collating the first floor plan and the second floor plan with each other.

In the foregoing aspect, for example,
the sizes and shapes of the each first room icon may all be the same in the first floor plan.

According to the foregoing aspect, the rooms are represented by the corresponding first room icons of the same size and shape, regardless of the size and shape of each room. In the building of each individual user, because each room is displayed in the form of the first room icon on the first display screen regardless of the sizes or shapes of the rooms on each floor of the building, the sizes or shapes of the rooms on each floor in the building can be standardized.

As a result, even if the floor plans of the buildings vary among the users, the floor plan of each building can be created extremely easily for each individual user by standardizing the sizes or shapes of the rooms on each floor of the building.

In the foregoing aspect, for example,
the sizes and shapes of the each second room icon may all be the same in the second floor plan.

According to the foregoing aspect, in the second floor plan as well, the rooms are represented by the corresponding second room icons of the same size and shape, regardless of the size and shape of each room. In the building of each individual user, because each room is displayed in the form of the second room icon on the second display screen regardless of the sizes or shapes of the rooms on each floor of the building, the sizes or shapes of the rooms on each floor in the building can be standardized.

In the foregoing aspect, for example,
in the case where the number of first room icons that are added corresponding to any one of the floors in the first floor plan exceeds a maximum number of first room icons that can be arranged in a row corresponding to the floor, the number of rows corresponding to the floor may be increased.

According to this aspect, in the case where there are a large number of the first room icons arranged in the same floor, the number of the rows used in this floor is increased, so that the first room icons are displayed on the same page of the currently displayed first display screen, In other words, in the case where the number of first room icons to be added in coordination with this floor exceeds the maximum value of the first room icons that can be arranged in a row corresponding to this floor, the first room icons to be added are contained in the same page of the currently displayed first display screen, instead of simply increasing the number of pages showing the display screen. By increasing the degree of freedom of the configuration of the first floor plan and executing the operations using the first floor plan in the same screen as much as possible, the operations can be applied to various floor plans, and a deterioration of operatbility can be prevented even when the number of first room icons is increased.

In the foregoing aspect, for example,
in the case where the number of first room icons that are added corresponding to any one of the floors in the first floor plan exceeds a maximum number of the first room icons that can be arranged in a row corresponding to the floor, the number of rows corresponding to the floor may be increased as long as the number of rows included in the first floor plan does not exceed the maximum value of the number ofdisplayable rows after increasing the number of rows corresponding to the floor.

According to this aspect, in the case where there are a large number of the first room icons arranged in the same floor, the number of rows used in the floor is increased as long as the maximum value of the number of rows included in the first floor plan does not exceed the number of displayable rows. Therefore, the first room icons are displayed within the same page of the first display screen that is currently displayed, as long as the number of rows included in the first floor plan does not exceed the maximum value of the number of displayable rows.

In other words, in the case where the number of first room icons to be added in coordination with the same floor exceeds the maximum value of the number of first room icons that can be arranged in the row corresponding to the same floor, the first room icons to be added are first contained in the same page of the currently displayed first display screen, instead of increasing the number of pages of the first display screen, By increasing the degree of freedom of the configuration of the first floor plan and executing the operations using the first floor plan in the same screen as much as possible, the operations can be applied to various floor plans, and a deterioratian of operatbility can be prevented even when the number of first room icons is increased.

Note that, in the case where the number of first room icons to be added in coordination with the same floor exceeds the maximum value of the number of first room icons that can be arranged in the row corresponding to the same floor, when the number of rows included in the first floor plan exceeds the maximum value of the number of displayable rows, the next page may be added to the first display screen.

Moreover, in the case where the next page is already added to the first floor plan to show another floor, the first room icons to be added to the floor may be added to the next page that is already added.

In the foregoing aspect, for example,
in the case where an operation through the operation screen is sensed through the operation screen, a control command for controlling the target device corresponding to the operation in response to the operation may be output to the network.

Another aspect according to the present disclosure is a method for controlling an information apparatus having a display and being connected to a network, over which one or more target devices are controlled, the method causing a computer of the information apparatus to:
display, on the display, a display screen including a floor plan of a building, the floor plan including each floor label that represents each floor of the building and each room icon that represents each room arrayed on the each floor, an operation screen of a target device that is located in a room corresponding to a selected room icon being displayed on the display screen through selection of one of the each the room icon;
increase/reduce the number of room icons on the each floor represented by the each floor label, to edit room icons corresponding to the each floor included in the floor plan; and
display the edited room icons in the floor plan.

According to this aspect, the floor plan includes a floor label representing each of the floors of the building, and has an array of room icons corresponding to each floor, the room icons representing rooms included in each of the floors. In other words, in this aspect, each of the rooms is represented as a room icon regardless of the size or shape thereof. The room icons are arranged in each of the floors. Because each room is displayed in the form of a room icon on the display screen regardless of the number of rooms on each floor of the building and of the sizes or shapes of the rooms, the sizes or shapes of the rooms on each of the floors of the buildings can be standardized. In addition, in this aspect, the room icons are arranged in accordance with each floor. This eliminates the need to consider the actual locations of the rooms on each floor. For instance, the presence of a bedroom adjacent to the south side of the living room, and the like, no longer need to be taken into consideration. Since only the number of rooms on each floor needs to be taken into consideration, the number of rooms on each floor can be changed by increasing or reducing the number of room icons on each floor.

As a result, even if the floor plans of the buildings vary among the users, the floor plan of each building can be created extremely easily for each individual user by standardizing the sizes or shapes of the rooms on each floor of the building and simply increasing/reducing the number of room icons on each floor.

Another aspect according to the present disclosure is a method for controlling an information apparatus having a display and being connected to a network, over which one or more target devices are controlled, the method causing a computer of the information apparatus to:
display, on the display, a first display screen including a first floor plan of a building, the first floor plan including each first floor label that represents each floor of the building and each first room icon that represents each room arrayed on the each floor, with each of the icons corresponding to each floor, an operation screen of a target devices that is located in a room corresponding to a selected first room icon being displayed on the first display screen through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing the each floor of the building, each second room icon representing the each rooms on the each floor, and each first instruction button for adding another second room icon to the each floor represented by the each second floor label;
when selection of one of the each first instruction button is sensed correspondingly to one of the each floor represented by the each second floor label on the second display screen, add the other second room icon in accordance with the floor corresponding to the selected first instruction button, and display the first floor plan that includes an added first room icons corresponding to the added second room icons.

According to the foregoing aspect, the first floor plan includes a first floor label representing each floor of the building, and has an array of first room icons representing the rooms on each floor in coordination with the each floor. In other words, in this aspect, each of the rooms is represented by the corresponding first room icon regardless of the size and shape of the room. The first room icons are arranged on each floor. In the building of each individual user, because each room is displayed in the form of the first room icon on the first display screen regardless of the number of rooms on each floor in the building or of the sizes or shapes of the rooms, the sizes or shapes of the rooms on each floor in the building can be standardized. Moreover, in this aspect, the first room icons are arranged in coordination with each .floor. This eliminates the need to consider the actual positions of the rooms on each floor. For instance, the presence of a bedroom adjacent to the south side of the living room, and the like, no longer heed to be taken into consideration. Since only the number of rooms on each floor needs to be taken into consideration, the number of rooms on each floor can be changed by increasing or reducing the number of first room icons on each floor.

As a result, even if the floor plans of the buildings vary among the users, the floor plan of each building can be created extremely easily for each individual user by standardizing the sizes or shapes of the rooms on each floor of the building and simply increasing/reducing the number of first room icons on each floor.

In this aspect, the second display screen for setting the first room icons of the first floor plan is prepared. In other words, when addition of the second room icons to any one of the floors on the second display screen is selected, the second room icons are added in coordination with the relevant floor represented by the second floor label, thereby displaying the first floor plan that reflects the first room icons corresponding to the added second room icons. Therefore, the floor plan that matches the building of each user can be created extremely easily by simply adding a first room icon to the first floor plan.

As a result, the present aspect can solve the problems associated with the floor plans that vary among buildings and enhance, at extremely low cost, the availability is increased of the display screen showing a floor plan of each building, by which advantages of locating one or more target devices, which are divided in units of rooms in the floor plan of each building, in each building so that the devices conform to a daily life of a user who uses them.

Another aspect according to the present disclosure is a method for controlling an information apparatus having a display and being connected to a network, over which one or more target devices are controlled, the method causing a computer of the information apparatus to:
display, on the display, a first display screen including a floor plan of a building, the floor plan including each floor label that represents each floor of the building and each room icon that represents each room on the each floor, an operation screen of a target devices that is located in a room corresponding to a selected room icon being displayed on the first display screen through selection of one of the each room icon, the first display screen having each instruction button for adding the another room icon to each floor represented by the each floor label;
when selection of one of the each instruction button is sensed correspondingly to one of the each floor represented by the each floor label in the first display screen, display, on the display, a second display screen in which that room candidates are arrayed to be added to the one floor corresponding to the selected instruction button; and
display, on the floor plain, a selected room candidate as an additional room icon in the case that any one of the room candidates is selected on the second display screen.

According to this aspect, the floor plan includes a floor label representing each of the floors of the building, and has an array of room icons corresponding to each floor, the room icons representing rooms included in each of the floors. In other words, in this aspect, each of the rooms is represented as a room icon regardless of the size or shape thereof. The room icons are arranged in each of the floors. Because each room is displayed in the form of a room icon on the first display screen regardless of the number of rooms on each floor of the building and of the sizes or shapes of the rooms, the sizes or shapes of the rooms on each of the floors of the buildings can be standardized. In addition, in this aspect, the first room icons are arranged in coordination with each floor, This eliminates the need to consider the actual locations of the rooms on each floor. For instance, the presence of a bedroom adjacent to the south side of the living room, and the like, no longer need to be taken into consideration. Since only the number of rooms on each floor needs to be taken into consideration, the number of rooms on each floor can be changed by increasing or reducing the number of room icons on each floor.

As a result, even if the floor plans of the buildings vary among the users, the floor plan of each building can be created extremely easily for each individual user by standardizing the sizes or shapes of the rooms on each floor of the building and simply increasing/reducing the number of room icons on each floor,

In addition, according to this aspect, the first display screen includes an instruction button used when adding the room icons to each floor represented by the floor label. In other words, when the instruction button included in the first display screen is selected, a second display screen that has an array of room candidates to be added to the one floor is displayed. When any one of the room candidates is selected, the selected room candidate is displayed on the floor plan as an additional room icon. Therefore, the floor plan that matches the building of each user can be created extremely easily by simply adding a first room icon to the floor plan.

As a result, the present aspect can solve the problems associated with the floor plans that vary among buildings and enhance, at extremely low cost, the availability is increased of the display screen showing a floor plan of each building, by which advantages of locating one or more target devices, which are divided in units of rooms in the floor plan of each building, in each building so that the devices conform to a daily life of a user who uses them.

Another aspect according to the present disclosure is a program executed by an information apparatus having a display and being connected to a network, over which one or more target devices are controlled, the program causing a computer of the information apparatus to:
display, on the display, a first display screen including a first floor plan of a building, the first floor plan including a first floor label that represents each floor of the building and each first room icon that represents each room on the each floor, an operation screen of a target device that is located in a room corresponding to a selected first room icon being displayed on the first display screen through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing each floor of the building, each second room icon representing the each room on the each floor, and each first instruction button for adding another second room icons to the each floor represented by the each second floor label;;
when selection of one of the each first instruction button is sensed correspondingly to one of the each floor represented by the each second floor label on the second display screen, display, on the display, a third display screen in which room candidates are arrayed to be added to the one floor corresponding to the selected first instruction button; and
display, on the first floor plan, a selected room candidate as an additional first room icon in the case that any one of the room candidates is selected on the third display screen.

Another aspect according to the present disclosure is a program executed by an information apparatus having a display and being connected to a network, over which one or more target devices are controlled, the program causing a computer of the information apparatus to:
display, on the display, a display screen including a floor plan of a building, the floor plan including each floor label that represents each floor of the building and each room icon that represents each room on the each floor, an operation screen of a target device that is located in a room corresponding to a selected room icon being displayed on the floor plan through selection of one of the each room icon;
increase/reduce the number of room icons on the each floor represented by the each floor label, to edit room icons corresponding to the each floor included in the floor plan; and
display the edited room icons in the floor plan.

Another aspect according to the present disclosure is a program executed by an information apparatus having a display and being connected to a network, over which one or more target devices are controlled, the program causing a computer of the information apparatus to:
display, on the display, a first display screen including a first floor plan of a building, the first floor plan including each first floor label that represents each floor of the building and each first room icon that represents each room arrayed on the each floor, an operation screen of a target device that is located in a room corresponding to a selected first room icon being displayed on the first screen display through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing the each floor of the building, each second room icon representing the each room on the each floor, and each first instruction button for adding another second room icon to the each floor represented by the each second floor label;
when selection of one of the first instruction button is sensed correspondingly to one of the each floor represented by the each second floor label on the second display screen, add the other second room icon to the one floor corresponding to the selected first instruction button, and display the first floor plan that includes an added first room icons corresponding to the added second room icon.

Another aspect according to the present disclosure is a program executed by an information apparatus having a display and being connected to a network, over which one or more target devices are controlled, the program causing a computer of the information apparatus to:
display, on the display, a first display screen including a floor plan of a building, the floor plan including each floor label that represents each floor of the building and each room icon that represents each room on the each floor, an operation screen of a target device that is located in a room corresponding to a selected room icon being displayed on the first display screen through selection of one of the each room icon, the first display screen having each instruction button for adding another room icon to each floor represented by the each floor label;
when selection of one of the each instruction button is sensed correspondingly to one of the floors represented by the floor labels in the first display screen, display, on the display, a second display screen in which room candidates are arrayed to be added to the one floor corresponding to the selected instruction button; and
display a selected room candidate as an additional room icon in the case that any one of the room candidates is selected on the second display screen.

### (Embodiment)

An embodiment of the present invention is described hereinafter with reference to the drawings. Note that the same components in each of the drawings are described using the same reference numerals.

in the present embodiment, a home controller capable of controlling one or more devices by itself is described.

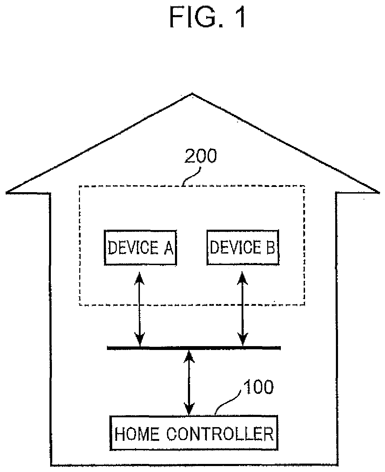

Fig. 1 is the entire configuration diagram of a home control system to which the home controller according to the present embodiment is applied. As shown in Fig. 1, the home control system has the home controller 100 and devices 200 (an example of the target devices).

The home controller 100 and one or more devices 200 (e.g., a device A200, a device B200) are located in a house. The home controller 100 and the devices 200 communicate with each other via a wired or wireless network or a network where a wired network and a wireless network co exist. Examples of the wired network include a cable LAN of the IEEE 802.3 series, and the examples of the wireless network include a wireless LAN of the IEE 802.11 series.

Note that the home controller 100 does not always have to be located inside the house and thus may be located outside the house. In this case, a user of the home controller 100 can control the one or more devices 200 from wherever the user has gone to.

A portable information terminal such as a smartphone or a tablet terminal is used as the home controller 100. This, however, is merely an example; thus, a touch-tone portable information terminal such as a cellular phone may be employed as the home controller 100. A notebook type personal computer or a desktop personal computer may be employed as the home controller 100 as well.

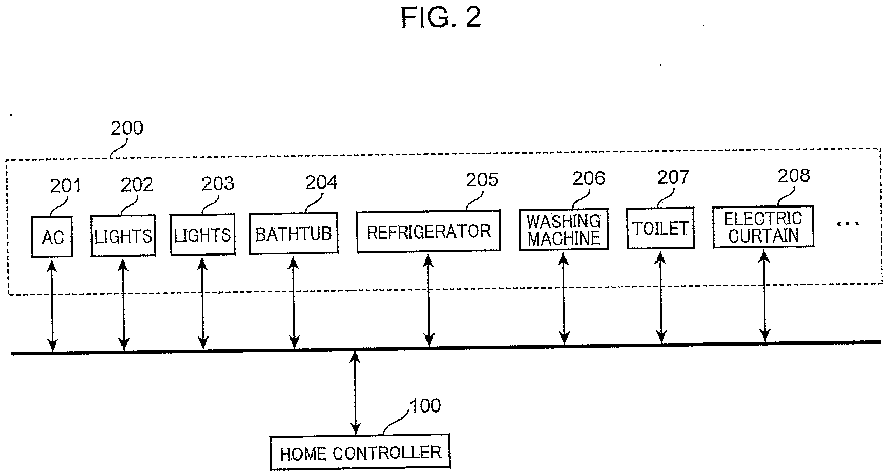

Fig. 2 is a diagram showing the primary devices 200 controlled by the home controller 100. The home controller 100 controls such devices 200 as an air conditioner (referred to as "AC," hereinafter) 201, illumination devices 202, 203, a bathtub 204, a refrigerator 205, a washing machine 206, a toilet 207, and an electric curtain 208. Note that among the devices 200 controlled by the home controller 100 may be a plurality of devices 200 of the same type, such as the illumination device 202 and the illumination device 203.

The devices 200 such as the AC 201 shown in Fig. 2 are merely exemplary, and television receivers (referred to as "TV," hereinafter), Blu-ray recorders, audio devices and the like may be employed as the devices 200. In other words, any electronic devices capable of communicating with the home controller 100 can be employed as the devices 200. Fig. 2 shows the electronic devices for home use as the devices 200; however, the present disclosure is not limited thereto, and office devices used in offices and the like may be employed as well. Examples of the office devices include printers, personal computers, scanners, and copy machines. In addition, the present disclosure employs a house as an example of a building, but the present disclosure is not limited thereto, and school buildings and other buildings may be employed as well.

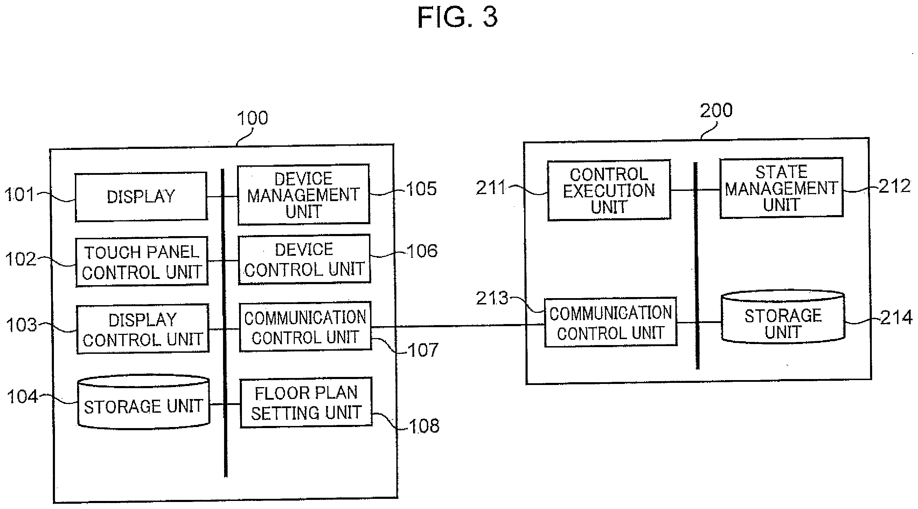

Fig. 3 is a block diagram showing an example of the configurations of the home controller 100 and of the devices 200. As shown in Fig. 3, the home controller 100 has a display 101, a touch panel control unit 102, a display control unit 103, a storage unit 104, a device management unit 105, a device control unit 106, a communication control unit 107, and a floor plan setting unit 108.

The display 101 is configured by, for example, a touch panel display, and displays a user interface and the like for allowing the user to operate the home controller 100. The user can input various operations to the home controller 100 by touching the display 101.

Once recognizing a user operation on the display 101, the touch panel control unit 102 interprets the contents of the operation and sends the operation contents to the other components. For example, in the case where there exists an object on the display 101 tapped by the user, the touch panel control unit 102 determines that the object is selected by the user. The object can be a button or various other types of GUI components for accepting user operations. In the present disclosure, the touch panel control unit 102 notifies the floor plan setting unit 108 of the contents of a recognized operation as long as the recognized operation relates to the setting of a floor plan.

The display control unit 103 generates a GUI (Graphical User Interface) for the home controller 100 and displays the GUI on the display 101. In the present disclosure, a screen that relates to the settings of a floor plan is displayed in response to a rendering instruction that is output especially from the floor plan setting unit 108.

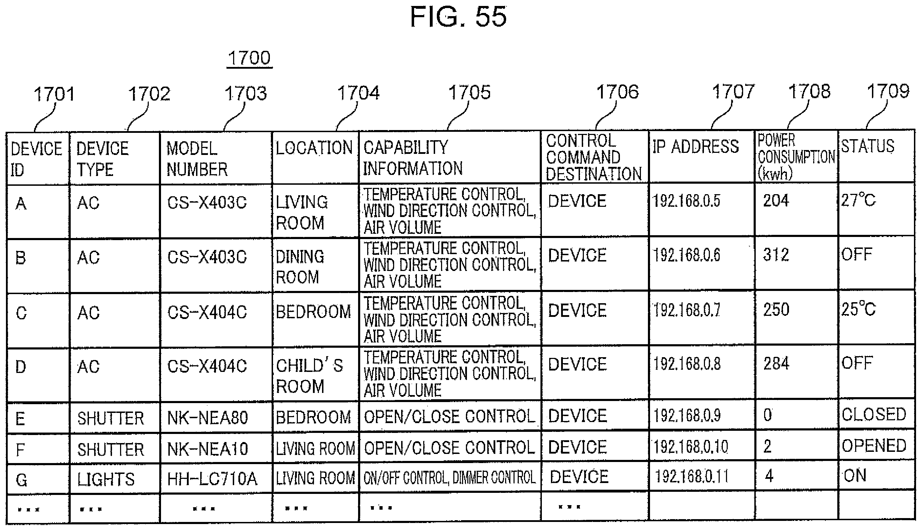

The storage unit 104 is configured by, for example, a nonvolatile storage device and stores information required to operate the home controller 100, such as a device list (see Fig. 55) managed by the device management unit 105.

The floor plan setting unit 108 is responsible for the processes associated with the settings of a floor plan in accordance with a user operation. In the present disclosure, a floor plan that schematically expresses the rooms of the house using block-shaped figures called "room icons" is employed. Therefore, examples of the processes executed by the floor plan setting unit 108 include a process for adding a room icon to the floor plan to match the actual floor plan in response to a user operation, a process for setting a name for a room icon in response to a user operation, and a process for deleting an unwanted room icon from the floor plan in response to a user operation. Furthermore, when notified by the touch panel control unit 102 of an operation related to the settings of the floor plan, the floor plan setting unit 108 senses the user operation related to the settings of the floor plan. The floor plan setting unit 108 also sends a rendering instruction for displaying an applicable screen on the display 101 to the touch panel control unit 102 in accordance with the sensed operation related to the settings of the floor plan.

The device management unit 105 manages a control target device 200 by using the device list stored in the storage unit 104. Also, when there is a device 200 connected to an indoor network, the device management unit 105 senses the device 200.

The device control unit 106 issues a control command to a device 200. The communication control unit 107 controls the communications between the home controller 100 and the device 200. The communication control unit 107 also receives, from another block, a request for transmitting various data, transmits the request to the device 200, receives the data from the device 200, and delivers the data to a relevant block.

Note that the display 101 may not only be a touch panel display but also a normal display. In this case, the user may use an external input device such as a mouse, not shown, to move a pointer displayed on the display 101, and input an object selection instruction by clicking a desired object Specifically, in the present disclosure, a series of operations that the user executes by touching the display 101 can be replaced with the operations for moving the pointer by using the external input device such as a mouse and clicking an object.

As shown in Fig. 3, each of the devices 200 has a control execution unit 211, a state management unit 212, a communication control unit 213, and a storage unit 214. The control execution unit 211 receives a control command from the home controller 100, and controls the relevant device 200 in response to the received control command. The details of the control performed on the device 200 by the control execution unit 211 vary depending on the type of the device 200. For example, when the device 200 is an illumination device, the control execution unit 211 turns the illumination device on/off. The control execution unit 211 also transmits the result of the execution of the control command or the state of the device 200 to the home controller 100.

The state management unit 212 manages the state of the device 200. The details of the management performed on the device 200 by the state management unit 212 vary depending on the type of the device 200. For example, when the device 200 is an illumination device, the state management unit 212 manages the current ON state or OFF state of the illumination device. The storage unit 214 stores information on the state of the device 200 managed by the state management unit 212.

The communication control unit 213 controls the communication between the device 200 and the home controller 100. The communication control unit 213 receives, from another block, a request for transmitting various data, transmits the request to the home controller 100, receives the data from the home controller 100, and delivers the data to a relevant block.

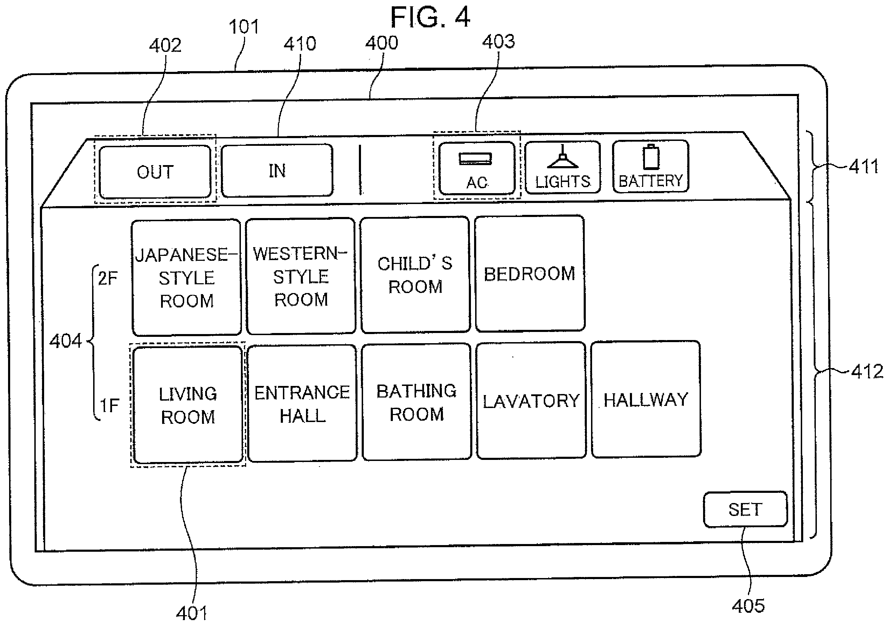

Fig. 4 is a diagram showing an example of a floor plan screen 400 displayed by the home controller 100. The floor plan screen 400 (an example of the first display screen) is a basic screen of the home controller 100 that includes a floor plan 410. The floor plan 410 is a diagram that schematically shows an arrangement of one or more rooms configuring each floor of the house. The external shape of the floor plan 410 is expressed in a figure representing the house in an abstract form. The floor plan 410 is divided roughly into two display areas 411 and 412. The display area 411, provided on the upper side of the floor plan 410, is the trapezoid area that schematically expresses the roof of the house. The display area 412, provided below the display area 411, is a square area that schematically expresses the main part of the house.

One or more room icons 401 (an example of the first room icons) that represent one or more rooms of the house respectively are located in a matrix in the display area 412. The room icons 401 are images that schematically express the rooms of the house by using, for example, square boxes. In Fig. 4, the room icons 401 are expressed in the shape of square blocks; however, this is merely an example, and therefore the room icons 401 may be expressed in the shape of circular, triangular, diamond-shaped, at least pentagonal or other polygonal blocks. Generally, a room is a region that is spatially partitioned by walls in a building and where a person spends a certain amount of time or longer, but in the present disclosure the room icons 401 also represent areas of a house other than its rooms, such as stairs, hallways, and entrance halls, In the case of a stand-alone housing unit, the room icons 401 may represent outer sections thereof such as a yard and a garage.

As shown in Fig. 4, the room icons 401 are expressed in, for example, blocks of the same size. The name of a room (an examples of the first name label) is written in each of the room icons 401, The name of a room written in each room icon 401 can allow the user to recognize at a glance which room in the house is represented by the relevant room icon 401. Floor numbers showing the respective floors of the house are displayed vertically at the left edge of the display area 412. The room icons 401 representing the rooms located on the same floor are arranged in a single horizontal row, for example, on a display level corresponding to the floor to which the room icons 401 belong. That is, in the floor plan 410, the room icons 401 representing the rooms on each floor of the house are arranged in coordination with each floor.

In the example shown in Fig. 4, the house is configured by two floors: the first and second floors. Therefore, the room icons 401 that represent the rooms configuring the second floor are located on the first display level from the top, and the room icons 401 that represent the rooms configuring the second floor are located on the second display level. Also, in the display are 412, the left edges of the respective rows are provided with floor display sections 404. The floor display sections 404 show the floor numbers (an example of the first floor labels) such as "1F" and "2F."

A floor plan, generally, is a bird's-eye view showing the first floor of a house from above. Such a bird's eye floor plan allows, at a glance, understanding of the specific shapes and arrangement of the rooms constituting the house. In order to incorporate such floor plan as electronic data into the home controller 100, the CAD data of the floor plan needs to be obtained from the construction company that built the house, or the floor plan in the form of a print created by the construction company needs to be captured with a scanner. In addition, the information indicating the correspondence between the rooms shown by the CAD data and the rooms of the actual house need to be recognized by the home controller 100. It is not easy for an end user to carry out these tasks.

In the present disclosure, therefore, the floor plan 410 in which the rooms are schematically represented by the block-shaped room icons 401 is employed. Therefore, the floor plan 410 that matches the actual floor plan of each individual house can be created simply by adding or deleting the room icons 401 in coordination with each floor. Also, when a user moves into a new house that has a different floor plan, the user can create a floor plan that matches the new house by making some changes to the floor plan that the user used before moving into the new house.

The room icons 401 are of the same size. For this reason, unlike the bird's-eye floor plan, there is no need to cause the home controller 100 to recognize the information on the shape of each room or on the position of each room on the corresponding floor. The floor plan 410 of the present disclosure, therefore, can easily be accommodated to the floor of plan of any house.

Note that Fig. 4 shows a two-story house; however, in the case of a three-story house, floor numbers 3F, 2F and 1F are displayed starting from the top at the left edge of the floor plan 410, and the room icons 401 for the rooms of each floor may be arranged in a single horizontal row on the display level of the corresponding floor. The same applies to a house with four or more stories. In Fig. 4, the floor numbers are displayed in ascending order but may also be displayed in descending order. Also, the floor numbers may be displayed horizontally and the room icons 401 may be arranged vertically.

Two batch operation icons 402 showing "OUT" and "IN" are displayed on the left-hand side of the display area 411. Three device type icons 403 showing "AC," "Lights," and "Battery" are displayed on the right-hand side of the display area 411. The batch operation icon 402 showing "OUT" is an icon for turning off all the devices 200 in the house at once, the devices 200 being other than the devices 200 such as the refrigerator that remain ON at all times. When leaving the house, the user can turn off all the relevant devices 200 at once simply by touching the batch operation icon 402 for "OUT" once instead of turning off the devices 200 one by one.

The batch operation icon 402 showing "IN" is an icon for turning on all the devices 200 in the house at once, the devices 200 being other than the devices 200 that remain on at all times. The user can turn on all the relevant devices 200 at once simply by touching the batch operation icon 402 for "IN" once instead of turning on the devices 200 one by one.

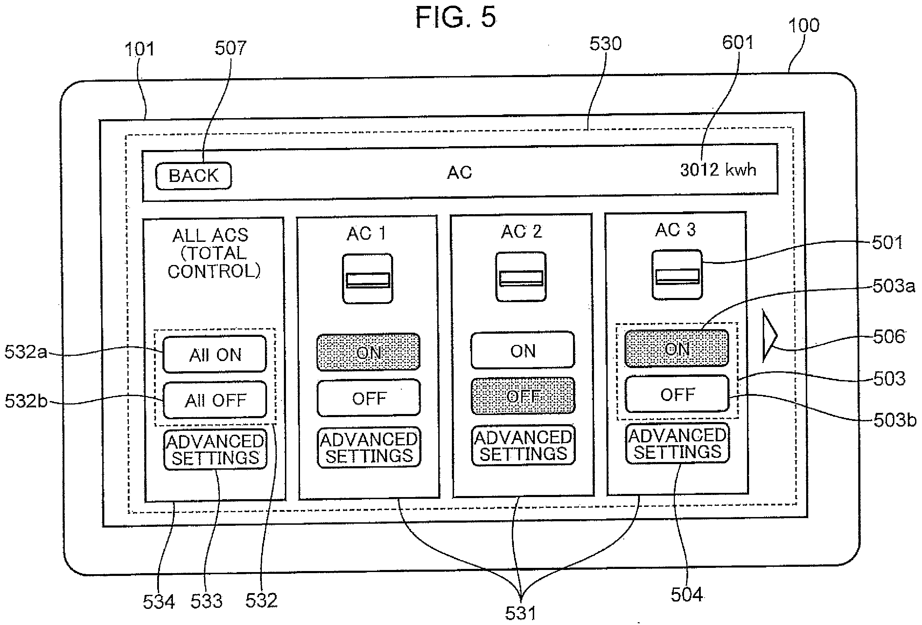

The device type icons 403 are icons for displaying device screens 530 for operating all the relevant types of devices 200 located in the house. When the user selects one of the device type icons 403, the display control unit 103 displays the device screen 530 of Fig. 5 on the display 101. Examples of the operation in which the user selects a desired icon include an operation for tapping a contact object (a finger, a touch pen, etc.) on the icon to be selected.

In the example shown in Fig. 4, the three device type icons 403 for the AC, lights, and battery are located in the display area 411. However, this is merely an example; thus, when the other types of devices 200 are installed in the house, the device type icons 403 for these devices 200 are displayed in the display area 411. In the example shown in Fig. 4, due to the small size of the display area 411, only a limited number of device type icons 403 can be displayed therein at once. For this reason, an aspect can be employed in which, for example, a paging button is provided at the right edge of the display area 411 and the other device type icons 403 that are hidden are displayed in the display area 411. In this case, the display control unit 103 may hide the displayed device type icons 403 and then display the hidden device type icons 403 in the display area 411.

Fig. 5 is a diagram showing an example of the device screen 530 displayed by the home controller 100. This device screen 530 is a device screen for the "AC." Note that the device screen 530 for the "AC" is displayed when the user selects the device type icon 403 for "AC" on the floor plan screen 400 shown in Fig. 4. When the device type icon 403 for "Lights" or "Battery" other than "AC" is selected on the floor plan screen 400 of Fig. 4, the device screen 530 for "Lights" or "Battery" is displayed.

A display section 601 is provided on the upper side of the device screen 530 to display a total amount of power consumption of the relevant devices 200 installed in the house. This total can be calculated by, for example, causing the device management unit 105 to refer to a device list 1700 (Fig. 55) and sum up the amounts of power consumption 1708 of the relevant devices 200.

A device type name of the relevant devices 200 (ACs, in this case) is shown to the left of the display section 601. A Back button 507 is shown to the left of the device type name. The Back button 507 is a button for changing the displayed screen to the floor plan screen 400 (Fig. 4).

Starting from the left, one operation screen 534 and three operation screens 531 are displayed below the display section 601. The operation screen 534 is an operation screen for operating the relevant type of devices 200 at once. Thus, the upper side of the operation screen 534 reads "all ACs (total control)," meaning that this operation screen 534 is for operating the relevant type of devices 200 (ACs, in this case) at once.

The three operation screens 531 arranged to the right ofthe operation screen 534 are operation screens for operating "AC 1," "AC 2," and "AC 3" individually, The names of the ACs, "AC 1," "AC 2," and "AC 3," and device icons 501 schematically representing these ACs are displayed in these three operation screens 531, respectively.

The example shown in Fig. 5 is set to the size that can display, in one screen, only three operation screens 531. Therefore, when four or more ACs are installed in the house, the operation screens 531 for the fourth and subsequent ACs cannot be displayed on the display 101.

The device screen 530, therefore, has a triangular paging button 506 provided at, for example, the center on the right-hand side of the device screen 530. When the user selects the paging button 506, the display control unit 103 scrolls the operation screens 531, 534 to the left to display the fourth and subsequent AC operation screens 531 on the display 101. In this case, the display control unit 103 may bring the currently displayed operation screens 531, 534 to the outside of the display area of the display 101, sequentially starting from the left, so that the fourth and subsequent AC operation screens 531 can be displayed preferentially on the display 101. Alternatively, when the operation screen 534 and operation screens 531 for AC 1 to AC 3 are allocated on the first page and the operation screen 531 for the fourth AC 4 is allocated on the second page, the display control unit 103 may change the screen from the first page to the second page when the user selects the paging button 506, thereby displaying only the operation screen 531 for AC 4 on the display 101.

The operation screen 534 enabling such batch operation includes a total control button 532 for controlling all the ACs at once, and an Advanced Settings button 533 for displaying a model advanced control screen (not shown). The total control button 532 has two buttons: an all-on button 532a reading "ALL ON" and an all-off button 532b reading "ALL OFF." The all-off button 532b is a button for turning off all the ACs in the house at once. The all-on button 532a is a button for turning on all the ACs in the house at once. The advanced control screen (not shown) that is displayed through selection of the Advanced Settings button 533 is used when executing the operations other than the power ON/OFF operation, such as setting the temperatures of all the ACs at once or setting the wind directions of all the ACs at once.

The operation screens 531 for operating the ACs individually each have a simple control button 503 and an Advanced Settings button 504. The simple control button 503 includes two buttons: an ON button 503a reading "ON" and an OFF button 503b reading "OFF." The ON button 503a is a button for turning the relevant AC on, and the OFF button 503b for turning the relevant AC off. The Advanced Settings button 504 is a button for displaying the advanced control screen (not shown) for the relevant AC, The advanced control screen (not shown) that is displayed through selection of the Advanced Settings button 504 is used when executing the operations other than the power ON/OFF operation, such as setting the temperature of the relevant AC or setting the wind direction of the relevant AC.

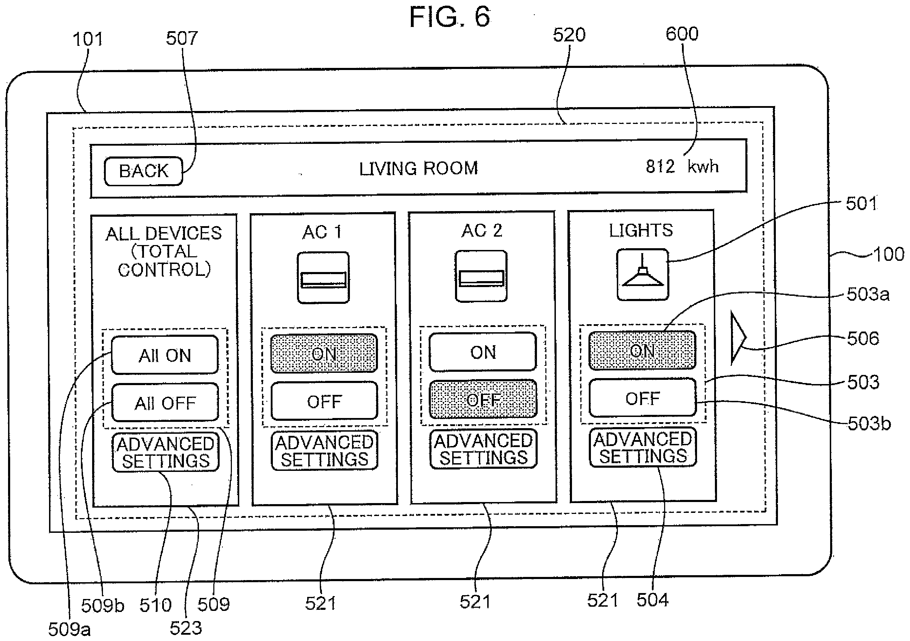

Fig. 6 is a diagram showing an example of a room screen 520 displayed by the home controller 100. This room screen 520 is displayed when a room icon 401 in the floor plan screen 400 (see Fig. 4) is selected by the user. In the example shown in Fig. 6, the room screen 520 for the living room is displayed. This is because the user selects the room icon 401 for the living room on the floor plan screen 400 (Fig. 4),

A display section 600 is provided on the upper side of the room screen 520 to display a total amount of power consumption of a relevant room. This total can be calculated by, for example, causing the device management unit 105 to refer to the device list 1700 (Fig. 55), specify the devices 200 installed in the relevant room, from a location 1704, and sum up the amounts of power consumption 1708 of the specified room.

The name of the relevant room (the living room, in this case) is shown to the left of fhe display section 600. A Back button 507 is shown to the left of this room name. The Back button 507 is a button for changing the displayed screen to the floor plan screen 400 (Fig. 4).

Starting from the left, one operation screen 523 and three operation screens 521 are displayed below the display section 600. The operation screen 523 is an operation screen for operating the devices 200 of the relevant room (the living room, in this case) at once. Thus, the upper side of the operation screen 523 reads "all devices (total control)," meaning that the operation screen 523 is for operating the devices 200 of the relevant room at once.

The three operation screens 521 arranged to the right of the operation screen 523 are operation screens for individually operating "AC 1," "AC 2," and "Lights" installed in the living room. The names of the ACs such as "AC 1," "AC 2," and "Lights," and device icons 501 schematically representing these ACs and lights are displayed in these three operation screens 521, respectively. A paging button 506 is a button for displaying the operation screens 521 for the fourth and subsequent devices 200 in the living room on the display 101, the details of which are the same as the paging button 506 shown in Fig. 5.

The operation screen 523 includes a total control button 509 for controlling all the devices 200 in the living room at once, and an Advanced Settings button 510 for enabling total advanced settings of all the devices 200 installed in the living room.

The total control button 509 has two buttons: an all-on button 509a reading "ALL ON" and an all-off button 509b reading "ALL OFF." The all-off button 509b is a button for turning off all the devices 200 in the living room at once. The all-on button 509a is a button for turning on all the devices 200 in the living room at once.

When the all-on button 509a is selected, the device control unit 106 outputs, to the relevant devices, a control command for turning on all the devices 200 in the living room at once. When the all-off button 509b is selected, the device control unit 106 outputs, to the relevant devices 200, a control command for turning off all the devices 200 in the living room at once. For example, when the ON button 503a for "Lights" is selected, the device control unit 106 outputs a control command for turning on the illumination devices 200 on to the illumination devices 200. When the OFF button 503b for "Lights" is selected, the device control unit 106 outputs a control command for turning off the illumination devices 200 to the illumination devices 200.

The advanced control screen (not shown) that is displayed through selection of the Advanced Settings button 510 is used when executing comprehensive operations other than the power ON/OFF operation, with the comprehensive operations being represented by setting the temperatures of the ACs in the living room or setting the wind directions of the ACs in the living room.

The display control unit 103 refers to a status 1709 of the device list 1700 (Fig. 55), determines whether to turn each of the devices 200 in the living room ON or OFF, and displays the ON button and OFF button of the simple control button 503 in different colors. In the example shown in Fig. 6, "AC 1," "AC 2" and "Lights" are ON, OFF and ON, respectively. Therefore, the ON buttons 503a for "AC 1'' and "Lights" are displayed in a color different from the color of a default state, and the OFF button 503b for "AC 2" is displayed in a color different from the color of default state. This allows the user to easily confirm the ON/OFF state of each of the devices 200 installed in the living room.

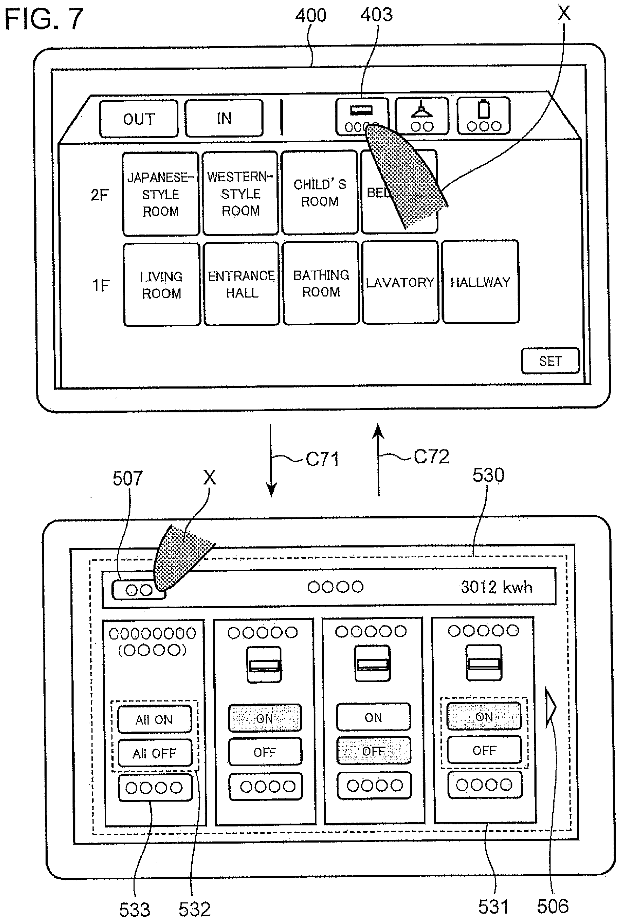

Fig. 7 is a diagram showing an example of a screen transition between the floor plan screen 400 and the device screen 530. Note that the upper diagram and the lower diagram shown in Fig. 7 are the same as Fig. 4 and Fig.5, respectively. When the user selects the device type icon 403 for the AC on the floor plan 410 by using a contact object X, the display control unit 103 changes the screen displayed on the display 101 to the device screen 530 (C71).

On the other hand, when the user selects the Back button 507 on the device screen 530 using the contact object X, the display control unit 103 changes the displayed screen to the floor plan screen 400 (C72).

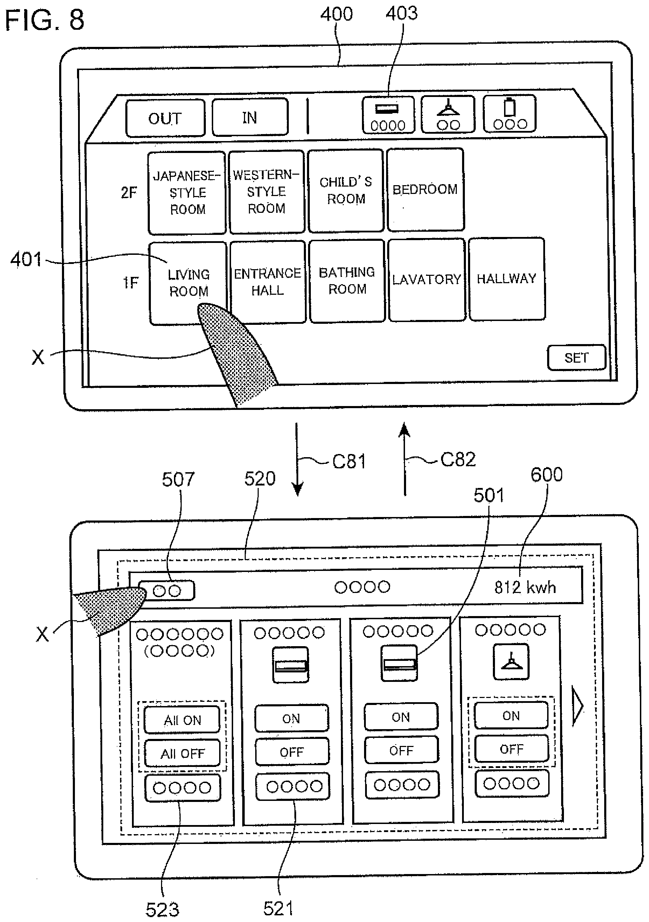

Fig. 8 is a diagram showing an example of a screen transition between the floor plan screen 400 and the room screen 520. Note that the upper diagram and the lower diagram of Fig. 8 are the same as Fig. 4 and Fig. 6, respectively. When the user selects the room icon 401 for the living room on the floor plan screen 400 by using the contact object X, the display control unit 103 changes the screen displayed on the display 101 to the room screen 520 (C81).

However, when the user selects the Back button 507 on the room screen 520 using the contact object X, the display control unit 103 changes the displayed screen to the floor plan screen 400 (S82).

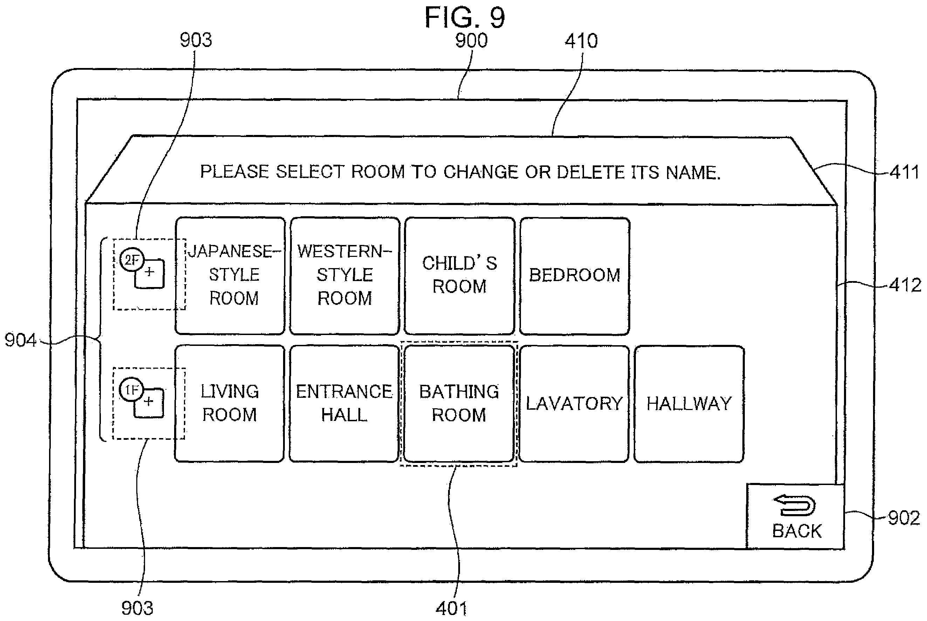

Fig. 9 is a diagram showing an example of a floor plan setting screen 900. The floor plan setting screen 900 (an example of the second display screen) is displayed when the user selects a Set button 405 on the floor plan screen 400.

The floor plan setting screen 900 is a screen that includes a floor plan 410 and is used for editing the floor plan 410 displayed on the floor plan screen 400. The floor plan 410 displayed on the floor plan setting screen 900 is an example of the second floor plan. The floor plan 410 on the floor plan setting screen 900 corresponds to the floor plan 410 on the floor plan screen 400.

Unlike the display area 411 of the floor plan screen 400, a display area 411 of the floor plan setting screen 900 shows a phrase reading "Please select a room to change or delete its room name," clearly indicating that this screen is not the floor plan screen 400 but the floor plan setting screen 900.

As in the display area 412 of the floor plan screen 400, one or more room icons 401 are located in a matrix in a display area 412 of the floor plan setting screen 900. The room icons 401 of the floor plan setting screen 900 are an example of the second room icons. The room icons 401 of the floor plan setting screen 900 correspond one-on-one to the room icons 401 of the floor plan screen 400. The room icons 401 of the floor plan setting screen 900 are expressed in blocks of the same size and are the same as the room icons 401 of the floor plan screen 400 in size. The same room names as those of the room icons 401 corresponding to the floor plan screen 400 are written in the room icons 401 of the floor plan setting screen 900. The room names of the room icons 401 on the floor plan setting screen 900 are an example of the second name labels. The order in which the room icons 401 on the floor plan setting screen 900 are arranged is the same as the order in which the room icons 401 on the floor plan screen 400 are arranged. As with the floor plan screen 400, a floor display section 904 showing the floor numbers such as 1F and 2F (an example of the second floor labels) is provided at the left edge of the display area 412 of the floor plan setting screen 900.

In other words, when a room icon 401 is added or deleted on the floor plan setting screen 900, the floor plan setting unit 108 operates at the same time to add or delete the same room icon 401 from the floor plan screen 400. Therefore, the user does not have to change the screen displayed on the display 101 to the floor plan screen 400 to check whether a room is added/deleted to/from the floor plan 410 or not every time when adding a single room icon 401 to the floor plan setting screen 900. The user, therefore, can smoothly execute a floor plan setting task in which the room icons 401 can be added or deleted continuously while keeping the floor plan setting screen 900 displayed.

Fig. 9 shows the floor plan setting screen 900 that is switched from the floor plan screen 400 in order to be displayed on the display 101. Thus, the room icons 401 are arranged on the floor plan setting screen 900 in the same manner as the room icons 401 on the floor plan screen 400.

An Add Room button 903 (an example of the first instruction button), "+," corresponding to each of the floors is located adjacent to the position where the corresponding floor number is displayed. In the example shown in Fig. 9, because the house has two stories, the Add Room button 903 for the first floor is located, in a partially overlapped manner, in the position where the floor number of the first floor is displayed, and the Add Room button 903 for the second floor is located, in a partially overlapped manner, in the position where the floor number of the second floor is displayed. The Add Room buttons 903 here are buttons for adding rooms to the floors on the floor plan screen 400.

The Add Room button 903 for the first floor is a button for adding a room to the first floor on the floor plan screen 400. The Add Room button 903 for the second floor is a button for adding a room to the second floor on the floor plan 410. In the example shown in Fig. 9, because the house has two stories, the two Add Room buttons 903 corresponding to the first and second floors are displayed. However, when the house has three stories, three Add Room buttons 903 corresponding to the first to third floors are displayed. The same applies to a house with four or more stories.

A Back button 902 for changing the screen displayed on the display 101 to the floor plan screen 400 is provided at the lower right of the floor plan setting screen 900.

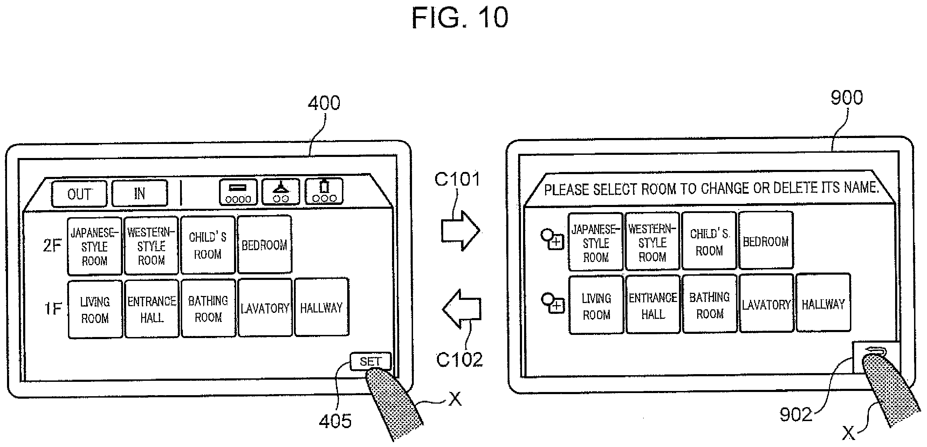

Fig. 10 is a diagram showing an example of a screen transition between the floor plan screen 400 and the floor plan setting screen 900. Note that the left diagram and the right diagram shown in Fig. 10 are the same as Fig. 4 and Fig. 9, respectively. When the user selects the Set button 405 on the floor plan screen 400 by using the contact object X, the floor plan setting unit 108 changes the screen displayed on the display 101 to the floor plan setting screen 900 (C101).

On the other hand, when the user selects the Back button 902 on the floor plan setting screen 900 by using the contact object X, the floor plan setting unit 108 changes the screen displayed on the display 101 to the floor plan screen 400 (C102).

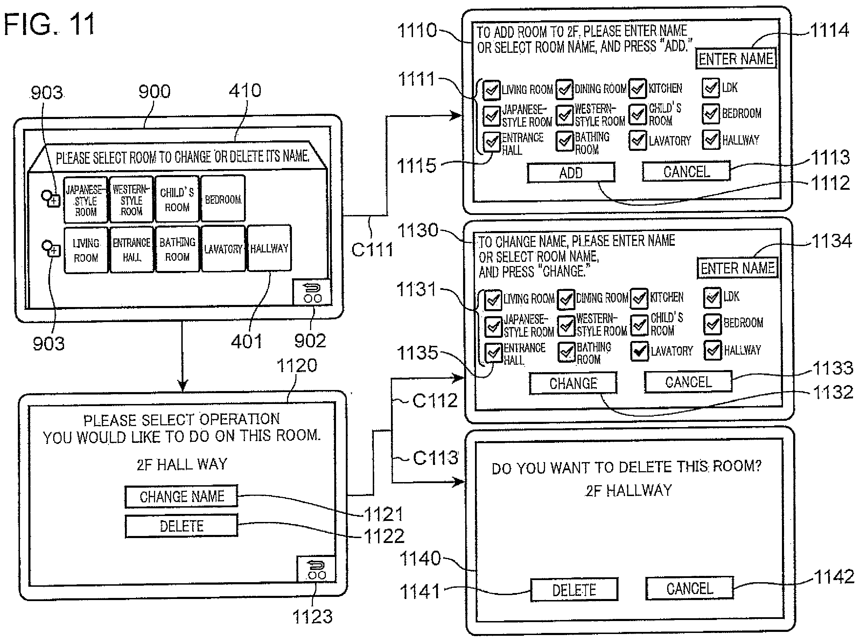

Fig. 11 is a diagram showing a first example of a transition of screens associated with floor plan settings. When it is sensed that the user taps one of the Add Room buttons 903 on the floor plan setting screen 900, the floor plan setting unit 108 changes the screen displayed on the display 101 to a room addition screen 1110 (an example of the third display screen) (C111).

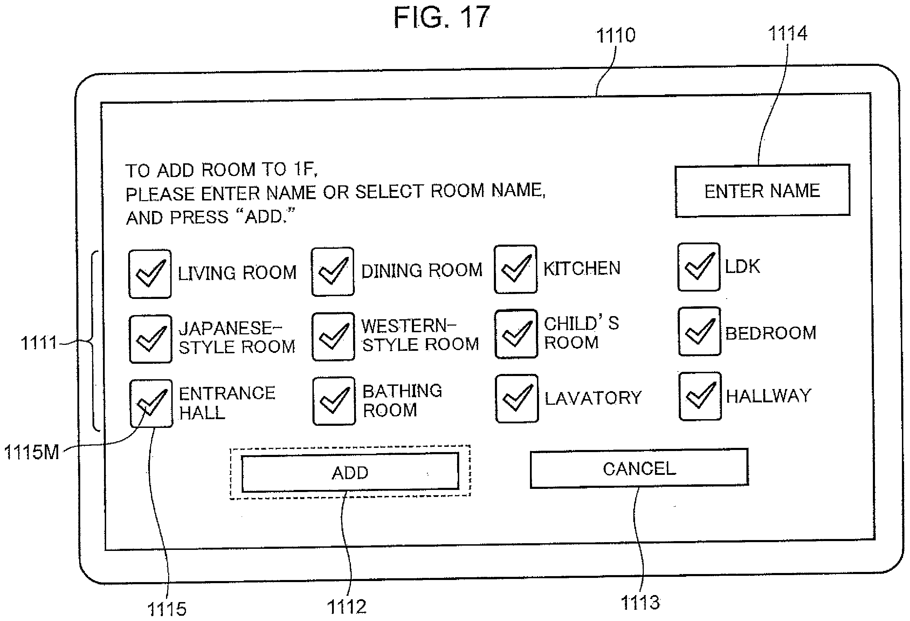

The room addition screen 1110 is a screen for adding a room to the floor on the floor plan setting screen 900 that is selected by the user. The room addition screen 1110 is shown in Fig. 17. A phrase reading "To add a room to 1F, please enter the name or select a room name and press "Add"" is displayed at the upper left of the room addition screen 1110, clearly indicating that the room addition screen 1110 is the screen for adding a room icon 401 to the first floor.

A room candidate display section 1111 is provided at the center of the room addition screen 1110. When the user selects a desired room from the rooms displayed as room candidates in the room candidate display section 1111 and selects an Add button 1112, the selected room is added to the floor plan 410 as a room for the relevant floor.

The Add button 1112 (an example of the fourth instruction button) and a Cancel button 1113 are displayed on the lower side of the room candidate display section 1111. The Add button 1112 is a button that is selected when the room selected by the user from the rooms listed as the room candidates is added to the floor plan 410. The Cancel button 1113 is a button that is selected when canceling addition of the room to the floor plan 410, the room being selected by the user from the rooms listed as the room candidates.

An Enter Name button 1114 is displayed at the upper right of the room candidate display section 1111. The Enter Name button 1114 is a button that is selected when providing a name to the room to be added, the name being other than the room names listed as the room candidates.

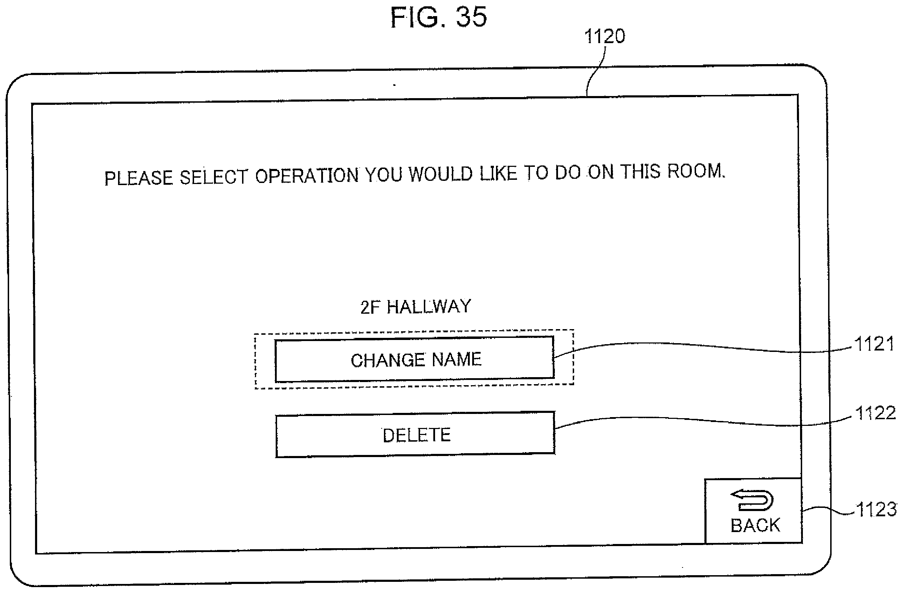

Returning to Fig. 11, when a room icon 401 is selected on the floor plan setting screen 900, the floor plan setting unit 108 changes the screen displayed on the display 101 to a room edit screen 1120 (an example of the fourth display screen). The details of the room edit screen 1120 are shown in Fig. 35. The room edit screen 1120 is a screen that is displayed when the user edits the rooms displayed in the floor plan 410. Here, the room icon 401 for the hallway on the second floor is selected. Therefore, the room edit screen 1120 for the hallway on the second floor is displayed. As described above, when a room icon 401 is selected on the floor plan setting screen 900, the relevant room edit screen 1120 is displayed. On the other hand, when a room icon 401 is selected on the floor plan screen 400, the room screen 520 (Fig. 6) for operating the corresponding devices 200 installed in the relevant room is displayed. This is one of the big differences between the floor plan setting screen 900 and the floor plan screen 400.

A Change Name button 1121 (an example of the second instruction button) and a Delete button 1122 (an example of the third instruction button) are displayed on the room edit screen 1120. The Change Name button 1121 is a button that is selected when the user changes the name of the room selected on the floor plan setting screen 900. The Delete button 1122 is a button that is selected when the user deletes the room selected on the floor plan setting screen 900.

Returning to Fig. 11, when it is sensed that the user taps the Change Name button 1121 on the room edit screen 1120, the floor plan setting unit 108 changes the screen displayed on the display 101 to a room name change screen 1130 (an example of the fifth display screen) (C112).

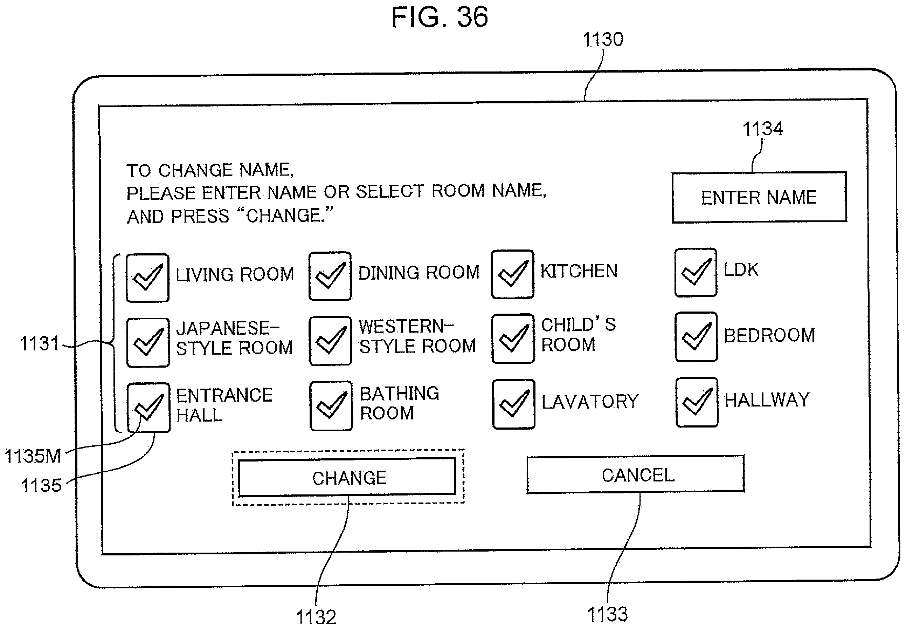

The room name change screen 1130 is a screen that is displayed when the user changes the name of the room selected on the floor plan setting screen 900. The details of the room name change screen 1130 are shown in Fig. 36. A phrase reading "To change a name, please enter the name or select a room name and press "Change"" is displayed in the upper part of the room name change screen 1130, clearly indicating that this screen is the screen for changing a room name.

A name candidate display section 1131 is provided at the center of the room name change screen 1130. A list of name candidates for the room selected on the floor plan setting screen 900 by the user is displayed in the name candidate display sections 1131. Names that are the same as the names of the rooms listed as the room candidates in the room candidate display section 1111 are employed as the name candidates. Checkboxes 1135 for selecting the name candidates are displayed to the left of the positions where the name candidates are displayed. For instance, when selecting the living room from the name candidates, the user selects the checkbox 1135 located to the left of the position where the living room is displayed.

A Change button 1132 (an example of the fifth instruction button) and a Cancel button 1133 are displayed below the name candidate display section 1131 on the room name change screen 1130. The Change button 1132 is a button that is selected when allowing a change of the name of the relevant room based on the room name selected from the name candidates by the user. The Cancel button 1133 is a button that is selected when the user cancels the room name selected from the name candidates. An Enter Name button 1134 is displayed at the upper right of the name candidate display section 1131. The Enter Name button 1134 is a button that is selected when changing the name of the relevant room to a name different from the name candidates listed in the name candidate display section 1131.

Returning to Fig. 11, when it is sensed that the Delete button 1122 on the room edit screen 1120 is tapped, the floor plan setting unit 108 changes the screen displayed on the display 101 to a room deletion confirmation screen 1140 (C113).

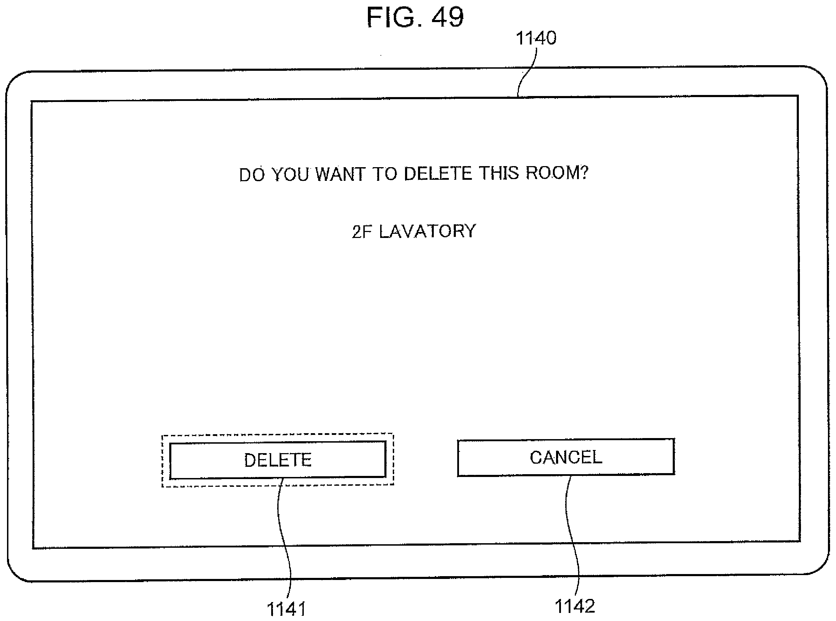

The room deletion confirmation screen 1140 is a screen for confirming with the user whether the room selected by the user can be deleted from the floor plan 410 on the floor plan setting screen 900. The details of the room deletion confirmation screen 1140 are shown in Fig. 49. A phrase reading "Do you want to delete this room? 2F Lavatory" is displayed in the upper part of the room deletion confirmation screen 1140, clearly indicating that this screen is the screen for confirming with the user whether the lavatory on 2F can be deleted from the floor plan 410 or not.

A Delete button 1141 and a Cancel button 1142 are displayed in the lower part of the room deletion confirmation screen 1140. The Delete button 1141 is a button that is selected when deleting the relevant room icon 401 from the floor plan 410. The Cancel button 1142 is a button that is selected when canceling deletion of the relevant room icon 401 from the floor plan 410.

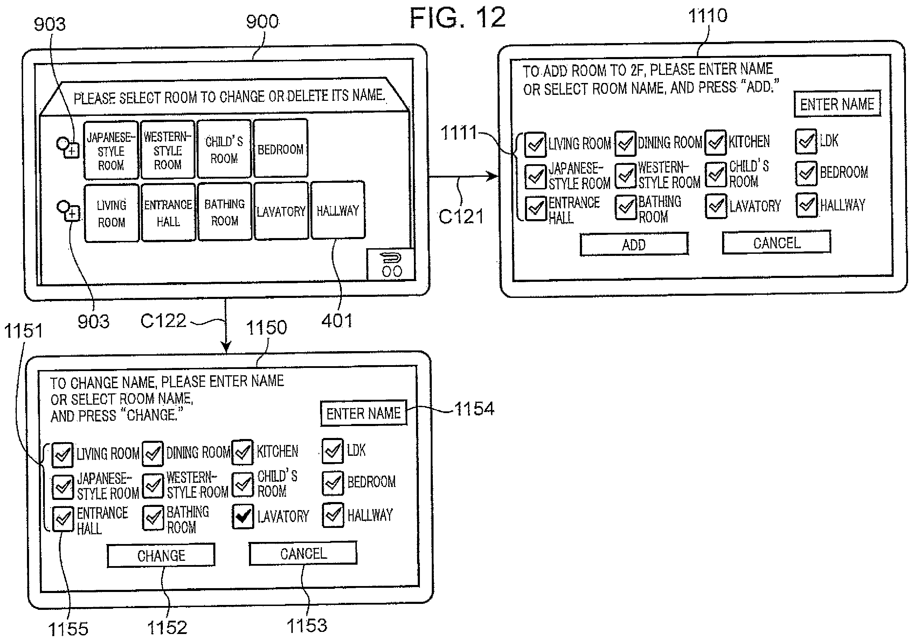

Fig. 12 is a diagram showing a second example of the transition of screens associated with the floor plan settings. The second example is the same as the first example in that the room addition screen 1110 is displayed when the Add Room button 903 on the floor plan setting screen 900 is tapped (C121). However, the second example is different from the first example in that a room name change screen 1150 (an example of the sixth display screen) is displayed directly without having the room edit screen 1120 displayed, when a room icon 401 on the floor plan setting screen 900 is tapped. The rest of the configuration of the second example is the same as the first example. Here, in order to be distinguished from the room name change screen 1130 of the first example, the room name change screen 1150 is denoted the reference numbers different from those of the room name change screen 1130; however, the content of the room name change screen 1150. is the same as that of the room name change screen 1130.

A name candidate display section 1151, a Change button 1152 (an example of the sixth instruction button), a Cancel button 1153, an Enter Name button 1154, and a checkbox 1155 of the room name change screen 1150 are the same as the screen components of the room name change screen 1130.

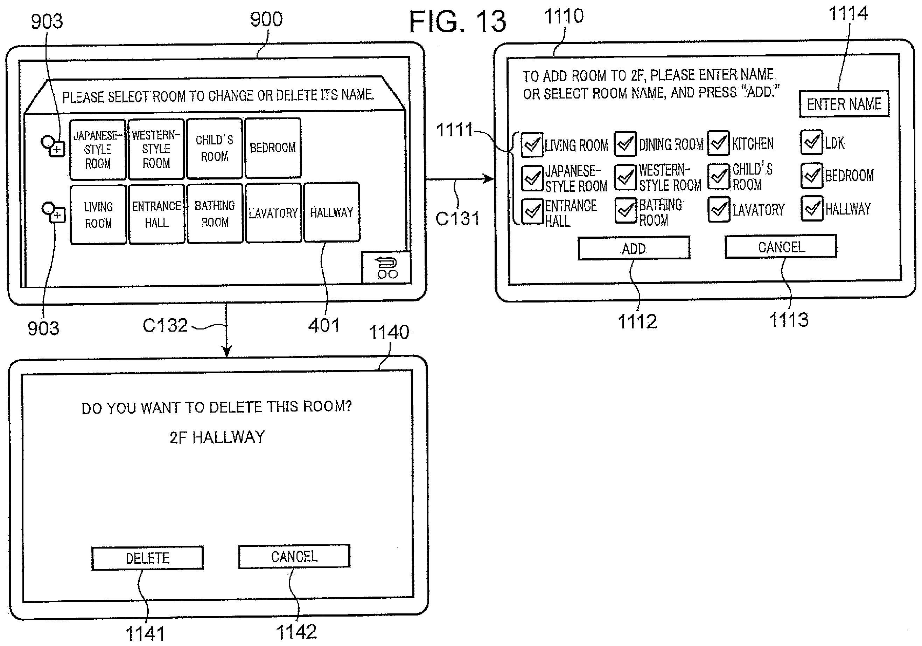

Fig. 13 is a diagram showing a third example of the transition of screens associated with the floor plan settings. The third example is the same as the first example in that the room addition screen 1110 is displayed when an Add Room button 903 on the floor plan setting screen 900 is tapped (C131). However, the third example is different from the first example in that the room deletion confirmation screen 1140 is displayed directly without having the room edit screen 1120 displayed, when a room icon 401 on the floor plan setting screen 900 is tapped (C132). The rest of the configuration of the third example is the same as the first example.

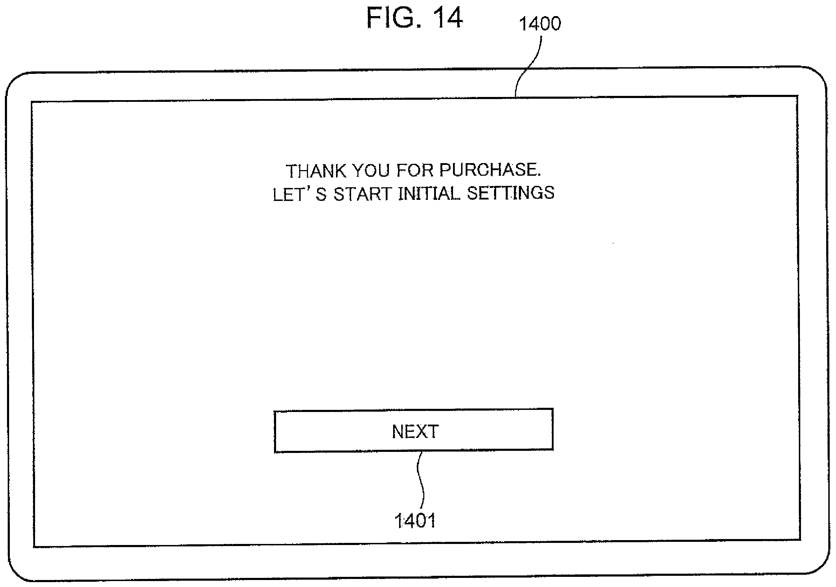

Next, initial settings of the home controller 100 of the present disclosure are described. Fig. 14 is a diagram showing an example of an initial settings starting screen 1400. This initial settings starting screen 1400 is displayed on the display 101 by the floor plan setting unit 108 when, for example, a user who purchased the home controller 100 applies power thereto for the first time or selects an initial settings button, not shown.

A phrase reading "Thank you for purchase. Let's start the initial settings" is displayed on the initial settings starting screen 1400, clearly indicating that the home controller 100 is in the initial settings mode. A Next button 1401 is displayed in the lower part of the initial settings starting screen 1400. When the user selects the Next button 1401, the floor plan setting unit 108 changes the screen displayed on the display 101 to a story number setting screen 1500.

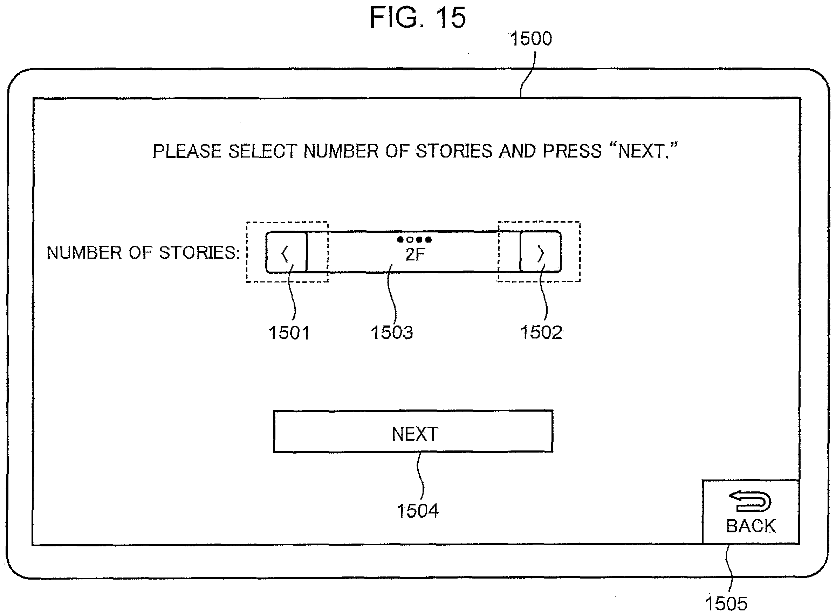

Fig. 15 is a diagram showing an example of the story number setting screen 1500. The story number setting screen 1500 is a screen for allowing the user to set the number of stories in the user's house. A phrase reading "Please select the number of stories and press "Next'"' is displayed in the upper part of the story number setting screen 1500, prompting the user to enter the number of stories. A story number display section 1503 is provided at the center of the story number setting screen 1500. A story number reducing button 1501 is provided to the left of the story number display section 1503, and a story number increasing button 1502 to the right of the story number display section 1503.

When the story number reducing button 1501 is pressed once, the floor plan setting unit 108 subtracts 1 from the number of stories displayed in the story number display section 1503. When the story number increasing button 1502 is pressed once, the floor plan setting unit 108 adds 1 to the number of stories displayed in the story number display section 1503. Note that the story number display section 1503 displays, for example, 1F by default. By pressing the story number reducing button 1501 or story number increasing button 1502, the user inputs the number of stories in the story number display section 1503 to match the number of stories in the user's house. In the example shown in Fig. 15, the story number display section 1503 displays "2F." When a Back button 1505 provided at the lower right of the story number setting screen 1500 is selected, the floor plan setting unit 108 returns, for example, the screen displayed on the display 101 to, for example, the initial settings starting screen 1400 shown in Fig. 14.

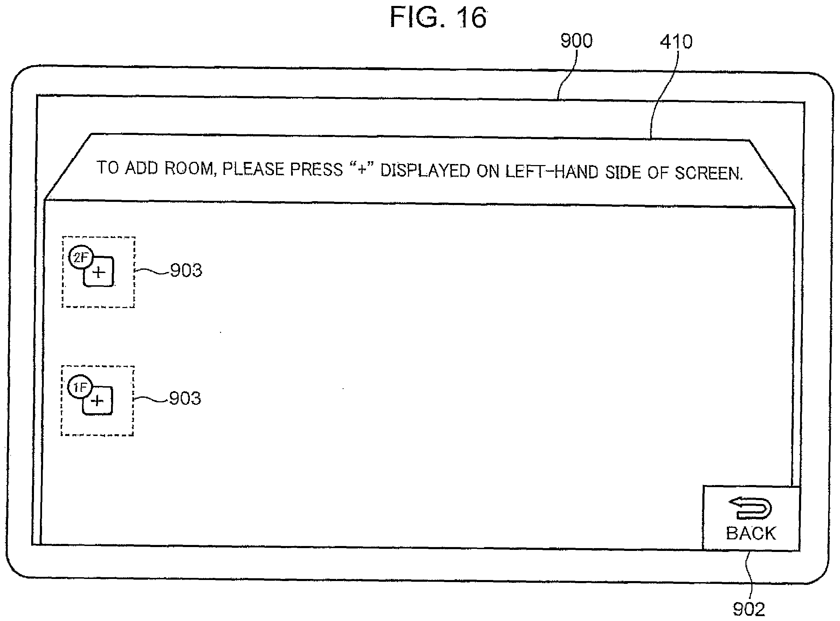

When a Next button 1504 provided below the story number setting screen 1500 is selected, the floor plan setting unit 108 changes the screen displayed on the display 101 to the floor plan setting screen 900. Fig. 16 is a diagram showing an example of the floor plan setting screen 900 in the initial state thereof

Because the room icons 401 are not disposed on the floor plan screen 400 in the initial state, no room icons 401 are disposed on the floor plan setting screen 900 either as shown in the example in Fig. 16.

Because "2F" is input to the story number display section 1503 in Fig. 15, two Add Room buttons 903 corresponding to the first and second floors are displayed in a vertical line in the floor plan 410 in the example shown in Fig. 16. Note that when "IF" is input to the story number display section 1503 in Fig. 15, the floor plan setting screen 900 displays one Add Room button 903 corresponding to the first floor, and when "3F" is input to the story number display section 1503, the floor plan setting screen 900 displays three Add Room buttons 903 corresponding to the first to third floors in a vertical line. The same applies to a house with four or more stories.

When one of the Add Room buttons 903 on the floor plan setting screen 900 of Fig. 16 is selected, the floor plan setting unit 108 changes the screen displayed on the display 101 to the room addition screen 1110. Fig. 17 is a diagram showing an example of the room addition screen 1110. A phrase reading "To add a room to 1F, please enter a name or select a room name, and press "Add"" is displayed in the upper part of the room addition screen 1110, clearly indicating that the room addition screen 1110 is the screen for adding a room to the first floor.

A list of room candidates for a room to be added to the relevant floor of the floor plan 410 is displayed in the room candidate display section 1111. In this case, a list of twelve room candidates such as a living room, a Japanese-style room, an entrance hall, a dining room, a Western-style room, a bathing room, a kitchen, a child's room, a lavatory, LDK, a bedroom, and a hallway are displayed in a matrix of 3 rows x 4 columns. Checkboxes 1115 for selecting the room candidates are displayed to the left of the positions where the names of these room candidates are displayed.

In the example shown in Fig. 17, because none of the rooms is selected by the user, checkmarks 1115M in the checkboxes 1115 are displayed in an inactive state color. An achromatic color such as black or gray can be employed as the inactive state color.

When any one of the room candidates shown in the room candidate display section 1111 is selected, the floor plan setting unit 108 displays the checkmark 1115M of the checkbox 1115 corresponding to the selected room candidate in an active state color. A chromatic color, for example, can be employed as the active state color.

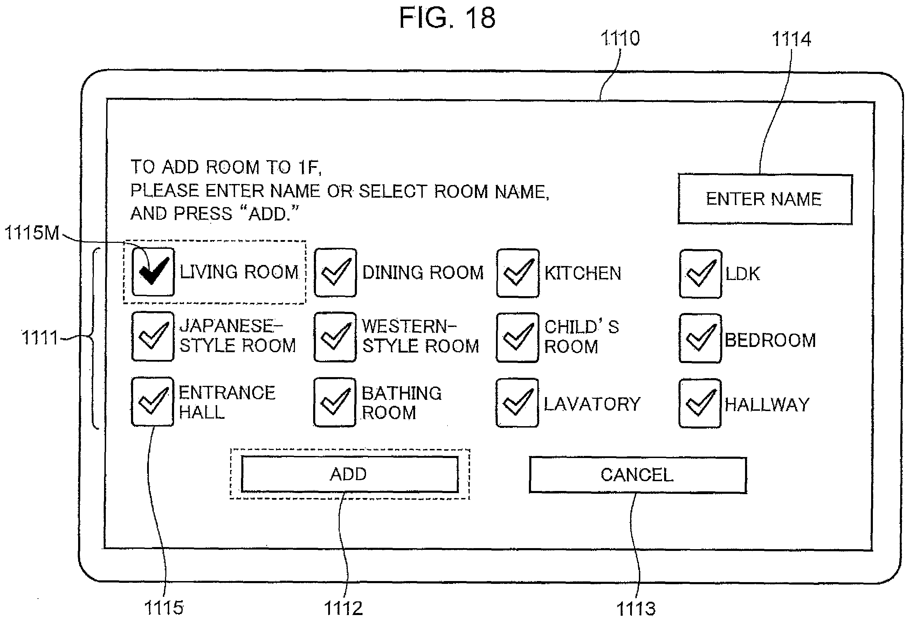

When the user selects the checkbox 1115 of the living room in the room candidate display section 1111, the flo or plan setting unit 108 displays the checkmark 1115M of the checkbox 1115 corresponding to the living room in the active state color, as shown in Fig. 18.

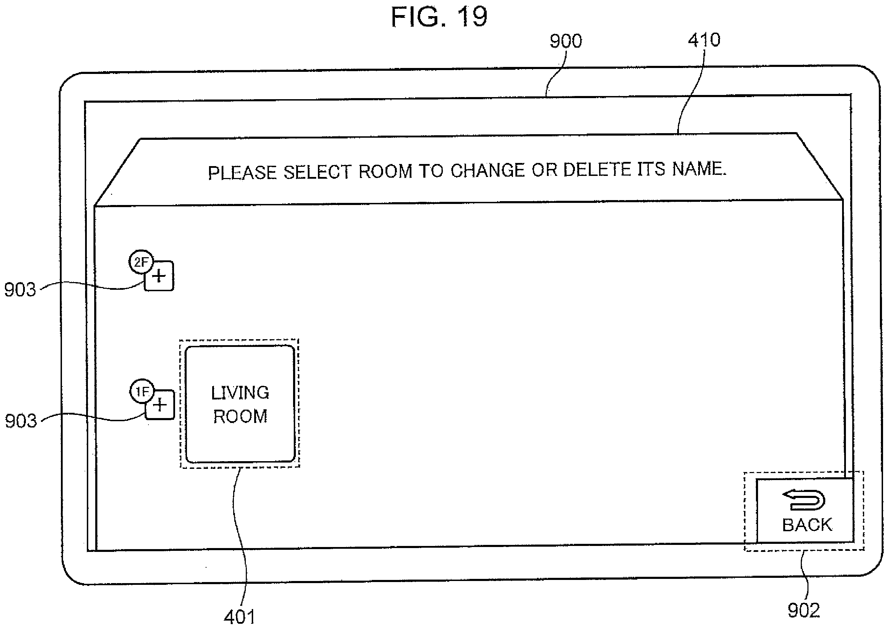

When the user selects the Add button 1112, the floor plan setting unit 108 adds the room icon. 401 for the living room to the first floor on the floor plan setting screen 900, as shown in Fig. 19. As a result, the living room is added to the first floor of the floor plan 410.

In Fig. 19, when the Add Room button 903 is selected, the floor plan setting unit 108 displays the room addition screen 1110 of Fig. 17 on the display 101 again, and waits for the user to input a room to be added next. When any one of the rooms listed as the room candidates is selected and the Add button 1112 is selected, the floor plan setting unit 108 adds the selected room to the floor plan setting screen 900. Note in Fig. 19 that when the Back button 902 is selected, the floor plan setting unit 108 changes the screen displayed on the display 101 to the floor plan screen 400.

According to the present disclosure, the operation for adding rooms as shown in Figs. 16 to 19 is repeated so that the rooms are added on the floor plan setting screen 900. In conjunction with this addition operation, the same rooms are added on the floor plan screen 400 in the manner described above.

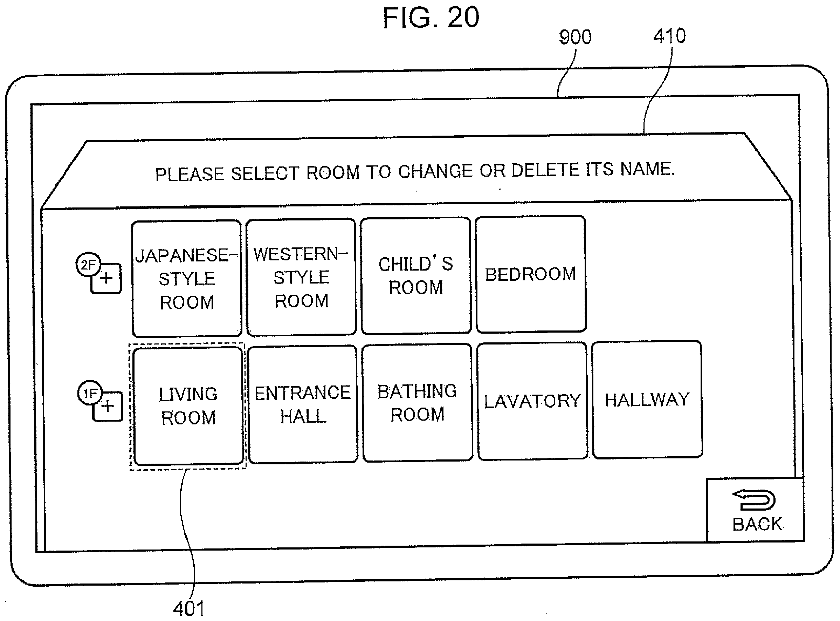

Fig. 20 is a diagram showing an example of the floor plan setting screen 900 that is displayed after a repeat of the operation for adding rooms. In the example shown in Fig. 20, because the user has repeatedly input the operation for adding the living room, entrance hall, bathing room, lavatory, and hallway to the first floor, the room icons 401 corresponding to these five rooms are displayed in a single horizontal row in the section corresponding to the first floor on the floor plan setting screen 900. Moreover, because the user has repeatedly input the operation for adding the Japanese-style room, Western-style room, child's room, and bedroom to the second floor, the room icons 401 corresponding to these four rooms are displayed in a single horizontal row in the section corresponding to the second floor on the floor plan setting screen 900.

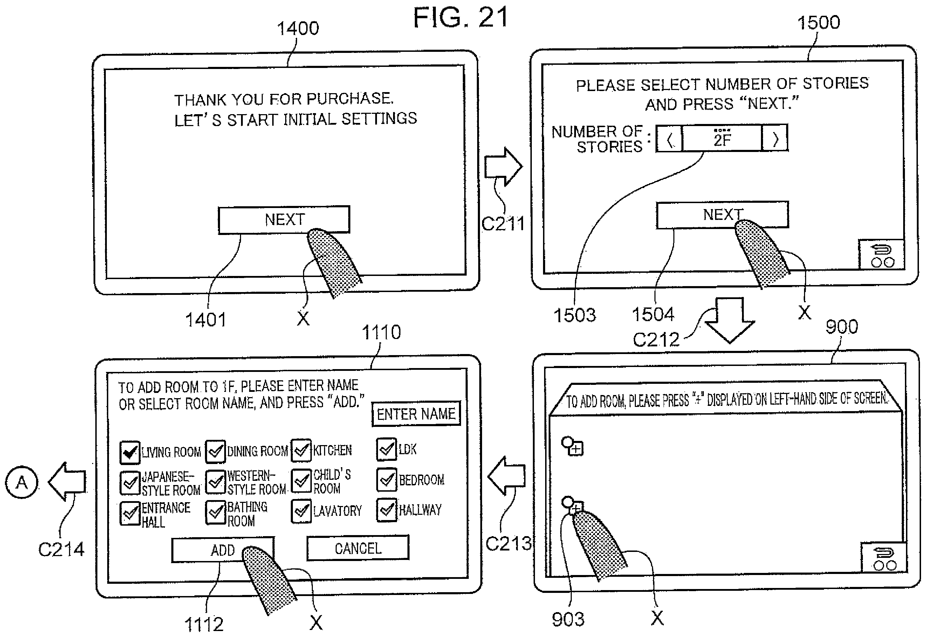

Fig. 21 is a diagram showing an example of a screen transition taking place in the initial settings. The upper left, upper right, lower right, and lower left diagrams of Fig. 21 are the same as Figs. 14, 15, 16, and 18, respectively. When it is sensed that the Next button 1401 on the initial settings starting screen 1400 is tapped by the contact object X, the floor plan setting unit 108 changes the screen displayed on the display 101 to the story number setting screen 1500 (C211).

When it is sensed that the number of stories is input to the story number display section 1503 on the story number setting screen 1500 and that the Next button 1504 is tapped by the contact object X, the floor plan setting unit 108 changes the screen displayed on the display 101 to the floor plan setting screen 900 (C212).

When it is sensed that the Add Room button 903 on the floor plan setting screen 900 is tapped by the contact object X, the floor plan setting unit 108 changes the screen displayed on the display 101 to the room addition screen 1110 (C213).

When it is sensed that the living room is selected by the user from the rooms listed as the room candidates on the room addition screen 1110 and that the Add button 1112 is tapped by the contact object X, the floor plan setting unit 108 changes the screen displayed on the display 101 to the floor plan setting screen 900 (C214).

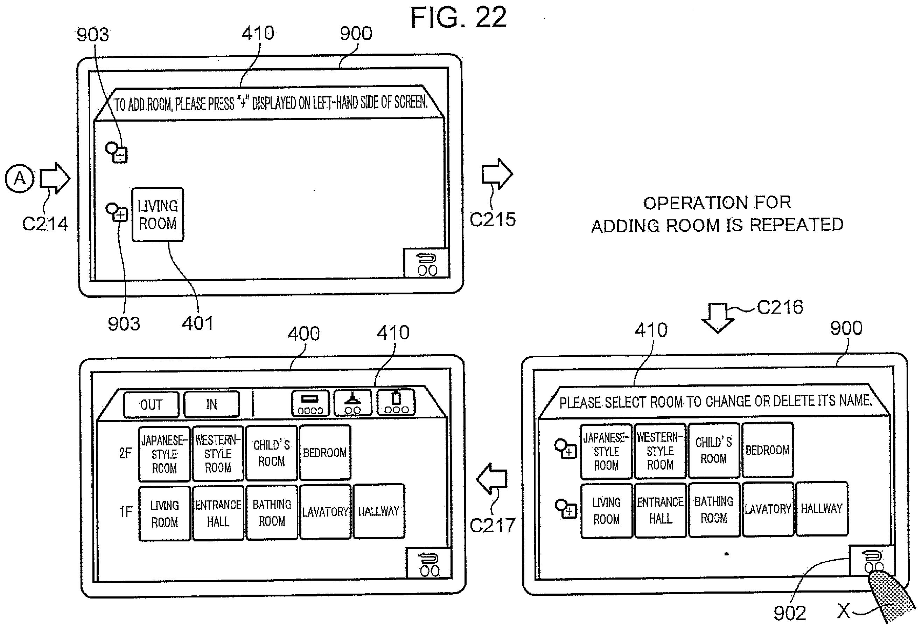

Fig. 22 is a diagram showing an example of a screen transition subsequent to the one shown in Fig. 21. The upper left, lower right, and lower left diagrams of Fig. 22 are the same as Figs. 19, 20, and 4, respectively. The riving room is added in the upper-left floor plan setting screen 900 shown in Fig. 22. Subsequently (C215), when the operation for tapping the Add Room button 903 to add a room is repeatedly executed, the floor plan setting unit 108 adds the selected rooms to the floor plan setting screen 900 in response to the repeated operation.

When it is sensed that the operation for adding rooms to the floor plan setting screen 900 is ended (C216) and that the Back button 902 is tapped by the contact object X, the floor plan setting unit 108 changes the screen displayed on the display 101 to the floor plan screen 400 (C217).

As a result, the floor plan 410 is generated. In the present disclosure, the floor plan 410 that shows the rooms of the house using the room icons 401 is employed. The user, therefore, can generate the floor plan 410 by repeating the operation for adding the room icons 401 one by one to the floor plan 410. In this manner, the floor plan 410 corresponding to the floor plan of the house can easily be created.

In addition, the room icons 401 can be added to the floor plan 410 simply by inputting the operation for selecting a desired room from the list of room candidates displayed on the room addition screen 1110. This can save the user the trouble of inputting the operation for setting names of the room icons 401.

Furthermore, as shown in Fig. 11, the same screen configuration is employed in the room addition screen 1110 and the room name change screen 1130, In other words, the room candidate display section 1111 displayed on the room addition screen 1110 is identical to the name candidate display section 1131 displayed on the room name change screen 1130 in display position, size, and shape. In addition, the order in which the room candidates are arranged in the room candidate display section 1111 is the same as the order in which the room name candidates are arranged in the name candidate display section 1131.

The Enter Name button 1114 and Cancel button 1113 displayed on the room addition screen 1110 are identical to the Enter Name button 1134 and Cancel button 1133 displayed on the room name change screen 1130 in display position, size, and dimension. Moreover, although different in function, the Add button 1112 displayed on the room addition screen 1110 is identical to the Change button 1132 displayed on the room name change screen 1130 in display position, size, and dimension.

Therefore, most of the screen configuration of the room addition screen 1110 and most of the screen configuration of the room name change screen 1130 can be shared, displaying the configurations of the both screens in a simple structure. As a result, the input method for one of the screens can be applied to the other screen by analogy, which can not only be convenient for the user, but also prevent the execution of wrong operations by the user and avoid a situation where the number of process steps carelessly. The same applies to the room addition screen 1110 and room name change screen 1150 shown in Fig. 12.

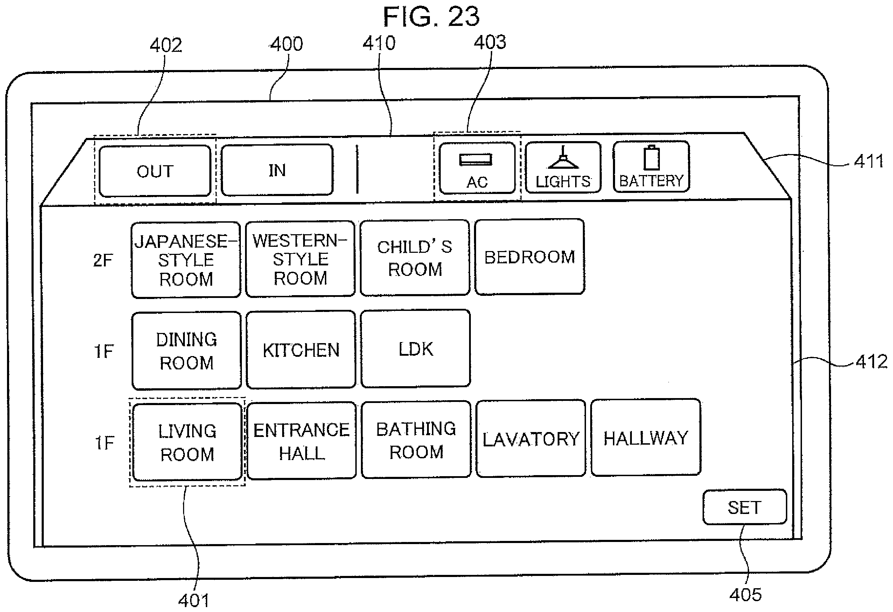

A first variation of the floor plan 410 is described next. The first variation of the floor plan 410 is described below using the floor plan screen 400. Fig. 23 is a diagram showing an example of the first variation of the floor plan 410. The first variation is characterized in displaying two or more rows of room icons 401 when the number of room icons 401 in a single floor increases and one row is not enough to display these room icons 401.

In the floor plan 410 shown in Fig. 23, the size of the room icons 401 and the size of the floor plan 410 are set so that a maximum of five room icons 401 can be displayed in a single row. However, some houses have six or more rooms on a single floor. The floor plan setting unit 108, therefore, displays the room icons of a single floor by using two rows when the number of room icons 401 of the single floor exceeds the maximum number of room icons per floor. The same applies to the floor plan 410 on the floor plan setting screen 900.

The example in Fig. 23 shows the floor plan 410 of a house having eight rooms on the first floor: the living room, entrance hall, bathing room, lavatory, hallway, dining room, kitchen, and LDK. The room icons 401 for these eight rooms cannot be displayed in a single row. The floor plan setting unit 108, therefore, displays the room icons 401 for the living room, entrance hall, bathing room, lavatory, and hallway in the bottom row of display level in a row and display the room icons 401 for the dining room, kitchen and LDK in the second row of display level from below.

In Fig. 23, the order in which the user adds the room icons 401 is executed is employed as the order, for example, in which the room icons 401 are arranged in a single floor in a row. For instance, in the example shown in Fig. 23, the five rooms are added in order of the living room, the entrance hall, ... the hallway. Therefore, starting from the left, the five room icons 401 corresponding to the living room to the hallway are displayed in the lowest row of display level. Up to this stage, the floor plan setting unit 108 displays the room icons 401 of the first floor in a single row of display level. Then, when the number of room icons 401 to be added becomes six or more in the first floor, the floor plan setting unit 108 adds one row of display level for the first floor to the lowest row of display level. In this case, because the room icon 401 corresponding to the dining room is added as the sixth room, the room icon 401 for the dining room is displayed in the first column of the added display level. The room icons 401 for the kitchen and LDK that are added as the seventh and subsequent rooms are displayed in the second and third columns of the added display level.

In the first variation described above, even when the number of rooms on the first floor of the house is greater than the number of rooms that can be displayed in a single row of display level, all the rooms can be displayed in the floor plan 410 by providing a plurality of row of display levels for the room icons 401 corresponding to the relevant floor.

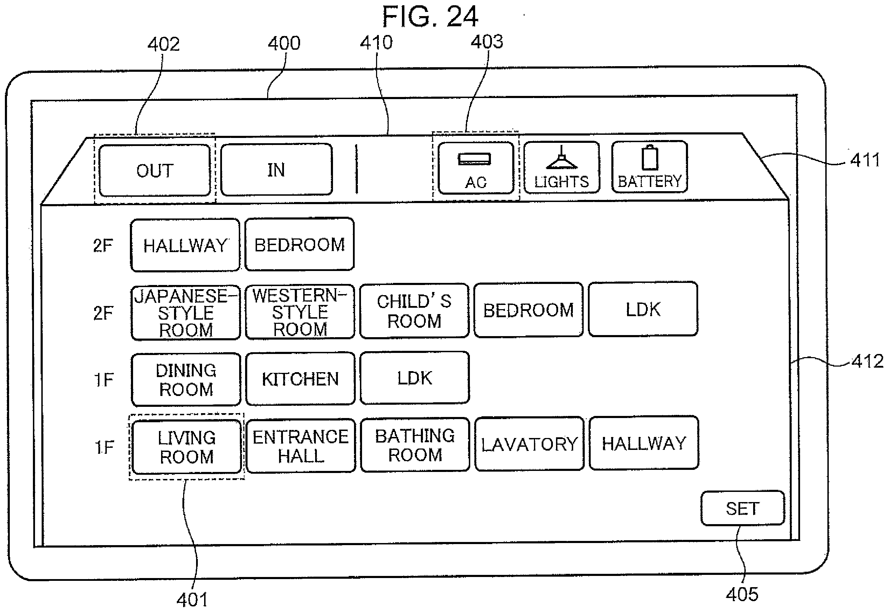

Fig. 24 is a diagram showing another example of the first variation of the floor plan 410. Fig. 24 shows the floor plan 410 of a house that has five or more rooms on the first floor and the second floor. Thus, in Fig, 24, the second floor consists of two rows of display levels for the room icons 401.

Specifically, five room icons 401 for the Japanese-style room to LDK that are added as the first to fifth rooms to the second floor are displayed on the second display level from top. When the sixth and subsequent rooms are added to the second floor, the floor plan setting unit 108 adds one row of display level for the second floor as the top row, and displays the room icons 401 for the hallway and bedroom that are added as the sixth and subsequent rooms in this display level.

In the first variation, as described above, all the rooms of a house can be displayed on the floor plan 410 even when the house has a floor plan in which the number of a plurality of floors exceeds the number of rooms that can be displayed in a single row of display level.

Note that Figs. 23 and 24 each show a floor plan of a two-story house; however, when the house has three or more stories and the room icons 401 for a specific floor of the house cannot be displayed in a single row of display level, one row of display level to display the specific floor may be added. Moreover, in the case where the rooms of the specific floor cannot be displayed using two rows of display levels, the floor plan setting unit 108 may add the third display level.

It is assumed that the number of display levels increases in the floor plan 410 and all the display levels could not be displayed on the display 101. In this case, the floor plan setting unit 108, for example, displays a scroll button for scrolling the floor plan 410 up and down, to allow the floor plan 410 to be scrolled upward or downward so that the hidden display levels can be displayed in the display area 412 in response to the operation of the scroll button.

A second variation of the floor plan 410 is described next. The second variation of the floor plan 410 is described using the floor plan setting screen 900. The second variation of the floor plan 410 is characterized in that, when the number of rooms on a certain floor exceeds the maximum number of rooms that can be displayed in a single row of display level, the rooms that could not be displayed are displayed on a different page.

Fig. 25 is a diagram showing an example of the second variation of the floor plan 410. Fig. 25 shows the floor plan 410 of a four-story house. In this example, the room icons 401 can be displayed in a maximum of four rows of display levels per screen, and a maximum of five room icons 401 can be displayed per row of display level.

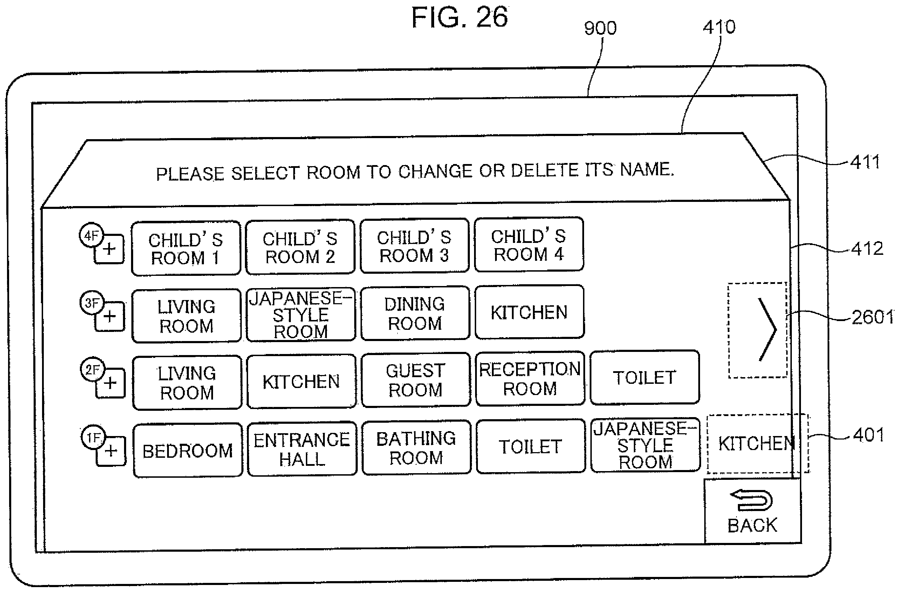

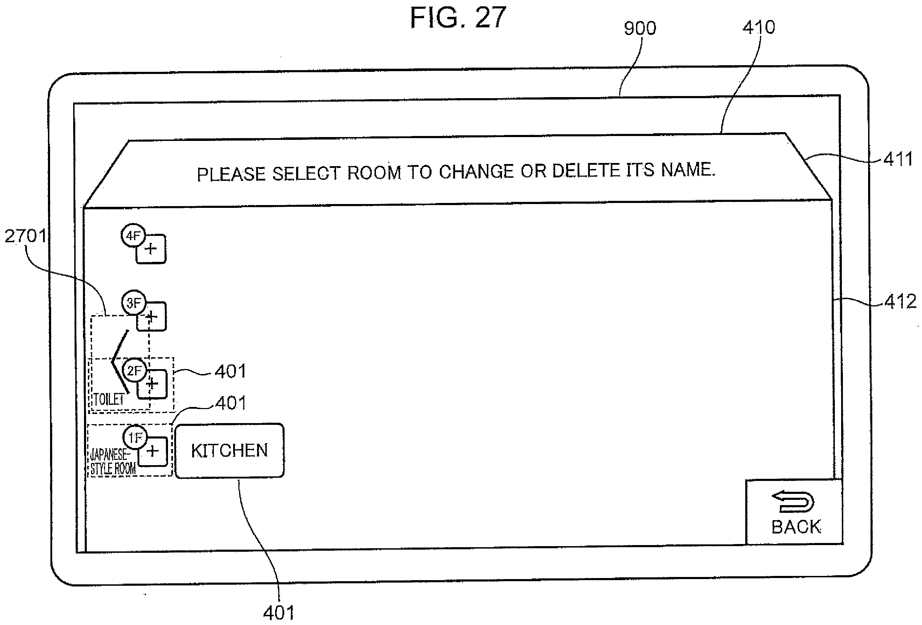

In this state, suppose that one of the Add Room buttons 903 is selected and consequently a room icon 401 for the kitchen is added to 1F. Consequently, the floor plan setting unit 108 displays the floor plan setting screen 900 on a plurality of pages. Fig. 26 is a diagram showing the floor plan setting screen 900 on the first page. Fig. 27 is a diagram showing the floor plan setting screen 900 on the second page.

As shown in Fig. 26, the floor plan setting screen 900 on the first page shows a next page display button 2601 for changing the displayed screen to the floor plan setting screen 900 of the second page, the next page display button 2601 having a right arrow and being located at the center on the right edge of the display area 412. The right edge of the floor plan 410 on the first page also shows part of a semitransparent room icon 401 that is included in the floor plan setting screen 900 on the second page.

The room icon 401 displayed in the first column of the display level corresponding to the floor plan setting screen 900 on the second page, for example, is employed as the semitransparent room icon 401.

In the floor plan setting screen 900 on the second page shown in Fig. 27, the room icon 401 for the kitchen is displayed in the first column of the display level corresponding to the first floor. In the example shown in Fig. 26, therefore, the semitransparent room icon 401 for the kitchen is displayed to the right of the room icon 401 for the Japanese-style room which is displayed in the fifth column of the display level corresponding to the first floor. In the floor plan setting screen 900 on the second page shown in Fig. 27, on the other hand, no room icons 401 are displayed in the display levels corresponding to the second to fourth floors. This is why the display levels corresponding to the second to fourth floors in the example shown in Fig. 26 do not display any room icons 401 in a semitransparent form.

In this manner, the user viewing the floor plan setting screen 900 on the first page can be informed of the presence of the floor plan setting screen 900 of the second page.

The floor plan setting screen 900 of the second page shown in Fig. 27 shows a previous page display button 2701 for changing the displayed screen to the floor plan setting screen 900 of the first page, the previous page display button 2701 having a left arrow and being located at the center on the left edge of the display area 412. The left edge of the floor plan 410 on the second page also shows part of a semitransparent room icon 401 that is included in the floor plan setting screen on the first page.

In the floor plan setting screen 900 on the first page shown in Fig. 26, the room icon 401 for the Japanese-style room is displayed in the fifth column of the display level corresponding to the first floor. In the example shown in Fig. 27, therefore, the semitransparent room icon 401 for the Japanese-style room is displayed to the left of the room icon 401 corresponding to the kitchen which is displayed in the first column of the display level corresponding to the first floor. Moreover, in the floor plan setting screen 900 on the first page shown in Fig. 26, the room icon 401 for the toilet is displayed in the fifth column of the second floor. For this reason, in the example shown in Fig. 27, the room icon 401 for the toilet is displayed in a semitransparent form to the left of the first column of the display level corresponding to the second floor.

In the floor plan setting screen 900 on the first page shown in Fig. 26, the fifth columns of the display levels corresponding to the third and fourth floors do not display any room icons 401. This is why the display levels corresponding to the third and fourth floors in the example shown in Fig. 27 do not display any room icons 401 in a semitransparent form.

In this manner, the user viewing the floor plan setting screen 900 on the second page can be informed of the presence of the floor plan setting screen 900 of the first page.

According to the second variation described above, even when the number of rooms on the first floor of the house exceeds the number of rooms that can be displayed in a single row of display level, all the rooms can be displayed on the floor plan setting screens 900 by providing the floor plan setting screen 900 of the second page.

Figs. 26 and 27 show the floor plans of a four-story house; however, in the case where the room icons 401 for a specific floor of a house with five or more stories or three stories or less cannot be displayed in a single row of display level, the room icons 401 that could not be displayed can be displayed on the floor plan setting screen 900 of the second page.

In addition, when the room icons 401 for the specific floor cannot be displayed in a single row of display level in the floor plan setting screen 900 of the second page, the room icons 401 that could not be displayed may be displayed on the floor plan setting screen 900 on a third page. In other words, the floor plan setting unit 108 prepares a certain number of pages of the floor plan setting screens 900 depending on the number of room icons 401 on a specific floor.

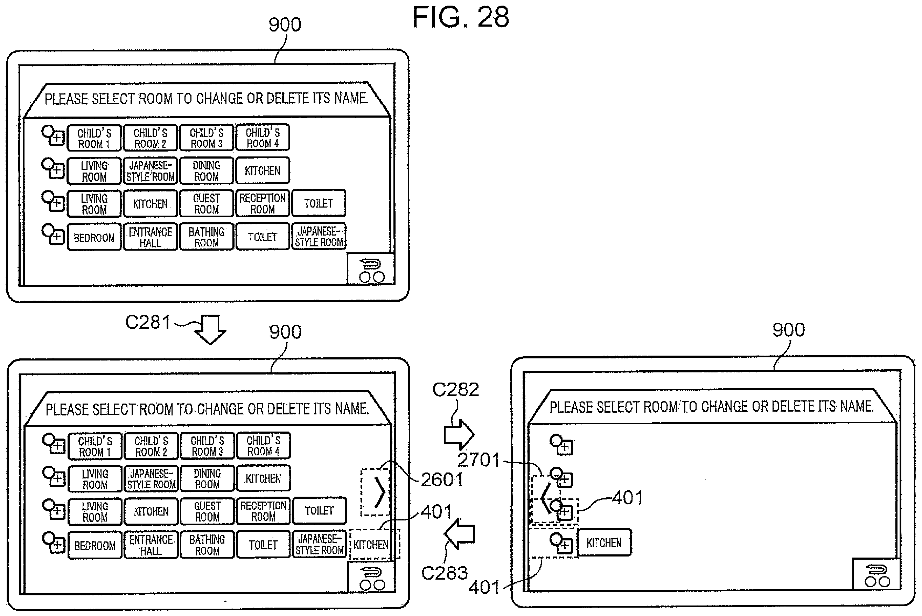

Fig. 28 is a diagram showing an example of a screen transition among the floor plan setting screens shown in Figs. 25 to 27. The upper left, lower right, and lower left diagrams of Fig. 28 are the same as Figs. 25, 27, and 26, respectively. Suppose that the Add Room button 903 of the first floor on the floor plan setting screen 900 shown in the upper left diagram of Fig. 28 is tapped arid consequently the room icon 401 for the kitchen is added. Subsequently, the floor plan setting unit 108 displays the room icon 401 for the kitchen in a semitransparent form to the right of the fifth column of the first floor shown on the floor plan setting screen 900 on the first page (C281).

When it is sensed that the next page display button 2601 on the floor plan setting screen 900 of the lower left diagram is tapped, the floor plan setting unit 108 changes the screen displayed on the display 101 to the floor plan setting screen 900 of the second page (C282).

On the floor plan setting screen 900 on the second page, the room icons 401 for the toilet and the Japanese-style room are displayed in a semitransparent form to the left of the first columns of the display levels corresponding to the first and second floors. When it is sensed that the previous page display button 2701 on the floor plan setting screen 900 on the second page is tapped, the floor plan setting unit 108 changes the screen displayed on the display 101 to the floor plan setting screen 900 of the first page (C283).

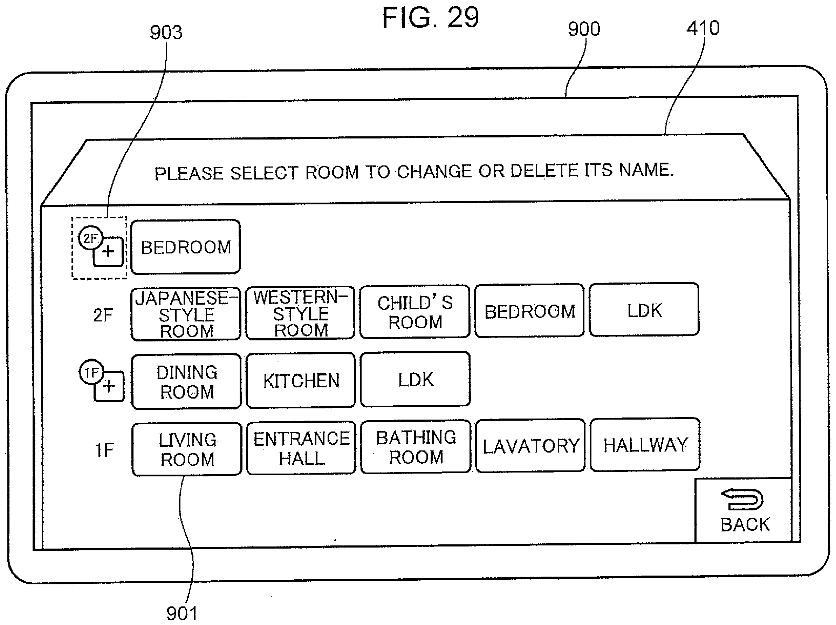

Addition of room icons 401 and changing the names of the room icons 401 are now described. Fig. 29 is a diagram showing an example of the floor plan setting screen 900 that is displayed immediately before a new room icon 401 is added. In Fig. 29, suppose that the user selects the Add Room button 903 of the second floor. Consequently, the floor plan setting unit 108 displays, on the display 101, the room addition screen 1110 for adding a room to the second floor displayed on the floor plan setting screen 900.

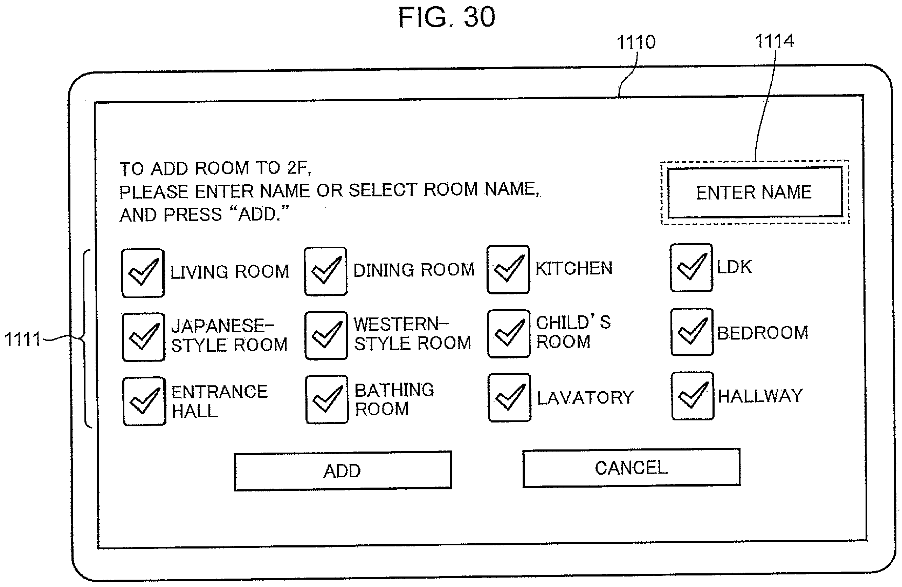

Fig. 30 is a diagram showing an example of the room addition screen 1110. When a room is selected from the rooms listed as the room candidates in the room candidate display section 1111, the floor plan setting unit 108 adds the room icon 401 for the selected room to the second floor on the floor plan setting screen 900. Thus, when the room candidates listed in the room candidate display section 1111 include the relevant room, the user can add the room to the floor plan 410 simply by selecting the room from the room candidates. The room addition screen 1110 therefore has the advantage that the task of adding rooms to the floor plan 410 can easily be executed.

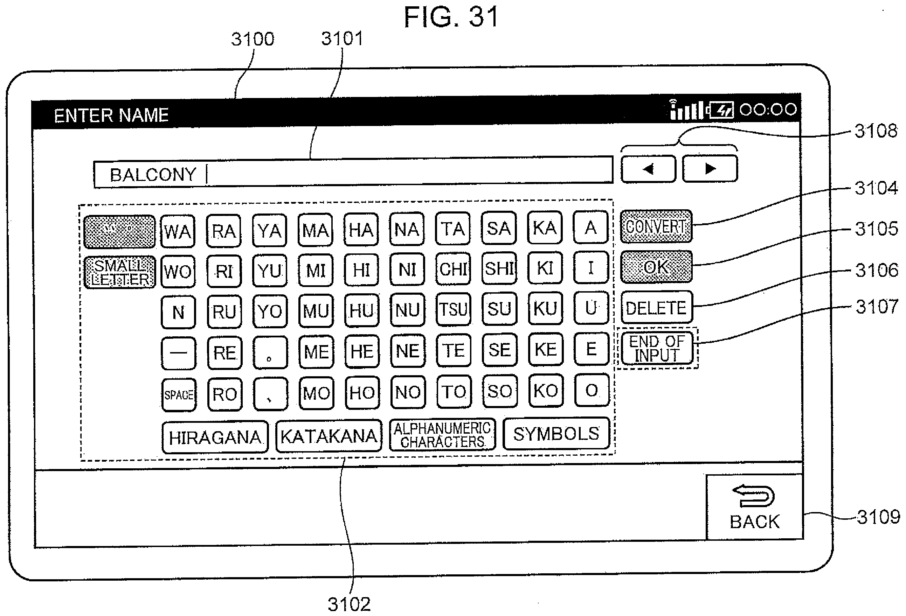

It should be noted that the rooms with such typical room names as "living room" and "dining room" are listed in the room candidate display section 1111. Depending on the dwelling of the user, therefore, the room candidate display section 1111 might not display anyrooms having the relevant room names. Also, the user might wish to personalize his/her rooms such as "dad's room" and "grandma's room" instead of using the typical room names. In the present disclosure, therefore, a room name input screen 3100 (Fig. 31) is provided to allow the user to set any desired names for the rooms to be added to the floor plan 410.

When the Enter Name button 1114 on the room addition screen 1110 shown in Fig. 30 is selected by the user, the floor plan setting unit 108 displays the room name input screen 3100.

Fig. 31 is a diagram showing an example of the room name input screen 3100. The room name input screen 3100 is displayed when the user changes the name of a room to a desired name. The upper part of the room name input screen 3100 is provided with a strip-shaped input section 3101.

A software keyboard 3102 is displayed below the input section 3101. The hiragana characters, for example, are arranged in order in the software keyboard 3102. A text that is input through the software keyboard 3102 by the user is displayed in the input section 3101. In the example shown in Fig. 31, characters that read "balcony" are input, displaying "balcony" in the input section 3101. Below the software keyboard 3102 are a horizontal row of buttons such as "kana" for the hiragana, "kana" for the katakana, the "alphanumeric characters," and "symbols." When the "kana" button for the hiragana is selected, the software keyboard 3102 with the hiragana characters is displayed as shown in Fig. 31. When the "kana" button for the katakana is selected, the software keyboard 3102 with the katakana characters is displayed on the display 101. When the "alphanumeric characters" button is selected, the software keyboard 3102 with numbers and alphabets is displayed. When the "symbols" button is selected, the software keyboard 3102 with pictographs, Greek characters and the like is displayed.

A column including a Convert button 3104, an OK button 3105, a Delete button 3106, and an End of Input button 3107 is located to the right of the software keyboard 3102. The Convert button 3104 is a button for converting the hiragana or katakana characters input by the user into Chinese characters. The OK button 3105 is a button for confirming one Chinese character among Chinese character conversion candidates that are displayed on the display 101 when the Convert button 3104 is selected. With this OK button 3105, part or all of the hiragana or katakana characters displayed in the input section 3101 is converted into the confirmed Chinese character. The Delete button 3106 is a button for deleting the characters displayed in the input section 3101. The End of Input button 3107 is a button for finishing entry of a name using the room name input screen 3100.

A pair of cursor keys 3108 with left and right arrows is displayed to the right of the input section 3101. When the cursor key 3108 with the left arrow is selected once, the cursor displayed in the input section 3101 is shifted to the left by one character. When the cursor key 3108 with the right arrow is selected once, the same cursor is shifted to the right by one character. A Back button 3109 is a button for changing the screen displayed on the display 101 to the floor plan screen 400.

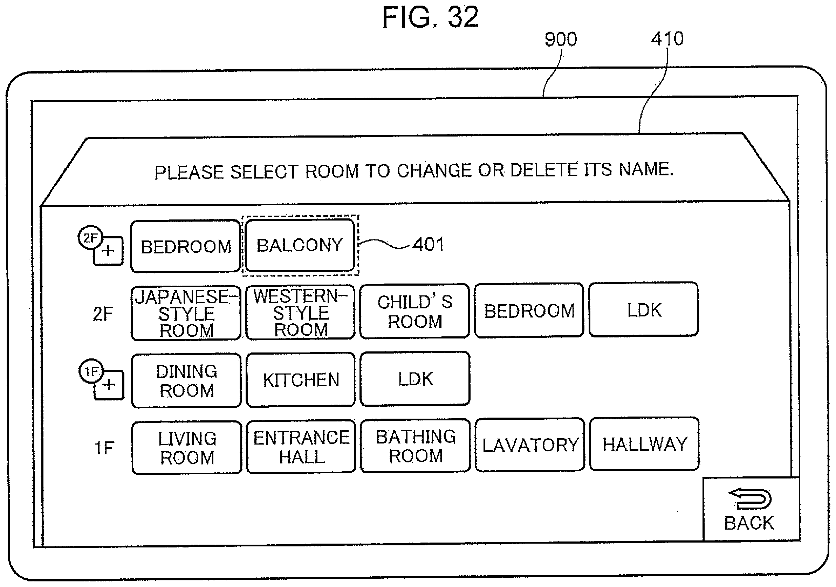

Once entry of a room name is ended and the End of Input button 3.107 is selected, the floor plan setting unit 108 displays the floor plan setting screen 900 to which the room icon 401 with the entered room name is added. Fig. 32 is a diagram showing an example of the floor plan setting screen 900 that is displayed immediately after a room icon 401 is added.

As shown in Fig. 32, the room icon 401 for "balcony," which is input in Fig. 31, is added to the side of the room icon 401 for the bedroom in the display section of the second floor.

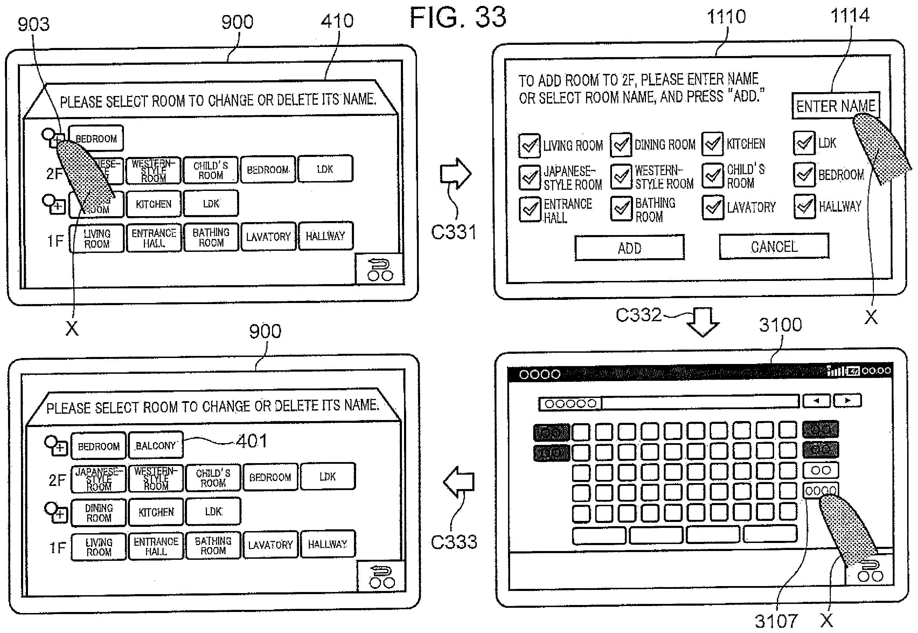

Fig. 33 is a diagram showing an example of a screen transition that takes place when a room is added to the floor plan 410 by entering a room name. The upper left, upper right, lower right, and lower left diagrams of Fig. 33 are the same as Figs. 29, 30, 31, and 32, respectively. When it is sensed that one of the Add Room buttons 903 on the floor plan setting screen 900 of the upper left diagram is tapped by the contact object X, the floor plan setting unit 108 changes the screen displayed on the display 101 to the room addition screen 1110 (C331).

When it is sensed that the Enter Name button 1114 on the room addition screen 1110 is tapped by the contact object X, the floor plan setting unit 108 changes the screen displayed on the display 101 to the room name input screen 3100 (S332).

When it is sensed that the End of Input button 3107 on the room name input screen 3100 is tapped by the contact object X after the input of a room name is received, the floor plan setting unit 108 changes the screen displayed on the display 101 to the floor plan setting screen 900 (C333). On the floor plan setting screen 900 of the lower left diagram, the room icon 401 for the balcony, which is input using the room name input screen 3100 of the lower right diagram, is added.

According to the present disclosure, as described above, changing a room name and adding a room icon 401 to the floor plan 410 can be executed in the same phase.

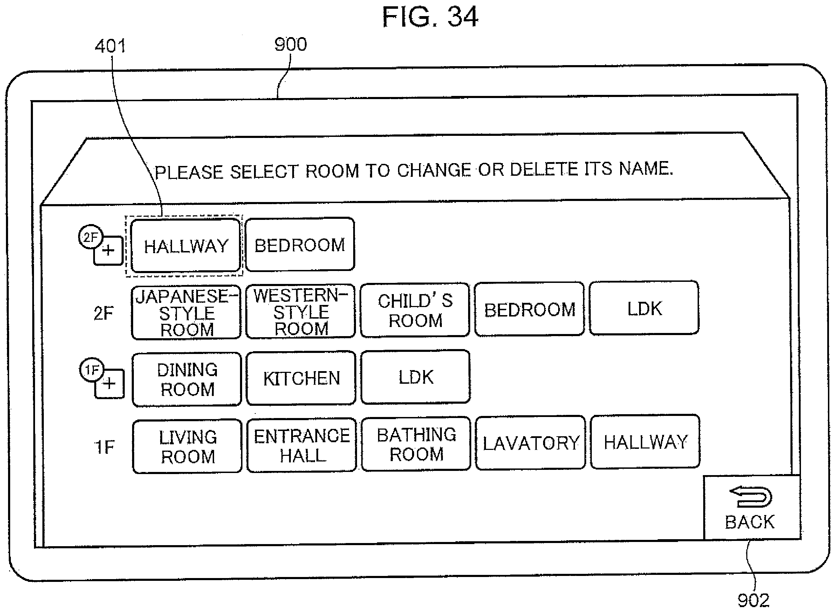

How the room name corresponding to the once-added room icon 401 is changed is now described. When the user who wishes to change a room name selects the Set button 405 on the floor plan screen 400, the floor plan setting unit 108 displays the floor plan setting screen 900 of Fig. 34 on the display 101. Fig. 34 is a diagram showing an example of the floor plan setting screen 900 that is displayed immediately before a room name is changed. Here, an example of changing the room name of the room icon 401 for the hallway on the second floor is explained.

When the room icon 401 for the hallway is selected on this floor plan setting screen 900, the floor plan setting unit 108 changes the screen displayed on the display 101 to the room edit screen 1120.

Fig. 35 is a diagram showing an example of the room edit screen 1120. Because the hallway on the second floor is selected, the room edit screen 1120 displays a phrase that reads "Please select the operation you would like to do on this room. 2F Hallway," clearly letting the user know that the room icon 401 for the hallway on the second floor is about to be edited.

When the user selects the Change Name button 1121, the floor plan setting unit 108 changes the screen displayed on the display 101 to the room name change screen 1130 (Fig. 36). Fig. 36 is a diagram showing an example of the room name change screen 1130 on which none of the room names is selected by the user.

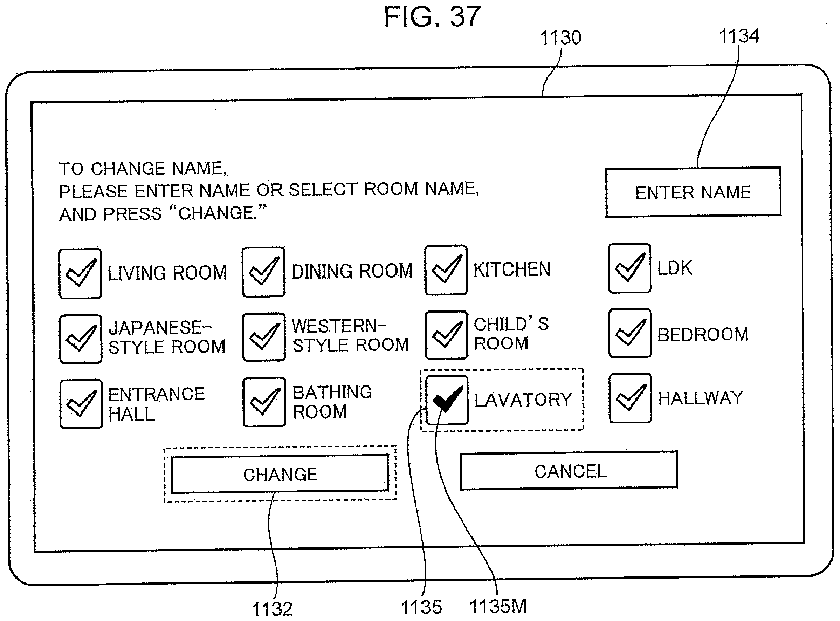

Because none of the room names is selected by the user in the example shown in Fig. 36, the checkmarks 1135M of all the checkboxes 1135 are displayed in the inactive state color. Suppose that the user selects, for example, the lavatory on this room name change screen 1130. The floor plan setting unit 108 then displays, on the display 101, the room name change screen 1130 showing that the lavatory is selected (Fig. 37).

Fig. 37 is a diagram showing an example of the room name change screen 1130 on which a room name is selected. As shown in Fig. 37, because the lavatory is selected as a room name by the user, the checkmark 1135M of the checkbox 1135 corresponding to the lavatory is displayed in the active state color.

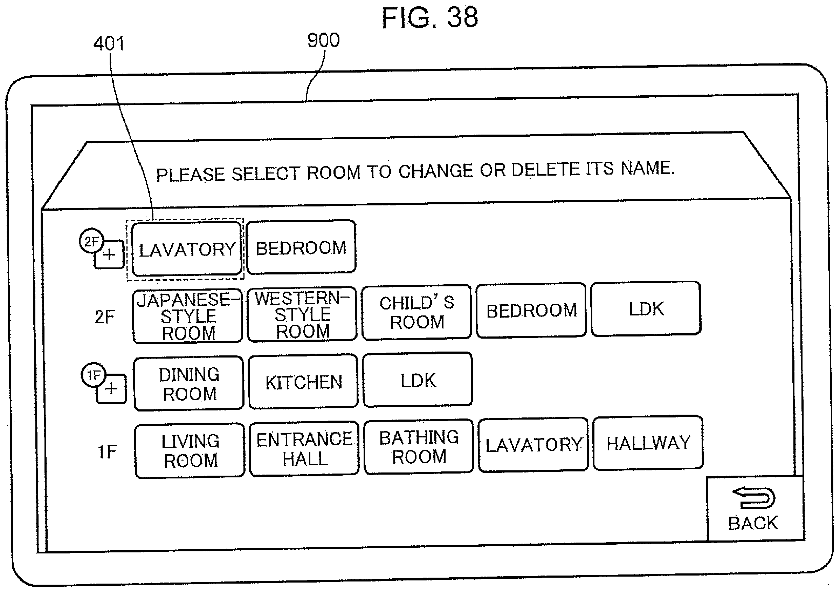

In this state, when the user selects the Change button 1132, the floor plan setting unit 108 changes the screen displayed on the display 101 to the floor plan setting screen 900 which reflects the change of the room name. Fig. 38 is a diagram showing an example of the floor plan setting screen 900 that is displayed after the room name is changed. As shown in Fig. 38, the room name of the room icon 401 in the first column of the second floor is changed from "hallway" to "lavatory."

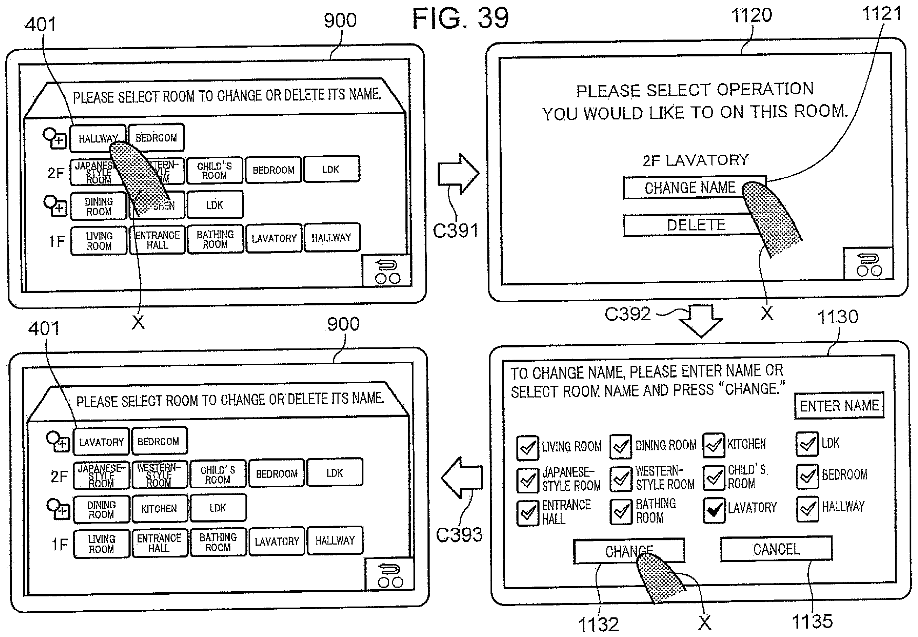

Fig. 39 is a diagram showing an example of a screen transition that takes place when changing a room name. The upper left, upper right, lower right, and lower left diagrams of Fig. 39 are the same as Figs. 34, 35, 37, and 38, respectively.

When it is sensed that the room icon 401 for the hallway on the second floor shown in the floor plan setting screen 900 of the upper left diagram of Fig. 39 is tapped by the contact object X, the floor plan setting unit 108 changes the screen displayed on the display 101 to the room edit screen 1120 (C391). When it is sensed that the Change Name button 1121 on the room edit screen 1120 is tapped by the contact object X, the floor plan setting unit 108 changes the screen displayed on the display 101 to the room name change screen 1130 (C392).

When it is sensed that the Change button 1132 on the room name change screen 1130 is tapped by the contact object X after the lavatory is selected as the room name to be changed, the floor plan setting unit 108 changes the screen displayed on the display 101 to the floor plan setting screen 900 that reflects the change of the room name (C393).

According to the present disclosure, as described above, the room names can be changed after the rooms are added to the floor plan 410. Therefore, for example, even when the user adds a wrong room icon 401, the room name of the room icon 401 can be corrected.

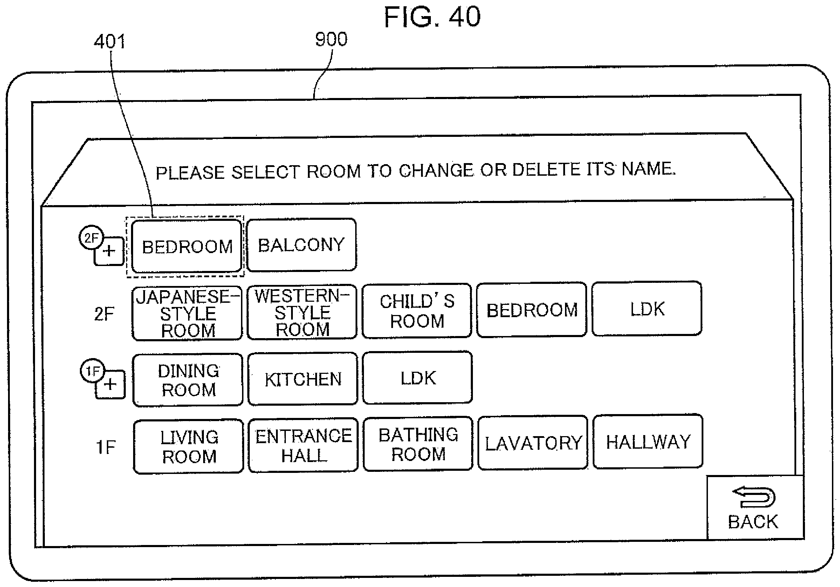

Next, how the room names are changed through the use of the room name input screen 3100 is described. First, when the user who wishes to change a room name selects the Set button 405 on the floor plan screen 400, the floor plan setting unit 108 displays the floor plan setting screen 900 of Fig. 40 on the display 101. Fig. 40 is a diagram showing an example of the floor plan setting screen 900 that is displayed immediately before a room name is changed. Here, an example of changing the room name of the room icon 401 for the bedroom on the second floor is explained.

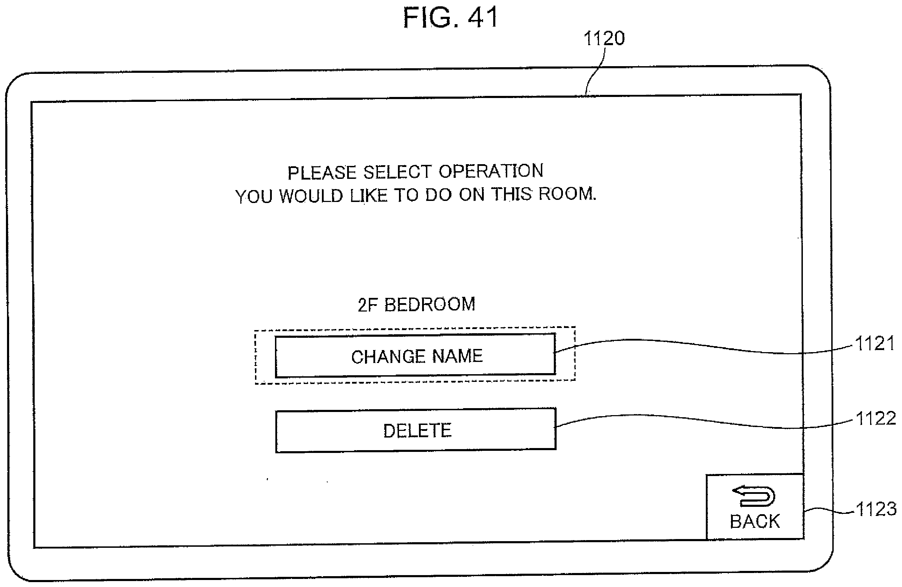

When the room icon 401 for the bedroom on 2F is selected on this floor plan setting screen 900, the floor plan setting unit 108 changes the screen displayed on the display 101 to the room edit screen 1120 (Fig. 41).

Fig. 41 is a diagram showing an example of the room edit screen 1120. Because the bedroom on the second floor is selected, the room edit screen 1120 displays a phrase that reads "Please select the operation you would like to do on this room. 2F Bedroom," clearly letting the user know that the room icon 401 for the bedroom on the second floor is about to be edited.

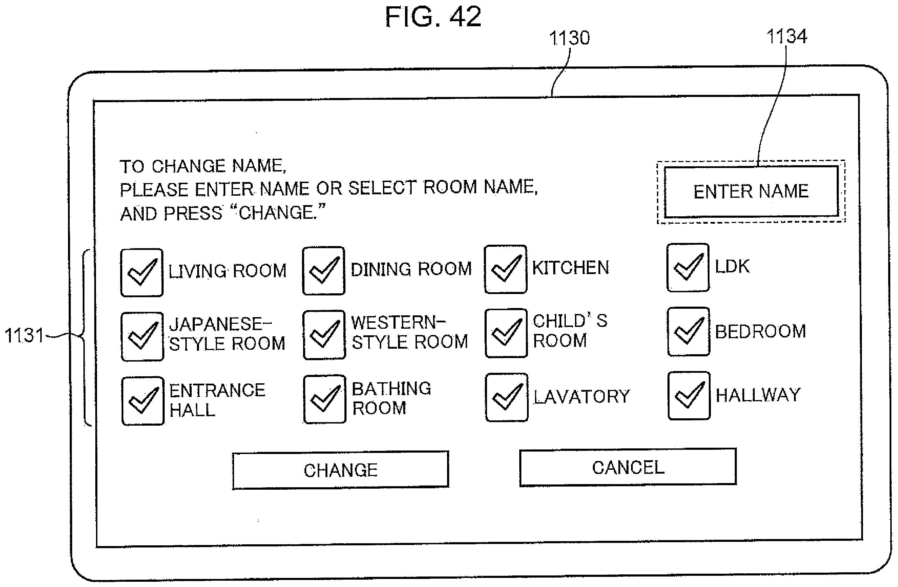

When the user selects the Change Name button 1121, the floor plan setting unit 108 changes the screen displayed on the display 101 to the room name change screen 1130 (Fig. 42). Fig. 42 is a diagram showing an example of the room name change screen 1130 on which none of the room names is selected by the user. The details of Fig. 42 are the same as those of Fig. 36.

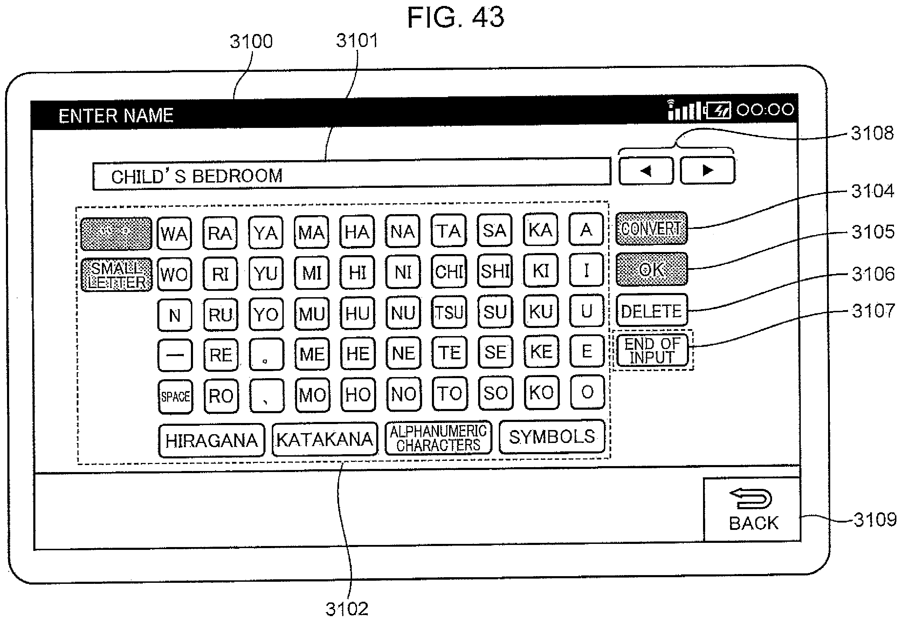

Because the name candidate display section 1131 of this room name change screen 1130 does not have the room name to be changed by the user, the user selects the Enter Name button 1134. Consequently, the floor plan setting unit 108 changes the screen displayed on the display 101 to the room name input screen 3100 (Fig. 43). Fig. 43 is a diagram showing an example of the room name input screen 3100. The details of the room name input screen 3100 have already described with reference to Fig. 31; thus, the description thereof is omitted here. The user inputs "child's bedroom" on this room name input screen 3100, displaying "child's bedroom" in the input section 3101.

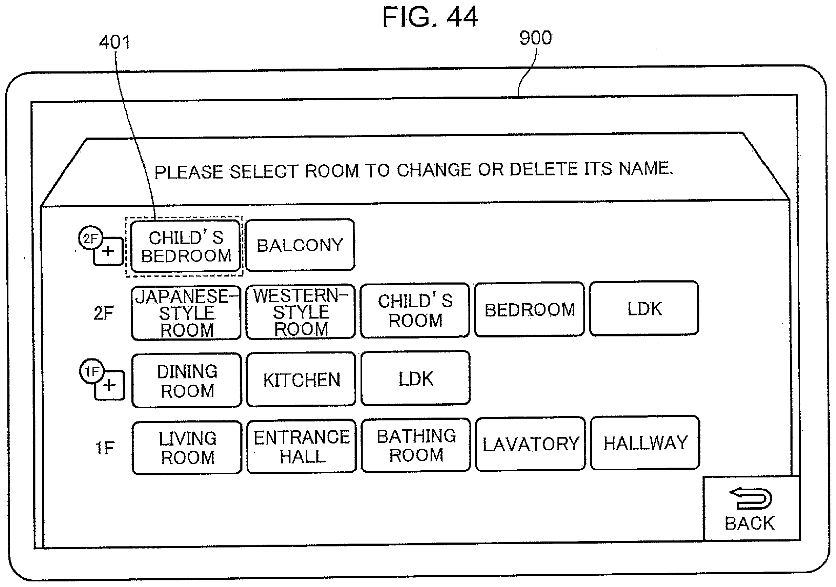

When the user selects the End of Input button 3107, the floor plan setting unit 108 changes the screen displayed on the display 101 to the floor plan setting screen that reflects the change of the room name (Fig. 44). Fig. 44 is a diagram showing an example of the floor plan setting screen 900 that reflects the change of the room name. As shown in Fig. 44, the room name of the room icon 401 in the first column of the second floor is changed from "bedroom" to "child's bedroom."

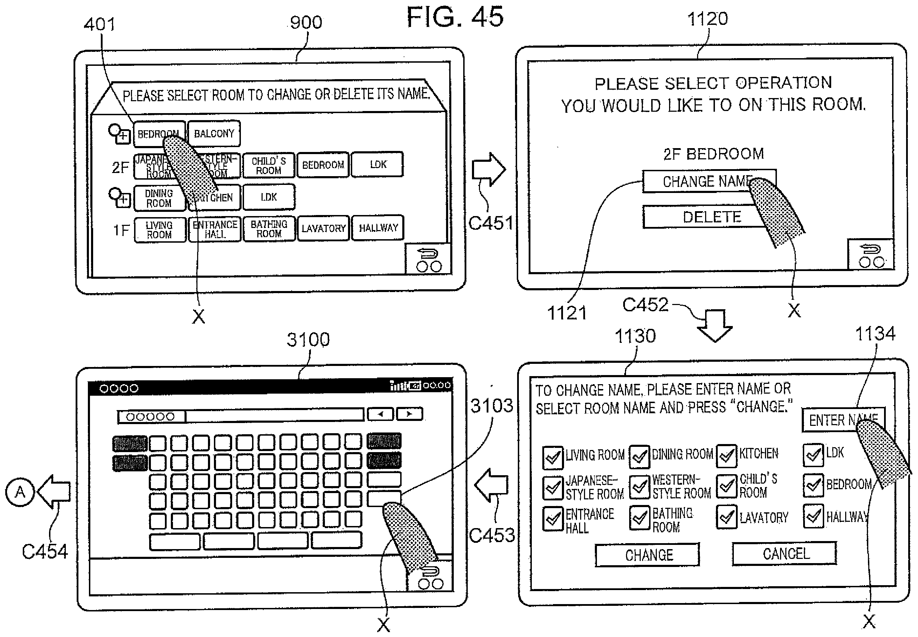

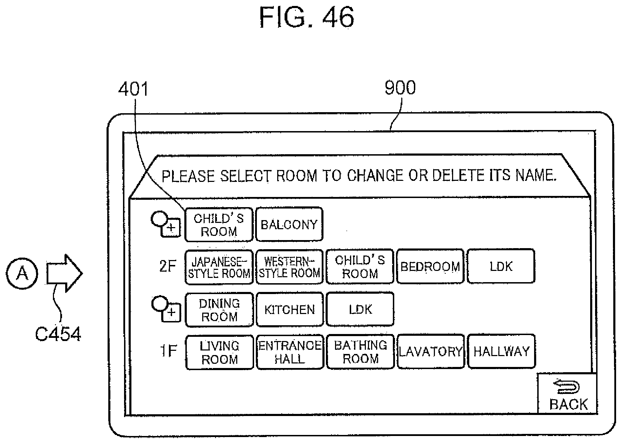

Fig. 45 is a diagram showing an example of a screen transition that takes place when changing a room name using the room name input screen 3100. The upper left, upper right, lower right, and lower left diagrams of Fig. 45 are the same as Figs. 40, 41, 42, and 43, respectively. Fig. 46 is a diagram showing an example of a screen transition subsequent to the one shown in Fig. 45.

When it is sensed that the room icon 401 for the bedroom on the second floor displayed on the floor plan setting screen 900 of the upper left diagram of Fig. 45 is tapped by the contact object X, the floor plan setting unit 108 changes the screen displayed on the display 101 to the room edit screen 1120 (C451). When it is sensed that the Change Name button 1121 on the room edit screen 1120 is tapped by the contact object X, the floor plan setting unit 108 changes the screen displayed on the display 101 to the room name change screen 1130 (C452).

When it is sensed that the Enter Name button 1134 on the room name change screen 1130 is tapped by the contact object X, the floor plan setting unit 108 changes the screen displayed on the display 101 to the room name input screen 3100 (C453).

When it is sensed that the End of Input button 3107 on the room name input screen 3100 is tapped by the contact object X after the input of a room name is received, the floor plan setting unit 108 changes the screen displayed on the display 101 to the floor plan setting screen 900 that reflects the change of the room name (C454). The floor plan setting screen 900 of Fig. 46 shows the room icon 401 that is obtained by changing the room name to "child's room" using the room name input screen 3100.

According to the present disclosure, as described above, the room names can be changed through the use of the room name input screen 3100. Therefore, after adding a room icon 401, for example, the user can customize the room name for the room icon to any desired name. This allows the user to give the room icons 401 with the room names familiar to his/her family members, preventing the user from selecting a wrong room icon 401 and preventing the occurrence of an unwanted process step.

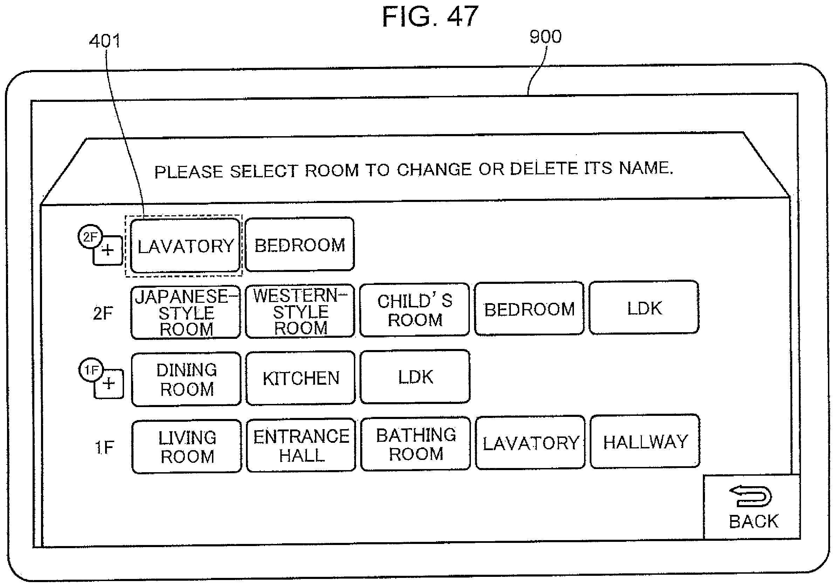

Next is described how a room icon 401 can be deleted from the floor plan 410. First, when the user who wishes to delete a room icon 401 selects the Set button 405 on the floor plan screen 400, the floor plan setting unit 108 displays the floor plan setting screen 900 of Fig. 47 on the display 101. Fig. 47 is a diagram showing an example of the floor plan setting screen 900 that is displayed prior to deletion of a room icon 401. Here, an example of deleting the room icon 401 for the lavatory on the second floor is described.

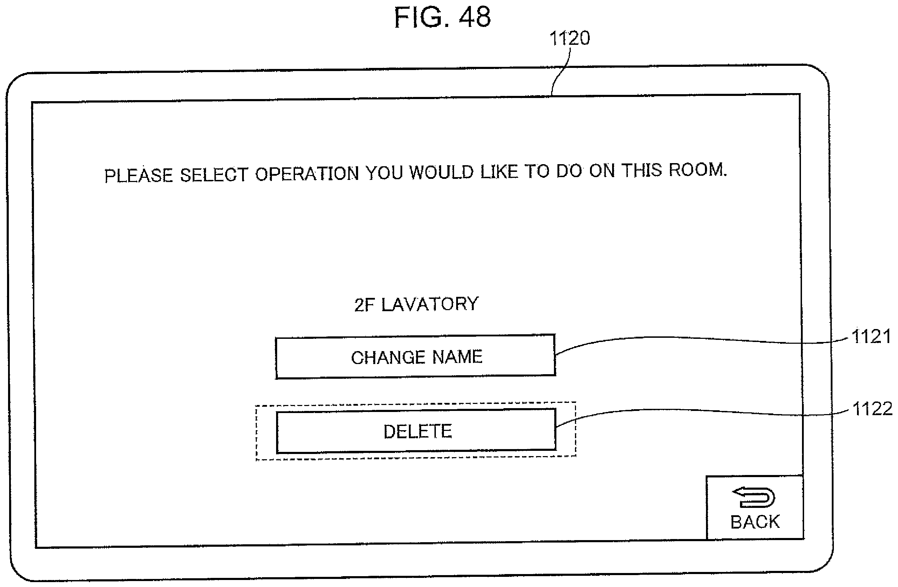

When the room icon 401 for the lavatory on the second floor displayed on this floor plan setting screen 900 is selected, the floor plan setting unit 108 changes the screen displayed on the display 101 to the room edit screen 1120 (Fig. 48).

Fig. 48 is a diagram showing an example of the room edit screen 1120. Because the lavatory on the second floor is selected, the room edit screen 1120 displays a phrase that reads "Please select the operation you would like to do on this room. 2F Lavatory," clearly letting the user know that the room icon 401 for the lavatory on the second floor is about to be edited.

When the Delete button 1122 is selected by the user, the floor plan setting unit 108 changes the screen displayed on the display 101 to the room deletion confirmation screen 1140 (Fig. 49). Fig. 49 is a diagram showing an example of the room deletion confirmation screen 1140. This room deletion confirmation screen 1140 displays a phrase that reads "Do you want to delete this room? 2F Lavatory," to confirm with the user whether to certainly delete the room icon 401 for the lavatory on 2F.

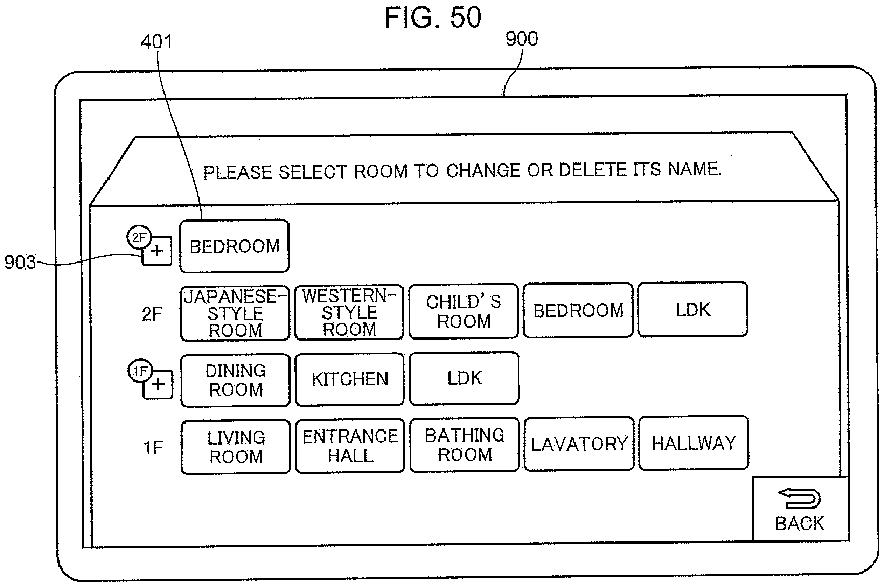

When the Delete button 1141 is selected by the user, the floor plan setting unit 108 displays, on the display 101, the floor plan setting screen 900 that reflects the deletion of the room icon 401. As shown in Fig. 50, it is clear that the room icon 401 for the lavatory has been deleted from the second floor.

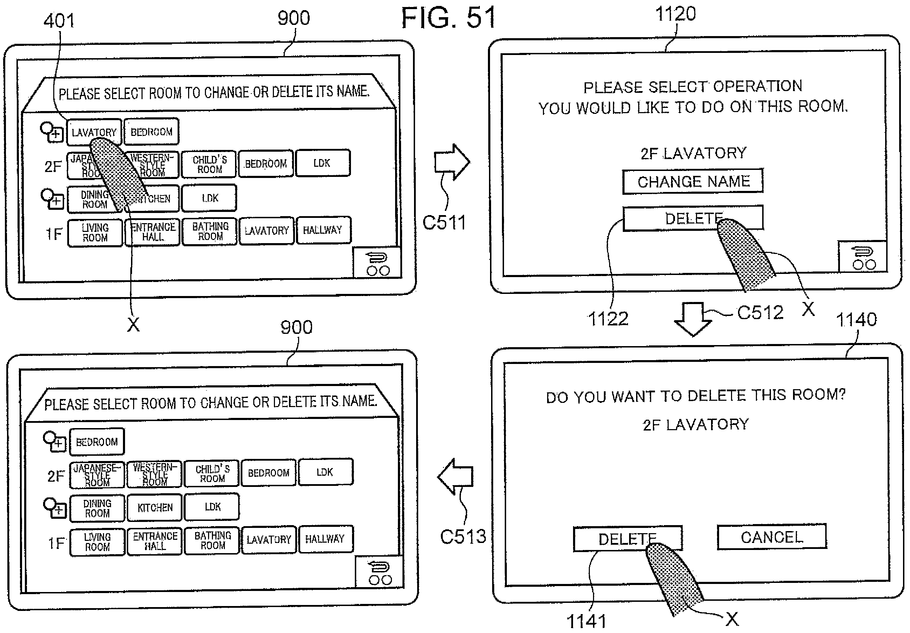

Fig. 51 is a diagram showing an example of a screen transition that takes place when deleting a room icon 401. The upper left, upper right, lower right, and lower left diagrams of Fig. 51 are the same as Figs. 47, 48, 49, and 50, respectively.

When it is sensed that the room icon 401 for the lavatory shown on the floor plan setting screen 900 of the upper left diagram of Fig. 51 is tapped by the contact object X, the floor plan setting unit 108 changes the screen displayed on the display 101 to the room edit screen 1120 (C511).

When it is sensed that the Delete button 1122 on the room edit screen 1120 is tapped by the contact object X, the floor plan setting unit 108 changes the screen displayed on the display 101 to the room deletion conformation screen 1140 (C512).

When it is sensed that the Delete button 1141 on the room deletion confirmation screen 1140 is tapped by the contact object X, the floor plan setting unit 108 changes the screen displayed on the display 101 to the floor plan setting screen 900 that reflects the deletion. This floor plan setting screen 900 clearly shows that the room icon 401 for the lavatory has been deleted from the second floor.

According to the present disclosure, the room icons 401 can be deleted as described above. Therefore, even when a room icon 401 is added to the floor plan 410 by mistake, this room icon 401 can be deleted from the floor plan. Also when the user moves into a new house, the user can customize the existing floor plan 410 to match the floor plan of the new house, by deleting the unwanted room icons 401. Even in the case where a plurality of rooms are integrated into one room due to a renovation, the room icons 401 that consequently become unnecessary can easily be deleted from the floor plan 410.

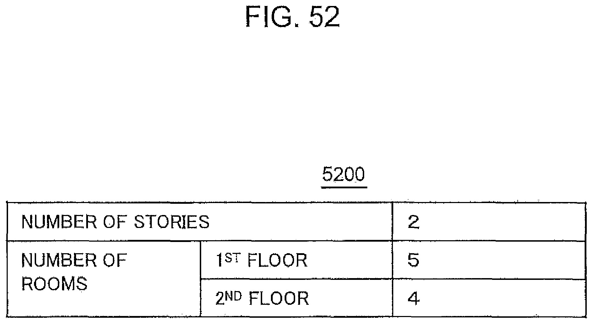

A data structure of data used by the home controller 100 is described next. Fig. 52 is a diagram showing an example of a data structure of floor plan setting information 5200 managed by the floor plan setting unit 108.

The floor plan setting information 5200 is the information on a floor plan that is set by the user using the floor plan setting screen 900. The floor plan setting information 5200 has such items as the number of stories and the number of rooms. The number of stories represents the number of stories in a house. As the number of stories, the number of stories that is input by the user using the story number setting screen 1500 shown in Fig. 15 is employed. In the example shown in Fig. 52, the user has input two stories in the story number setting screen 1500 as the number of stories. Therefore, the floor plan setting unit 108 registers "2" in the item for the number of stories. The number of rooms represents the number of rooms on each floor. As the number of rooms on each floor, the value that corresponds to the number of room icons 401 added to each floor on the floor plan setting screen 900 by the user is employed. In the example shown in Fig. 52, the user adds five room icons 401 to the first floor and four room icons 401 to the second floor on the floor plan setting screen 900. Therefore, the floor plan setting unit 108 registers "5" in the first floor and "4" in the second floor.

Note that the floor plan setting information 5200 shown in Fig. 52 has "2" as the number of stories and therefore has the number of rooms registered for each of the first and second floors; however, in the case of a house having three or more stories, the number of rooms is registered with respect to each of the three or more stories, and in the case of a one-story house, the number of rooms is registered with respect to the first floor.

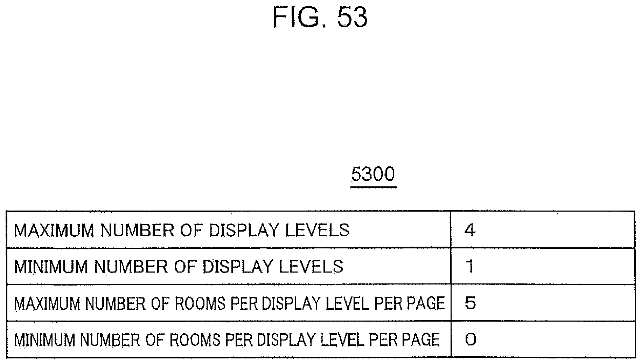

Fig. 53 is a diagram showing an example of a data configuration of system defined value information 5300. The system defined value information 5300 is the information for defining the display capability of each room icon 401 in the floor plan 410. The system defined value information 5300 has such items as the maximum number of display levels, the minimum number of display levels, the maximum number of rooms per display level per page, and the minimum number of rooms per display level per page.

The maximum number of display levels is the maximum value corresponding to the display levels in the floor plan 410 that can display the room icons 401. For instance, when the maximum number of display levels is 4, a maximum of four rows of display levels is displayed, as shown in Fig. 24.

The minimum number of display levels is the minimum value corresponding to the display levels in the floor plan 410 that can display the room icons 401. For instance, when the minimum number of display levels is 1 and when the house does not have enough number of rooms not requiring the display in two display levels.

The maximum number of rooms per display level per page represents the maximum number of room icons 401 that can be displayed in a single row of display level. For example, when "5" is registered in this item, a maximum of five room icons 401 are displayed in a single row of display level, as shown in Fig. 24.

The minimum number of rooms per display level per page represents the minimum number of room icons 401 that can be displayed in a single row of display level. For example, when "0" is registered in this item, it means that the floor plan 410 has a display level with no room icons 401.

Note in the example shown in Fig. 53 that "4" is registered as the maximum number of display levels and "5" as the maximum number of rooms per display level per page. Therefore, the number of room icons 401 that can be displayed in a single page of floor plan 410 is 20 (= 4 x 5) at most.

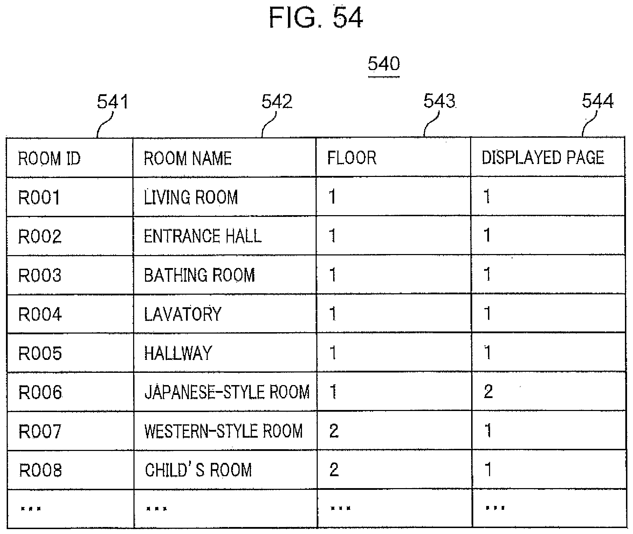

Fig. 54 is a diagram showing an example of a data configuration of room information 540. The room information 540 is the information on the arrangement of the rooms in the floor plan 410. The room information 540 has such items as a room ID 541, room name 542, floor 543, and display page 544.

The room ID 541 represents identification information of each room set in the floor plan 410. For example, the room ID 541 is issued by the floor plan setting unit 108 for a room that is added by the user operating the floor plan setting screen 900 shown in Fig. 9. The floor plan setting unit 108 determines the number for each of the room IDs 541 corresponding respectively to the rooms in the floor plan 410, in the order in which the rooms are added by the user. In the example shown in Fig. 54, because the rooms such as the living room, hallway and the like are added to the floor plan 410 in this order, the floor plan setting unit 108 sets the numbers for the room IDs corresponding to the living room, hallway and the like in order of R001, R002 and the like respectively.

The room name 542 represents the name of each of the rooms in the floor plan 410. For example, when the user selects one of the room names listed in the room candidate display section 1111 of the room addition screen 1110 shown in Fig. 18, the floor plan setting unit 108 registers this room name in the room information 540. Also, for example, when the room name of a room added to the floor plan 410 is changed through the use of the software keyboard, the floor plan setting unit 108 registers the room name input through the software keyboard, in the room information 540. Moreover, when, for example, the user selects any one of the room names listed in the name candidate display section 1131 of the room name change screen 1130 shown in Fig. 37, the floor plan setting unit 108 registers this room name in the room information 540.

The floor 543 represents the floor to which each of the rooms in the floor plan 410 belongs. For instance, when the user adds a room by selecting the Add Room button 903 of the second floor on the floor plan setting screen 900 shown in Fig. 9, the floor plan setting unit 108 registers "2" in the room information 540 as the floor for this room. When the user adds a room by selecting the Add Room button 903 of the first floor, the floor plan setting unit 108 registers "1" in the room information 540 as the floor for this room.

The display page 544 represents the page of the floor plan 410 on which the rooms of the floor plan 410 are displayed. For example, the kitchen is displayed in the floor plan 410 on the second page in Fig. 27. The floor plan setting unit 108, therefore, registers "2" in the room information 540 as the display page for the kitchen. Furthermore, each of the rooms shown in Fig. 26 is displayed in the floor plan 410 of the first page. Thus, the floor plan setting unit 108 registers "1" in the room information 540 as the display page for these rooms.

Fig. 55 is a diagram showing an example of a data configuration of the device list 1700 managed by the home controller 100. The home controller 100 places the device icons 501 in the floor plan 410 and controls the devices 200 based on the information of the device list 1700.

The device list 1700 has a device ID 1701, device type 1702, model number 1703, location 1704, capability information 1705, control command destination 1706, IP address 1707, power consumption 1708, and status 1709.

The device ID 1701 represents identification information of each device 200. The device type 1702 represents the type of each device 200. The model number 1703 represents the model number of each device 200. The location 1704 represents a room in which the relevant device 200 is installed. Here, a device 200 and the room in which the device 200 is installed are associated with each other when, for example, the user registers a new device 200 in the home controller 100. For instance, when the user inputs an instruction for registering a certain device 200, the home controller 100 displays a device setting screen, not shown, on the display 101, and allows the user to input the name and room ID of the room in which the device 200 is installed, through the device setting screen.

The capability information 1705 represents the contents with which each device 200 can be controlled or the state that can be acquired from the device 200. For instance, an AC with a device ID "A" is capable of controlling its temperature, wind direction, and air volume. The control command destination 1706 represents the destination of a control command used for controlling each device 200. In the example shown in Fig. 55, "device" is registered as the control command destination 1706 for all the devices 200. Thus, the control command is transmitted from the home controller 100 directly to the devices 200.

On the other hand, a control command is transmitted to some of the devices 200 through a server (not shown) of the Internet through which the manufacturers of these devices 200 provide the services thereof to the user. For such devices 200, "server" is registered as the control command destination, so the home controller 100 transmits the control command to these devices 200 through the servers. A control command is a command for operating the devices 200 or checking the statuses of the devices 200.

The IP address 1707 represents an IP address provided to each device 200. In the case where IP addresses are allocated dynamically to the devices 200, the home controller 100 may register the IP addresses 1707 that the home controller has allocated, in the IP address 1707. In the case where IP addresses are allocated to the devices 200 by an external device or the devices 200 already have IP addresses, the IP addresses may be acquired from the external device or devices 200 and registered in the IP address 1707.

The power consumption 1708 represents the amount of power consumed by each device 200. The power consumption per hour (kwh) of each device 200 is employed as the power consumption. For example, when the power consumption is managed by a smart panel board (not shown) provided in the house, the home controller 100 may acquire the power consumption from the smart panel board, and when the power consumption is managed by each of the devices 200, the home controller 100 may acquire the power consumption directly from each of the devices 200.

The status 1709 represents the current status of each device 200. In the example shown in Fig. 55, the current set temperature of the AC with a device ID "A" is 27 degrees. Therefore, "27°C" is set as the status. Suppose that the home controller 100 transmits a control command to a certain device 200 to obtain a certain status. In this case, the status 1709 may be updated to the status indicated by the control command. Alternatively, when the device 200 is provided with a status notification function, the home controller 100 may inquire the device 200 about its status on a regular basis and update the status 1709 based on the status indicated by the response from the device 200.

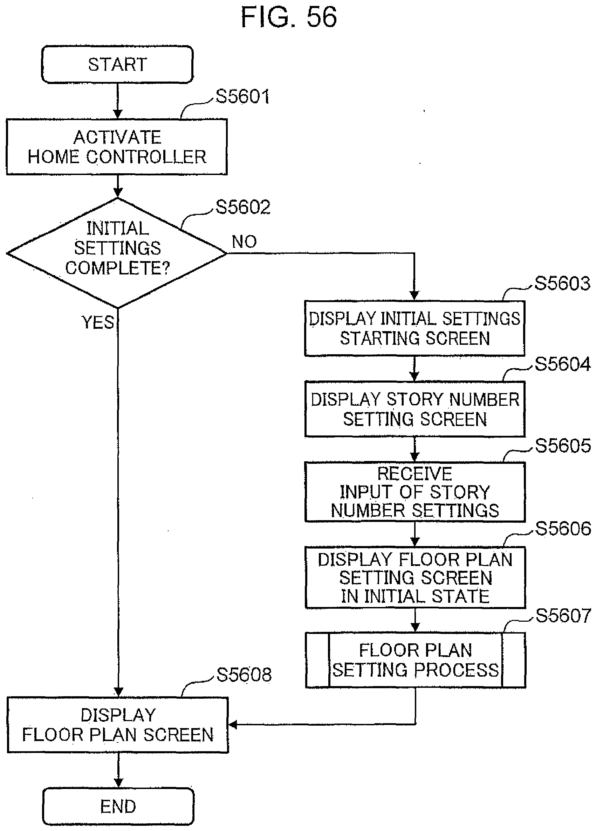

Next is described a flow of processes executed by the home controller 100 when setting a floor plan. Fig. 56 is a flowchart showing an example of the entire process executed by the home controller 100 when setting a floor plan.

First, when the home controller 100 is activated (S5601), the floor plan setting unit 108 determines whether the initial settings are completed. In so doing, the floor plan setting unit 108 makes an initial setting flag active when, for example, the user completes the initial settings. Then, based on the status of the initial setting flag, the floor plan setting unit 108 may determine whether the initial settings are completed or not.

When the initial settings are completed (YES in S5602), the floor plan setting unit 108 displays the floor plan screen 400 on the display 101. When, on the other hand, the initial settings are not completed (NO in S5602), the floor plan setting unit 108 displays the initial settings starting screen 1400 (Fig. 14) on the display 101 (S5603).

When the Next button 1401 on the initial settings starting screen 1400 is selected, the floor plan setting unit 108 displays the story number setting screen 1500 (Fig. 15) on the display 101 (S5604). Next, the floor plan setting unit 108 receives an input of a story number setting from the user on the story number setting screen 1500 (S5605). When the Next button 1504 on the story number setting screen 1500 is selected, the floor plan setting unit 108 displays the floor plan setting screen 900 in its initial state (Fig. 16) on the display 101 (S5606).

The floor plan setting unit 108 then executes a floor plan setting process (S5607) and, upon its completion, displays the floor plan screen 400 on the display 101 (S5608).

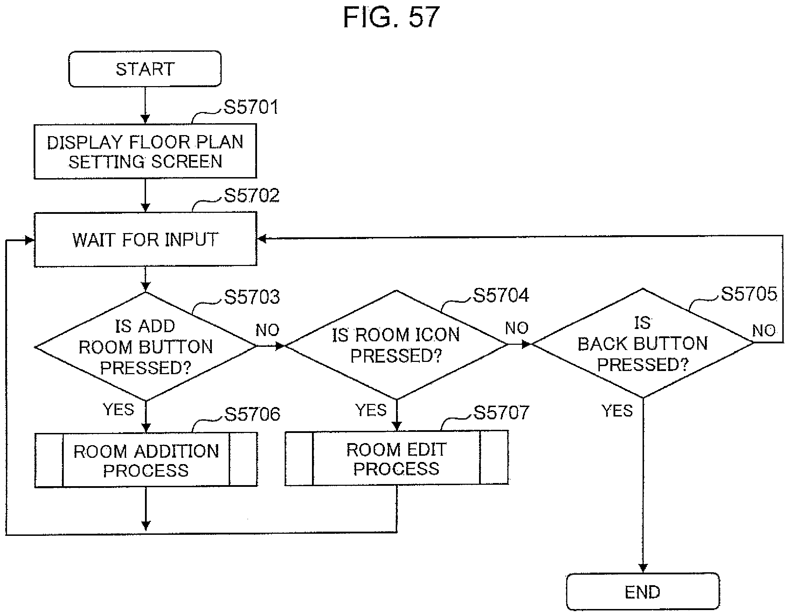

Fig. 57 is a flowchart showing an example of the floor plan setting process described in S5607 of Fig. 56. First of all, the floor plan setting unit 108 displays the floor plan setting screen 900 on the display 101 (S5701), and waits for an input from the user (S5702). When the user presses (selects) an Add Room button 903 (YES in S5703), the floor plan setting unit 108 executes a room addition process (S5706). However, when a room icon 401 on the floor plan setting screen 900 is pressed (selected) (NO in S5703 and YES in S5704), the floor plan setting unit 108 executes a room edit process (S5707).

When, on the other hand, the Back button 902 on the floor plan setting screen 900 is pressed (selected) (NO in S5704 and YES in S5705), the floor plan setting process is ended. When the Back button 902 is not pressed (selected) (NO in S5705), the floor plan setting unit 108 returns the process to S5702 to keep waiting for an input to be entered on the floor plan setting screen 900.

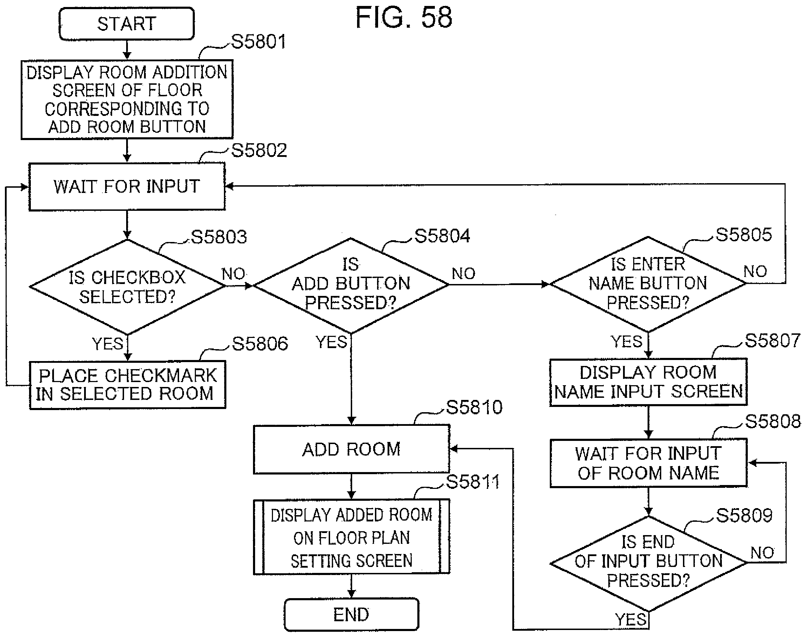

Fig. 58 is a flowchart showing an example of the room addition process described in S5706 of Fig. 57. First, the floor plan setting unit 108 displays the room addition screen 1110 (Fig. 17) of the floor corresponding to the Add Room button 903 selected by the user (S5801), and waits for an input from the user (S5802). For example, when the user selects the Add Room button 903 of the first floor, the room addition screen 1110 of the first floor is displayed. When the user selects the Add Room button 903 of the second floor, the room addition screen 1110 of the second floor is displayed.

In the room addition screen 1110, when the checkbox 1115 corresponding to any of the rooms listed as the room candidates is selected by the user (YES in S5803), the floor plan setting unit 108 places the checkmark 1115M in the checkbox 1115 corresponding to the selected room (S5806), and returns the process to S5802.

On the other hand, when the Add button 1112 on the room addition screen 1110 is pressed (selected) by the user (NO in S5803 and YES in S5804), the floor plan setting unit 108 adds the room (S5810). In this case, the floor plan setting unit 108 issues a new room ID, adds a new record to the room information 540, and registers, in this record, the room name and floor corresponding to the room selected by the user in S5803. Because the display control unit 103 generates the floor plan screen 400 by using the room information 540, this addition is reflected immediately on the floor plan 410 of the floor plan screen 400.

When the Enter Name button 1114 on the room addition screen 1110 is pressed (selected) (NO in S5804 and YES in S5805), the floor plan setting unit 108 displays the room name input screen 3100 (Fig. 31) on the display 101 (S5807). However, when the Enter Name button 1114 is not pressed (NO in S5805), the floor plan setting unit 108 returns the process to S5802 and keeps waiting for an input to be entered on the room addition screen 1110 by the user.

Next, the floor plan setting unit 108 waits for an input of a room name to be entered on the room name input screen 3100 by the user (S5808). When the End of Input button 3107 is pressed (selected) by the user after a room name is input on the room name input screen 3100 (YES in S5809), the floor plan setting unit 108 adds the relevant room (S5810). In this case, the floor plan setting unit 108 issues a new room ID, adds a new record to the room information 540, and registers, in this record, the room name that is input by the user using the software keyboard 3102 in S5808 together with the relevant floor.

When the End of Input button 3107 is not pressed (NO in S5809), the floor plan setting unit 108 returns the process to S5808 and keeps waiting for an input of a room name.

In S5811, the floor plan setting unit 108 executes a process for displaying the added room on the floor plan setting screen 900 (S5811).

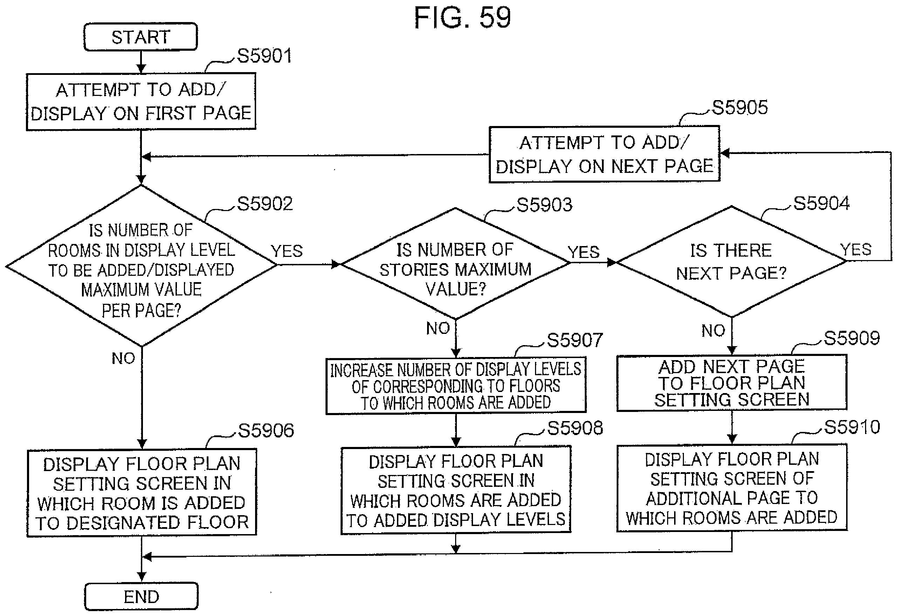

Fig. 59 is a flowchart showing an example of the process of S5811 shown in Fig. 58 for displaying the added room on the floor plan setting screen 900. First, the floor plan setting unit 108 attempts to see whether the rooms to be added/displayed can be displayed on the floor plan 410 on the first page (S5901). The floor plan setting unit 108 then determines whether the number of rooms to be added/displayed in the display level is the maximum value per page (S5902). For example, suppose that a room is added to 1F of the floor plan 410 shown in Fig. 25. In this floor plan 410, five rooms are already displayed in the display level of the first floor. This number "5" is the same as "5" in "the maximum number of rooms per display level per page" defined in the system defined value information 5300. In this case, the result of S5902 is YES. However, when the number of rooms displayed in the display level of the first floor is four or less, the result of S5902 is NO.

When the result of S5902 is NO, the rooms can be displayed on the floor plan 410 of the first page. Therefore, the floor plan setting unit 108 displays, on the display 101, the floor plan setting screen 900 in which the display level of the designated floor has the rooms added thereto (S5906).

When the result of S5902 is YES, the floor plan setting unit 108 determines whether the number of stories is the maximum value (S5903). In the example shown Fig. 25, the rooms are already displayed in four rows of display levels. This number "4" is the same as "4" in "the maximum number of display levels" defined in the system defined value information 5300. In this case, the result of S5903 is YES. When the rooms are displayed in three or less display levels in the floor plan 410 shown in Fig. 25, the result of S5903 is NO.

When the result of S5903 is NO, the floor plan setting unit 108 increases the number of display levels corresponding to the floors to which rooms are added, by one (S5907), and displays, on the display 101, the floor plan setting screen 900 in which the added display levels has the rooms added thereto (S5908).

When the result of S5903 is YES, the floor plan setting unit 108 determines whether there exists the next page (S5904). For example, because the next page is already created in the floor plan setting screen 900 shown in Fig. 26, the result of S5904 is determined as YES. However, the next page is not created in the floor plan setting screen 900 shown in Fig. 25, making the result of S5904 NO.

When the result of 55904 is NO, the floor plan setting unit 108 adds the next page to the floor plan setting screen 900 (S5909). The floor plan setting unit 108 then displays, on the display 101, the floor plan setting screen 900 showing that the rooms are added to the display levels of the floors corresponding to the floor plan setting screen 900 of the added page (S5910). In this case, when, for example, the kitchen is added to the first floor on the floor plan setting screen 900 shown in Fig. 25, the second page of the floor plan setting screen 900 is added as shown in Fig. 27, displaying the kitchen in the display level of this first floor.

However, when the result of S5904 is YES, the floor plan setting unit 108 attempts to see whether the rooms can be added/displayed on the next page (S5905), and returns the process to S5902. Subsequently, the process for displaying the added rooms on the floor plan setting screen 900 is executed on the floor plan setting screen on the next page. For example, when a new room is added to the second floor on the floor plan setting screen 900 shown in Fig. 26 to which the floor plan setting screen 900 of the second page is already added, the process for displaying the room to be added to the floor plan setting screen 900 on the second page shown in Fig. 27 is executed.

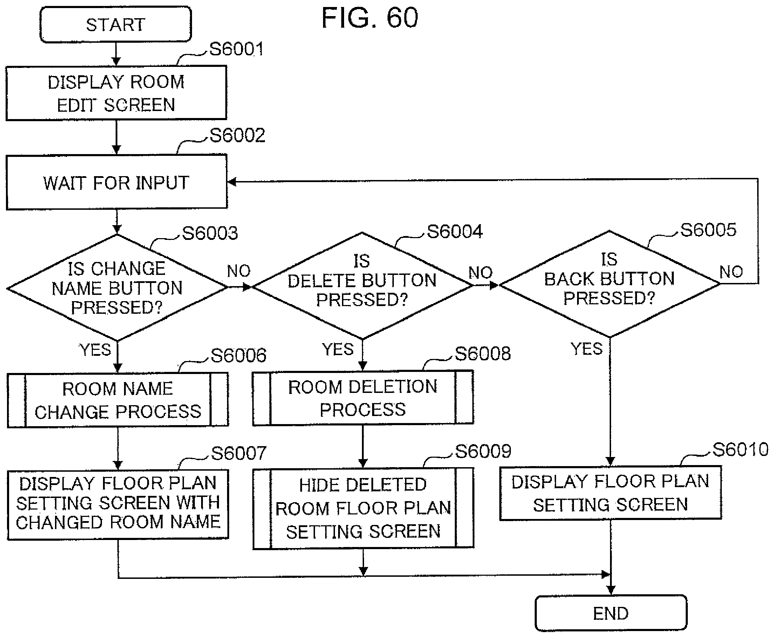

Fig. 60 is a flowchart showing an example of the room edit process described in S5707 of Fig. 57. First, the floor plan setting unit 108 displays the room edit screen 1120 (Fig. 35) on the display 101 (S6001) and waits for an input from the user (S6002).

When the Change Name button 1121 on the room edit screen 1120 is pressed (selected) by the user (YES in S6003), the floor plan setting unit 108 executes a room name process (S6006) and thereby displays the resultant changed room name on the floor plan setting screen 900 (S6007).

On the other hand, when the Delete button 1122 on the room edit screen 1120 is pressed (selected) (NO in S6003 and YES in S6004), the floor plan setting unit 108 executes sequentially a room deletion process (S6008) and a process for hiding the deleted room from the floor plan setting screen 900 (S6009).

When the Back button 1123 on the room edit screen 1120 is pressed (selected) by the user (NO in S6004 and YES in S6005), the floor plan setting unit 108 displays the floor plan setting screen 900 on the display 101 (S6010).

When the Back button 1123 on the room edit screen 1120 is not pressed (NO in S6005), the floor plan setting unit 108 returns the process to S6002 to keep the room edit screen 1120 displayed.

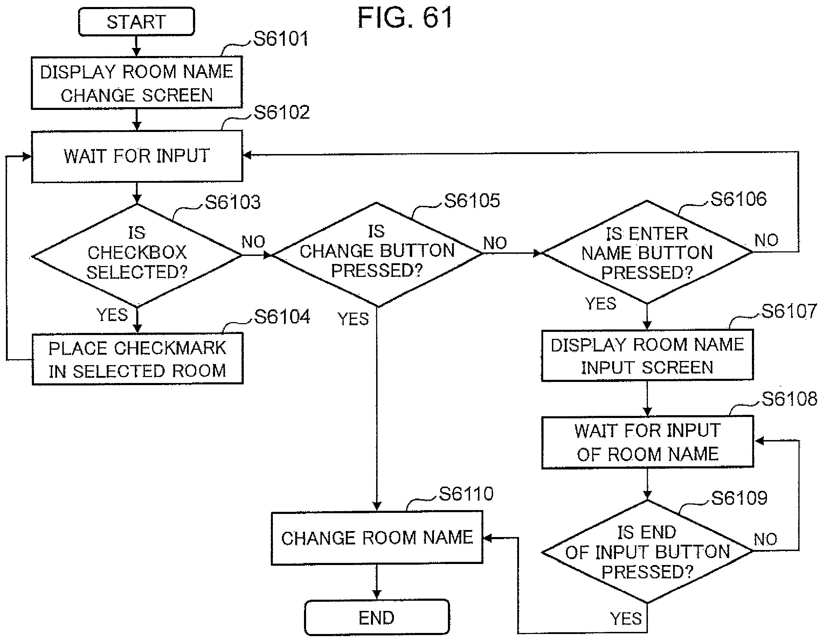

Fig. 61 is a flowchart showing an example of the room name change process described in S6006 of Fig. 60. First, the floor plan setting unit 108 displays the room name change screen 1130 (Fig. 37) on the display 101 (S6101) and waits for an input from the user (S6102).

When the checkbox 1135 corresponding to any of the listed room names on the room name change screen 1130 is selected by the user (YES in S6103), the floor plan setting unit 108 places the checkmark 1135M in the checkbox 1135 corresponding to the selected room (S6104) and returns the process to S6102.

On the other hand, when the Change button 1132 on the room name change screen 1130 is pressed (selected) by the user (NO in S6103 and YES in S6105), the floor plan setting unit 108 changes the name of the room (S6110). In this case, the floor plan setting unit 108 updates based on the room information 540 the recorded room name corresponding to the room to be changed, to the room name that is selected in S6103 by the user.

When the Enter Name button 1134 on the room name change screen 1130 is selected by the user (NO in S6105 and YES in S6106), the floor plan setting unit 108 displays the room name input screen 3100 (Fig. 43) on the display 101 (S6107). However, when the Enter Name button 1114 is not pressed (NO in S6106), the floor plan setting unit 108 returns the process to S6102 and keeps waiting for an input to be entered on the room name change screen 1130 by the user.

Subsequently, the floor plan setting unit 108 waits for an input of a room name to be entered on the room name input screen 3100 by the user (S6108). When the End of Input button 3107 is pressed (selected) by the user after a room name is entered on the room name input screen 3100 (YES in S6109), the floor plan setting unit 108 changes the name of the room (S6110). In this case, on the room information 540, the floor plan setting unit 108 updates the recorded room name to be changed to the room name that is entered by the user through the use of the software keyboard 3102 in S6108.

When the End of Input button 3107 is not pressed (NO in S6109), the floor plan setting unit 108 returns the process to S6108 and keeps waiting for an input of a room name.

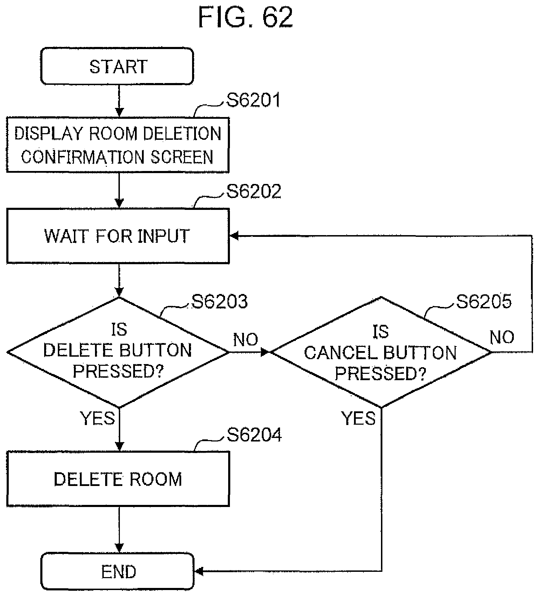

Fig. 62 is a flowchart showing an example of the room deletion process described in S6008 of Fig. 60. First, the floor plan setting unit 108 displays the room deletion confirmation screen 1140 (Fig. 49) on the display 101 (S6201) and waits for an input from the user (S6202).

When the Delete button 1141 on the room deletion confirmation screen 1140 is selected by the user (YES in S6203), the floor plan setting unit 108 deletes the relevant room from the floor plan 410 (S6204).

When the Cancel button 1142 on the room deletion confirmation screen 1140 is pressed (selected) by the user (NO in S6203 and YES in S6205), the floor plan setting unit 108 ends the process. In this case, the floor plan setting unit 108 may delete, from the room information 540, the record in which the deleted room is registered, or may register a deletion flag indicating the completion of deletion of the room from the record, instead of deleting the record in which the deleted room is registered.

When, on the other hand, the Cancel button 1142 on the room deletion confirmation screen 1140 is not pressed by the user (NO in S6205), the floor plan setting unit 108 returns the process to S6202 and keeps waiting for an input from the user.

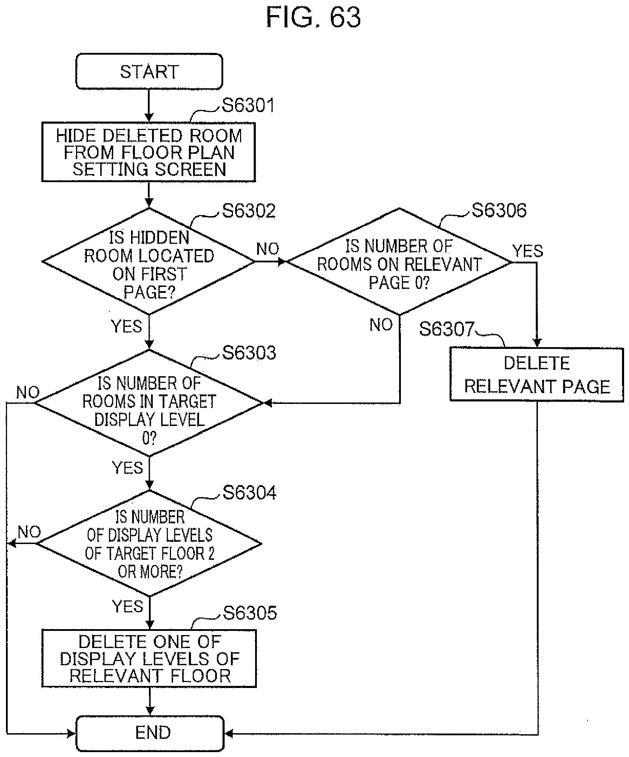

Fig. 63 is a flowchart showing an example of the process described in S6009 of Fig. 60 for hiding the deleted room from the floor plan setting screen 900. First of all, the floor plan setting unit 108 hides the deleted from the floor plan setting screen 900. As a result, the room icon 401 corresponding to the room to be deleted is hidden from the floor plan setting screen 900. When the room icons 401 are disposed on either side of the deleted room icon 401, the floor plan setting unit 108 may display these two room icons 401 adjacent to each other or separately from each other.

Next, when the hidden room is on the floor plan setting screen 900 on the first page, (YES in S6302), the floor plan setting unit 108 determines whether the number of rooms in the target display level from which the room is hidden is 0 (S6303). For example, when the bedroom on the second floor is deleted from the floor plan setting screen 900 shown in Fig. 50, the number of rooms in the target display level becomes 0. Therefore, the result of S6303 is YES. Also, when the lavatory on the second floor is deleted from the floor plan setting screen 900 shown in Fig. 47, the number of rooms in the target display level is not 0, making the result of S6303 NO.

When the result of S6303 is YES, the floor plan setting unit 108 determines whether there are two or more display levels corresponding to the target floor to which the hidden room belongs (S6304). For instance, even when the lavatory on the second floor is deleted from the floor plan setting screen 900 of Fig. 47, there exist two or more display levels in the second floor. Therefore, the result of S6304 is YES. However, when the bedroom on the second floor is deleted from the floor plan setting screen 900 shown in Fig. 50, the number of display levels corresponding to the second floor become 1, making the result of S6304 NO.

When the result of S6304 is YES, the floor plan setting unit 108 deletes one of the display levels corresponding to the relevant floor (S6305). For example, suppose that the bedroom on the second floor is deleted from the floor plan setting screen 900 shown in Fig. 50. As a result, the letters "2F" displayed in the top level is deleted, and the Add Room button 903 is shifted to the first row of display level of the second floor.

When the result of S6302 is NO, the floor plan setting unit 108 determines whether the number of rooms on the page displaying the hidden room is 0 or not (S6306). For example, when the kitchen is deleted from the floor plan setting screen 900 on the second page shown in Fig. 27, the number of rooms on this page becomes 0. Therefore, the result of S6306 is YES. Furthermore, even when the kitchen is deleted from the floor plan setting screen 900 on the second page shown in Fig. 27, the result of S6306 becomes NO as long as the other rooms are displayed on this page. Consequently, the process is advanced to S6306.

When the result of S6306 is YES, the floor plan setting unit 108 deletes this page (S6307). For instance, when the kitchen is deleted from the floor plan setting screen 900 on the second page shown in Fig. 27, the number of rooms displayed on this page becomes 0, resulting in deletion of the page. In this case, since the floor plan setting screen 900 on the first page shown in Fig. 26 is no longer necessary, the semitransparent room icons 401 and the next page display button 2601 are deleted.

Note that the present disclosure may employ the following aspects.
(1) The floor plan setting screen 900 and the floor plan screen 400 are displayed separately as described above; however, the floor plan screen 400 may take on the functions of the floor plan setting screen 900. In that case, the Add Room button 903 is provided to each of the floors on the floor plan screen 400. When the Add Room button 903 of a certain floor is selected, the floor plan setting unit 108 may display the room addition screen 1110 on the display 101.
   Moreover, when employing this aspect, a Delete Room button for deleting a room icon 401 may be provided on the floor plan setting screen 900. In this case, the floor plan setting unit 108 allows the user to tap one or more room icons 401 to delete on the floor plan setting screen 900, and then deletes the tapped room icons 401 at once when the Delete Room button is tapped. Alternatively, when the Add Room button 903 is selected and then the Delete button is selected immediately after the relevant room icon 401 is added to the floor plan setting screen 900, the floor plan setting unit 108 may delete only the added room icon 401.
(2) When one of the Add Room buttons 903 is selected on the floor plan setting screen 900, the room addition screen 1110 is displayed, as described above; however, the aspects of the present invention are hot limited thereto. For example, when one of the Add Room buttons 903 is selected, the floor plan setting unit 108 may add the relevant room icon 401 directly to the display level of the relevant floor on the floor plan setting screen 900 without displaying the room addition screen 1110. At this stage, the added room icon 401 is not provided with a room name. The floor plan setting unit 108, therefore, may display the room edit screen 1120 when the added room icon 401 is selected on the floor plan setting screen 900, and then set the room name by means of the method described above.
   When employing this aspect, the Delete Room button may be provided on the floor plan setting screen 900 in addition to the Add Room buttons 903. Then, the room icons 401 may be deleted by means of the method described in (1) above.
(3) As described above, in the operation sequence for deleting the room icons 401, first, a room icon 401 to be deleted is selected on the floor plan setting screen 900, then the Delete button 1122 on the room edit screen 1120 is selected, and subsequently the Delete button 1141 on the room deletion confirmation screen 1140 is selected. In this case, only one room icon 401 can be deleted in a single operation sequence. In the present disclosure, however, a plurality of room icons 401 may be deleted in a single operation sequence. In such a case, when a room icon 401 is pressed for a while on the floor plan setting screen 900, the floor plan setting unit 108 shakes/displays all the room icons 401.

When room icons 401 to be deleted are tapped by the user, the floor plan setting unit 108 places a checkmark in each of the tapped room icons 401 and displays a deletion confirmation message. When the user chooses to agree with the confirmation message, the floor plan setting unit 108 may delete the tapped room icons 401 at once. In conjunction with this deletion, the floor plan setting unit 108 may update the room information 5300 to reflect the deletion on the floor plan 410.

The plurality of room icons 401 may be deleted at once by means of the method described in (1) above in which the Delete Room button is provided on the floor plan setting screen 900.

### Industrial Applicability

The present disclosure is helpful far the technology for controlling the devices in a building by displaying the floor plan of the building on a display.

## Claims

1. A method for controlling an information apparatus having a display and being connected to a network, over which one or more target devices are controlled, the method causing a computer of the information apparatus to:
display, on the display, a first display screen including a first floor plan of a building, the first floor plan including each first floor label that represents each floor of the building and each first room icon that represents each room arrayed on the each floor, an operation screen of a target device that is located in a room corresponding to a selected first room icon being displayed on the first display screen through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing the each floor of the building, each second room icon representing the each room on the each floor, and each first instruction button for adding another second room icon to the each floor represented by the each second floor label;
when selection of one of the each first instruction button is sensed correspondingly to one of the each floor represented by the each second floor label on the second display screen, display, on the display, a third display screen in which room candidates are arrayed to be added to the one floor corresponding to the selected first instruction button; and
display, on the first floor plan, a selected room candidate as an additional first room icon in the case that any one of the room candidates is selected on the third display screen.

2. The method according to claim 1, wherein the selected room candidate is displayed on the second floor plan as an additional second room icon.

3. The method according to claim 1 or 2, wherein
the each first room icon on the first display screen includes each first name label representing each name of the each first room icon, and the each second room icon on the second display screen includes each second name label representing each name of the each second room icon, the each second name label corresponding to the each first name label, and
when selection of any one of the each second room icon is sensed on the second display screen, a fourth display screen having a second instruction button for changing the name of the selected second room icon is displayed.

4. The method according to claim 3, wherein the fourth display screen includes a third instruction button for deleting the selected second room icon.

5. The method according to claim 3 or 4, wherein when selection of the second instruction button is sensed, a fifth display screen in which name candidates for the selected second room icon is arrayed is displayed.

6. The method according to claim 5, wherein, in the case where selection of any one of the name candidates included in the fifth display screen is sensed, the selected second room icon is changed to an edited second room icon that includes a changed second name label represented by the selected name candidate, and an edited first room icon that includes an edited first name label corresponding to the changed second name label is displayed on the first display screen.

7. The method according to claim 5 or 6, wherein
the size and shape of each label representing each of the name candidates included in the fifth display screen are equal to the size and shape of each label representing each of the room candidates included in the third display screen, and
the array of the name candidates included in the fifth display screen is the same as the array of the room candidates included in the third display screen.

8. The method according to claim 7, wherein
the third display screen includes a fourth instruction button for adding the selected room candidate as the additional first room icon of the first display screen,
the fifth display screen includes a fifth instruction button for changing, using a selected name candidate on the fifth display screen, the first name label corresponding to one of the each first room icon on the first display screen,
the size and shape of the fifth instruction button on the fifth display screen are the same as the size and shape of the fourth instruction button on the third display screen, and
the location of the fifth instruction button on the fifth display screen is the same as the location of the fourth instruction button on the third display screen.

9. The method according to claim 1 or 2, wherein
the each first room icon on the first display screen includes each first name label representing each name of the each first room icon, and the each second room icon on the second display screen includes each second name label representing each name of the each second room icon, the each second name label corresponding to the each first name label, and
in the case where selection of any one of the each second room icon is sensed on the second display screen, a sixth display screen in which name candidates for the selected second room icon are arrayed is displayed

10. The method according to claim 9, wherein, in the case where selection of any one of the name candidates included in the sixth display screen is sensed, the selected second room icon is changed to an edited second room icon that includes a changed second name label represented by the selected name candidate, and an edited first room icon that includes an edited first name label corresponding to the changed second name label is displayed on the first display screen.

11. The method according to claim 9 or 10, wherein
the size and shape of each label representing each of the name candidates included in the sixth display screen are the same as the size and shape of each label representing each of the room candidates included in the third display screen, and
the array of the name candidates included in the sixth display screen is the same as the array of the room candidates included in the third display screen.

12. The method according to claim 11, wherein
the third display screen includes a fourth instruction button for adding the selected room candidate as the additional first room icon of the first display screen,
the sixth display screen includes a sixth instruction button for changing, using an selected name candidate on the sixth display screen, the first name label corresponding to one of the each first room icon on the first display screen,
the size and shape of the sixth instruction button on the sixth display screen are the same as the size and shape of the fourth instruction button on the third display screen, and
the location of the sixth instruction button on the sixth display screen is the same as the location of the fourth instruction button on the third display screen.

13. The method according to claim 1 or 2, wherein, in the case where instruction is made to select and delete any one or more of the each second room icon in the second floor plan included in the second display screen, the selected one or more second room icons are deleted from the second floor plan.

14. The method according to any one of claims 1 to 13, wherein each location of the each second floor label and each second room icon included in the second floor plan is the same as each location of the each first floor label and each first room icon included in the first floor plan.

15. The method according to any one of claims 1 to 14, wherein
the size and shape of the each first room icon is all the same in the first floor plan.

16. The method according to claim 15, wherein
the size and shape of the each second room icon is all the same in the second floor plan.

17. The method according to any one of claims 1 to 16, wherein, in the case where the number of first room icons that are added corresponding to any one of the floors in the first floor plan exceeds a maximum number of first room icons that can be arranged in a row corresponding to the floor, the number of rows corresponding to the floor is increased.

18. The method according to any one of claims 1 to 16, wherein, in the case where the number of first room icons that are added corresponding to any one of the floors in the first floor plan exceeds a maximum number of the first room icons that can be arranged in a row corresponding to the floor, the number of rows corresponding to the floor is increased as long as the number of rows included in the first floor plan does not exceed a maximum value of the number of displayable rows after increasing the number of rows corresponding to the floor.

19. The method according to any one of claims 1 to 18, wherein, in the case where an operation is sensed through the operation screen, a control command for controlling the target device corresponding to the operation in response to the operation is output to the network.

20. A method for controlling an information apparatus having a display and being connected to a network, over which one or more target devices are controlled, the method causing a computer of the information apparatus to:
display, on the display, a display screen including a floor plan of a building, the floor plan including each floor label that represents each floor of the building and each room icon that represents each room arrayed on the each floor, an operation screen of a target device that is located in a room corresponding to a selected room icon being displayed on the display screen through selection of one of the each room icon;
increase/reduce the number of room icons on the each floor represented by the each floor label, to edit room icons corresponding to the each floor included in the floor plan; and
display the edited room icons in the floor plan.

21. A method for controlling an information apparatus having a display and being connected to a network, over which one or more target devices are controlled, the method causing a computer of the information apparatus to:
display, on the display, a first display screen including a first floor plan of a building, the first floor plan including each first floor label that represents each floor of the building and each first room icon that represents each room arrayed on the each floor, with each of the icons corresponding to each floor, an operation screen of a target device that is located in a room corresponding to a selected first room icon being displayed on the first display screen through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing the each floor of the building, each second room icon representing the each room on the each floor, and each first instruction button for adding another second room icon to the each floor represented by the each second floor label;
when selection of one of the each first instruction button is sensed correspondingly to one of the each floor represented by the each second floor label on the second display screen, add the other second room icon to the one floor corresponding to the selected first instruction button, and display the first floor plan that includes an added first room icon corresponding to the added second room icon.

22. A method for controlling an information apparatus having a display and being connected to a network, over which one or more target devices are controlled, the method causing a computer of the information apparatus to:
display, on the display, a first display screen including a floor plan of a building, the floor plan including each floor label that represents each floor of the building and each room icon that represents each room on the each floor, an operation screen of a target device that is located in a room corresponding to a selected room icon being displayed on the first display screen through selection of one of the each room icon, the first display screen having each instruction button for adding the another room icon to each floor represented by the each floor label;
when selection of one of the each instruction button is sensed correspondingly to one of the each floor represented by the each floor label in the first display screen, display, on the display, a second display screen in which that room candidates are arrayed to be added to the one floor corresponding to the selected instruction button; and
display, on the floor plain, a selected room candidate as an additional room icon in the case that any one of the room candidates is selected on the second display screen.

23. A program executed by an information apparatus having a display and being connected to a network, over which one or more target devices are controlled, the program causing a computer of the information apparatus to:
display, on the display, a first display screen including a first floor plan of a building, the first floor plan including a first floor label that represents each floor of the building and each first room icon that represents each room on the each floor, an operation screen of a target device that is located in a room corresponding to a selected first room icon being displayed on the first display screen through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing each floor of the building, each second room icon representing the each room on the each floor, and each first instruction button for adding another second room icons to the each floor represented by the each second floor label;
when selection of one of the each first instruction button is sensed correspondingly to one of the each floor represented by the each second floor label on the second display screen, display, on the display, a third display screen in which room candidates are arrayed to be added to the one floor corresponding to the selected first instruction button; and
display, on the first floor plan, a selected room candidate as an additional first room icon in the case that any one of the room candidates is selected on the third display screen.

24. A program executed by an information apparatus having a display and being connected to a network, over which one or more target devices are controlled, the program causing a computer of the information apparatus to:
display, on the display, a display screen including a floor plan of a building, the floor plan including each floor label that represents each floor of the building and each room icon that represents each room on the each floor, an operation screen of a target device that is located in a room corresponding to a selected room icon being displayed on the floor plan through selection of one of the each room icon;
increase/reduce the number of room icons on the each floor represented by the each floor label, to edit room icons corresponding to the each floor included in the floor plan; and
display the edited room icons in the floor plan.

25. A program executed by an information apparatus having a display and being connected to a network, over which one or more target devices are controlled, the program causing a computer of the information apparatus to:
display, on the display, a first display screen including a first floor plan of a building, the first floor plan including each first floor label that represents each floor of the building and each first room icon that represents each room arrayed on the each floor, an operation screen of a target device that is located in a room corresponding to a selected first room icon being displayed on the first screen display through selection of one of the each first room icon;
display, on the display, a second display screen for setting the each first room icon to be included in the first floor plan when selection of the second display screen is sensed, the second display screen showing a second floor plan corresponding to the first floor plan, and the second floor plan including each second floor label representing the each floor of the building, each second room icon representing the each room on the each floor, and each first instruction button for adding another second room icon to the each floor represented by the each second floor label;
when selection of one of the first instruction button is sensed correspondingly to one of the each floor represented by the each second floor label on the second display screen, add the other second room icon to the one floor corresponding to the selected first instruction button, and display the first floor plan that includes an added first room icons corresponding to the added second room icon.

26. A program executed by an information apparatus having a display and being connected to a network, over which one or more target devices are controlled, the program causing a computer of the information apparatus to:
display, on the display, a first display screen including a floor plan of a building, the floor plan including each floor label that represents each floor of the building and each room icon that represents each room on the each floor, an operation screen of a target device that is located in a room corresponding to a selected room icon being displayed on the first display screen through selection of one of the each room icon, the first display screen having each instruction button for adding another room icon to each floor represented by the each floor label;
when selection of one of the each instruction button is sensed correspondingly to one of the floors represented by the floor labels in the first display screen, display, on the display, a second display screen in which room candidates are arrayed to be added to the one floor corresponding to the selected instruction button; and
display a selected room candidate as an additional room icon in the case that any one of the room candidates is selected on the second display screen.
